# EUROPEAN PATENT APPLICATION

(11) **EP 4 592 838 A1**
(43) Date of publication of application: **30.07.2025**
(21) Application number: 24818298.2
(22) Date of filing: 06.03.2024
(51) Int. Cl.: G06F 9/451

(54) **NOTE PROCESSING METHOD, AND DEVICE AND STORAGE MEDIUM**

(30) Priority: 08.06.2023 CN 202310675832
(71) Applicant: Honor Device Co., Ltd., Shenzhen, Guangdong 518040 (CN)
(72) Inventor: QUAN, Ruilin, Guangdong 518040 (CN); WANG, Long, Guangdong 518040 (CN)
(74) Representative: Goddar, Heinz J.
(86) International application number: PCT/CN2024/080281
(87) International publication number: WO 2024/250761

(57) **Abstract**

This application provides a note processing method, a device, and a storage medium. In this method, when voice information exists in a note, a display speaker function associated with a voice-to-text function is introduced, so that when the voice-to-text function is enabled, speaker information corresponding to each piece of text information obtained through conversion can be displayed. In this way, a user can quickly learn a speaker of each piece of text information in a scenario in which a plurality of persons give speeches.

## Description

This application claims priority to Chinese Patent Application No. 202310675832.2, filed with the China National Intellectual Property Administration on June 8, 2023 and entitled "NOTE PROCESSING METHOD, DEVICE, AND STORAGE MEDIUM", which is incorporated herein by reference in its entirety.

### TECHNICAL FIELD

This application relates to the field of terminal technologies, and in particular, to a note processing method, a device, and a storage medium.

### BACKGROUND

With improvement of functions of electronic devices, the electronic devices bring great convenience to people's daily life and work. For example, an application having a note function (hereinafter referred to as a note application) may help a user record information anytime and anywhere without relying on a conventional paper recording manner any more, thereby greatly improving information recording efficiency.

However, at a current stage, a note application provides a manner of recording information, which is generally text information and picture information. Even if the note application has a function of recording voice information, the note application can only simply convert a voice into a text for recorded voice information. As a result, an applicable scenario is undiversified and user experience is poor. Therefore, a more efficient note processing manner with more improved functions needs to be provided urgently.

### SUMMARY

To resolve the foregoing technical problems, this application provides a note processing method, a device, and a storage medium, so as to implement more processing on recorded voice information, thereby meeting different scenario requirements and improving user experience.

According to a first aspect, this application provides a note processing method. The method is applied to an electronic device, and includes: displaying a first interface of a first note in a note application, where the first interface includes a recording card, and the recording card includes a first area, a second area, and a third area; at a first moment, the first area includes a start recording control, a start playback control, and a first playback progress bar, the second area includes a convert-to-text control and a display speaker control, and the third area is empty; displaying first text information in the third area at a second moment in response to an operation performed by the user on the convert-to-text control, where the first text information corresponds to first voice information recorded in the first playback progress bar, and after the first text information is displayed in the third area, the display speaker control is capable of interacting with the user; displaying a filter speaker capsule, a first speaker capsule, a second speaker capsule, and the first text information in the third area at a third moment in response to an operation performed by the user on the display speaker control, where the first speaker capsule corresponds to first text content in the first text information, the second speaker capsule corresponds to second text content in the first text information, the first speaker capsule includes a first speaker name and a first speaking time, and the second speaker capsule includes a second speaker name and a second speaking time; and displaying the filter speaker capsule, the first speaker capsule, and the first text content in the third area at a fourth moment after detecting that the user selects the first speaker from the first speaker and the second speaker by using the filter speaker capsule, where the fourth moment is later than the third moment, the third moment is later than the second moment, the second moment is later than the first moment, and the second speaker time is later than the first speaker time.

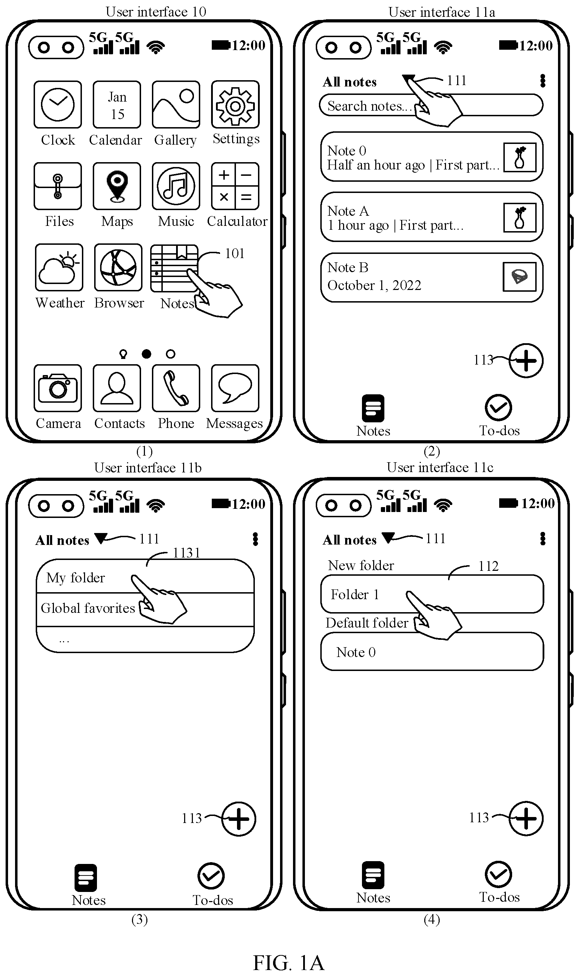

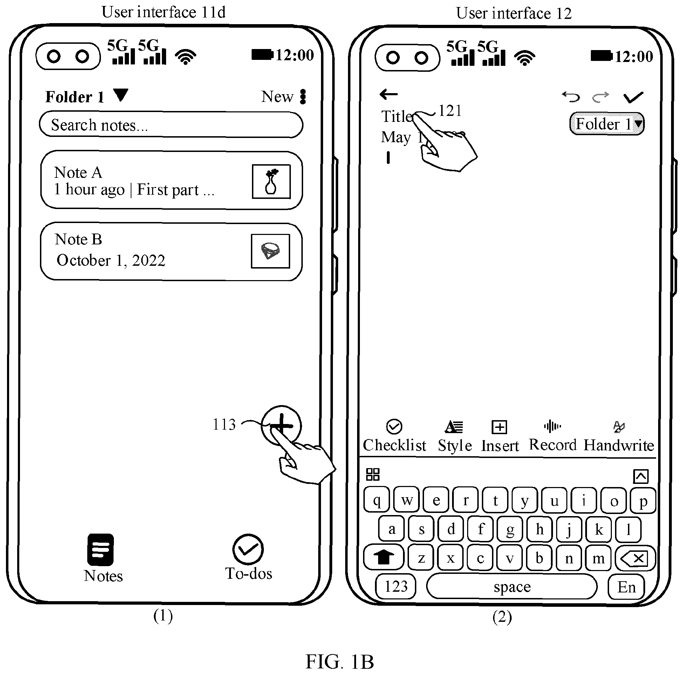

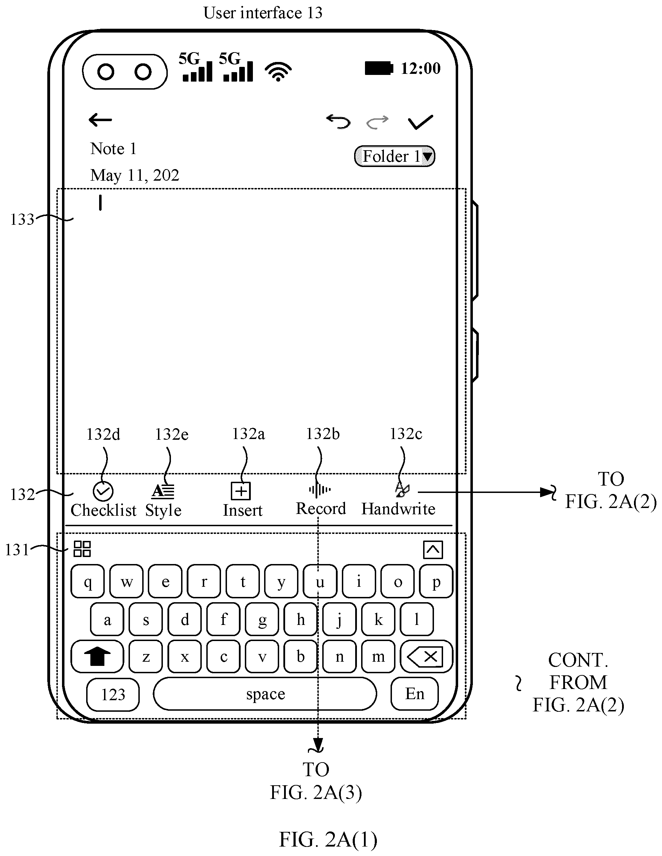

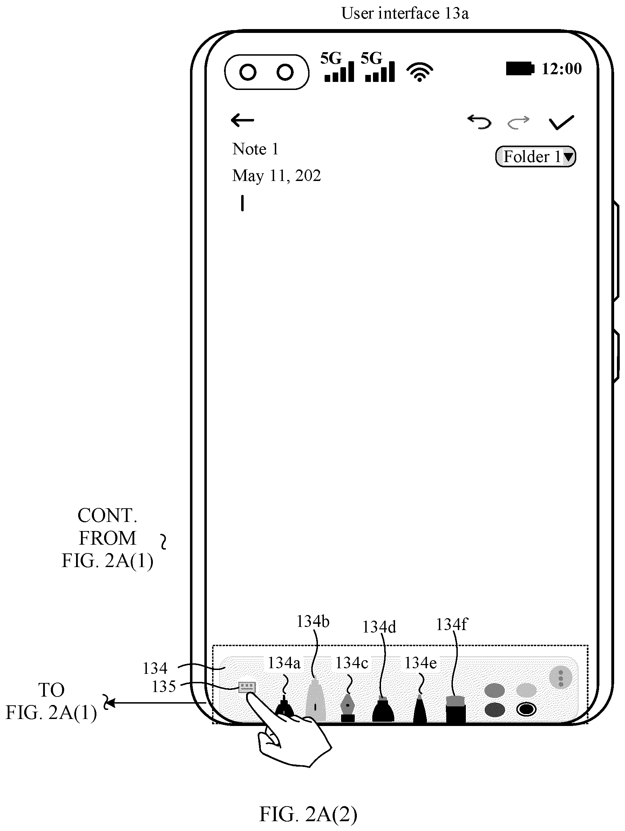

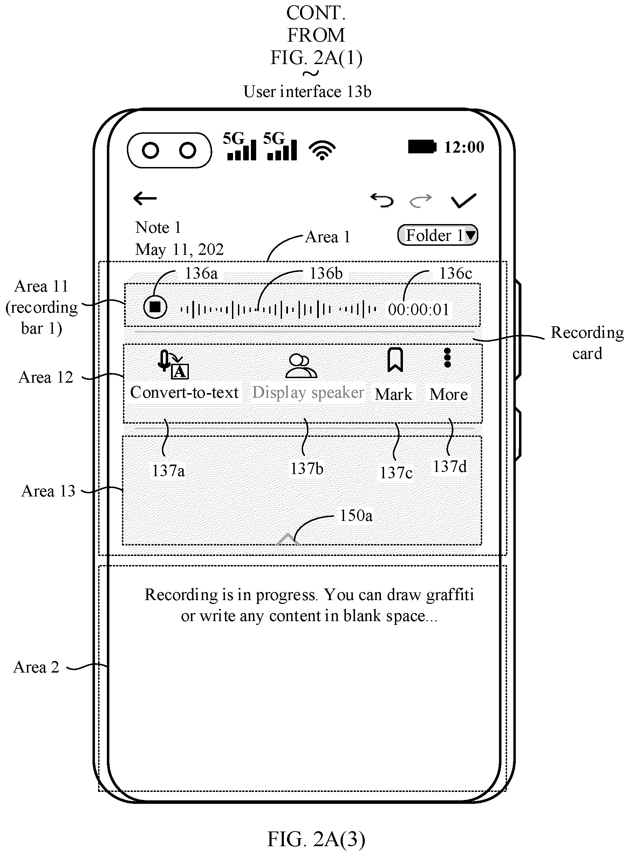

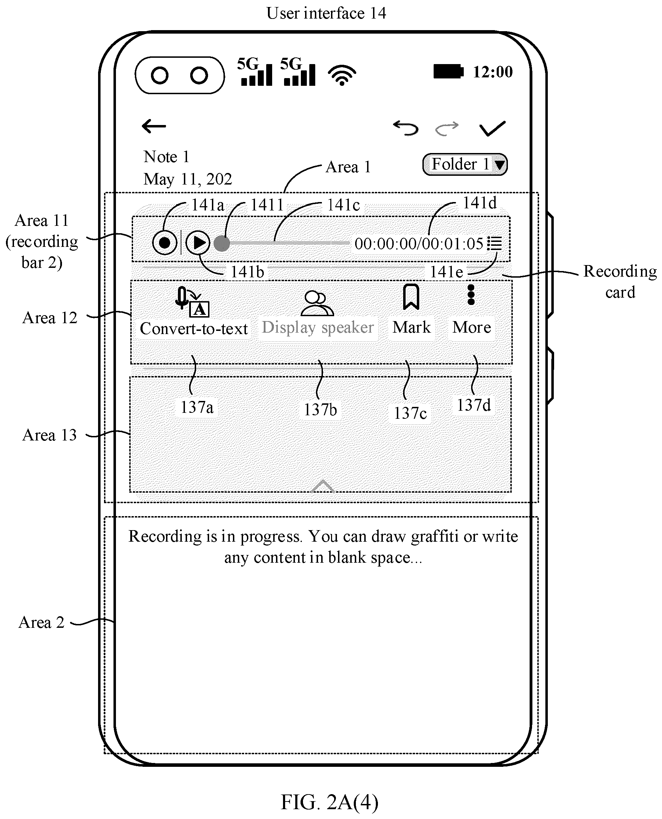

The first note is, for example, a note 1 created in a manner corresponding to FIG. 1A, FIG. 1B, and FIG. 2A(1) to FIG. 2A(4) in the following embodiments.

The first area is, for example, an area 11 mentioned in the following embodiments. The second area is, for example, an area 12 mentioned in the following embodiments. The third area is, for example, an area 13 mentioned in the following embodiments.

The convert-to-text control is, for example, a convert-to-text control 137a involved in the following embodiments. The display speaker control is, for example, a display speaker control 137b involved in the following embodiments. The start recording control is, for example, a start recording control 141a involved in the following embodiments. The start playback control is, for example, a start playback control 141b involved in the following embodiments. The first playback progress bar is, for example, a playback progress bar 141c involved in the following embodiments.

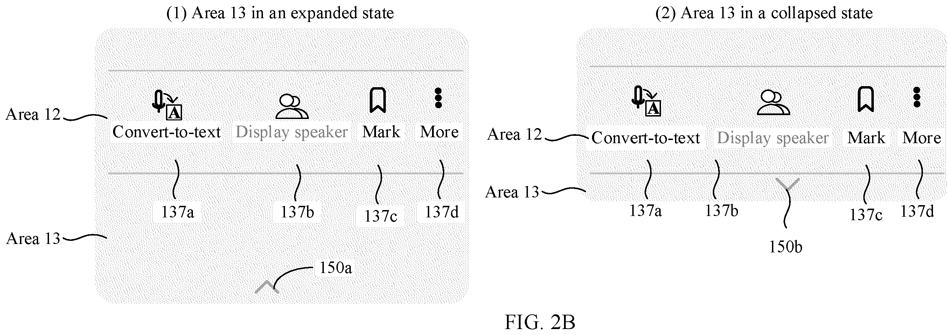

The display speaker control that is incapable of interacting with the user at the first moment is, for example, a display speaker control 137b whose state is a third state mentioned in the following embodiments. The display speaker control that is incapable of interacting with the user is of a style, for example, a display speaker control 137b shown in (1) in FIG. 2B, that is, a corresponding text may be gray in color.

The first moment may be a moment at which recording is stopped, that is, a moment at which a stop recording control is tapped, or a moment at which the user taps a note for which voice information has been recorded. Based on this, the foregoing first interface is, for example, a user interface 14 mentioned in the following embodiments.

An operation of converting a voice into a text and an operation of displaying a speaker may be implemented in a full scenario (during recording, after recording ends, and during playback of recording). Therefore, the first interface may be interfaces corresponding to different scenarios. For example, during the recording, the first interface may be a user interface 13b mentioned in the following content. For another example, after recording ends, the first interface may be a user interface 14 mentioned in the following content. For another example, during playback of recording, the first interface may be a user interface 15 mentioned in the following content.

In this way, when voice information exists in a note, a display speaker function associated with a voice-to-text function is introduced, so that when the voice-to-text function is enabled, speaker information corresponding to each piece of text information obtained through conversion can be displayed. In this way, a user can quickly learn a speaker of each piece of text information in a scenario in which a plurality of persons give speeches.

According to the first aspect, the displaying the filter speaker capsule, the first speaker capsule, and the first text content in the third area at a fourth moment after detecting that the user selects the first speaker from the first speaker and the second speaker by using the filter speaker capsule includes: displaying a filter speaker window in the first interface at the fourth moment in response to an operation performed by the user on the filter speaker capsule, where the filter speaker window includes the first speaker and the second speaker; and closing the filter speaker window in response to a selection operation performed by the user on the first speaker in the filter speaker window, and displaying the filter speaker capsule, the first speaker capsule, and the first text content in the third area.

The filter speaker window is, for example, a filter speaker window 137g mentioned in the following embodiments. For example, in some possible cases, all selectable speakers are displayed in the filter speaker window. In this aspect, that the selectable speakers are the first speaker and the second speaker is used as an example.

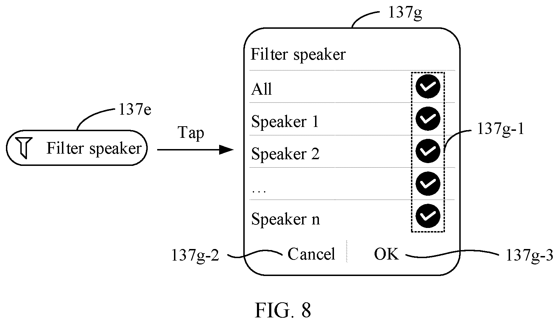

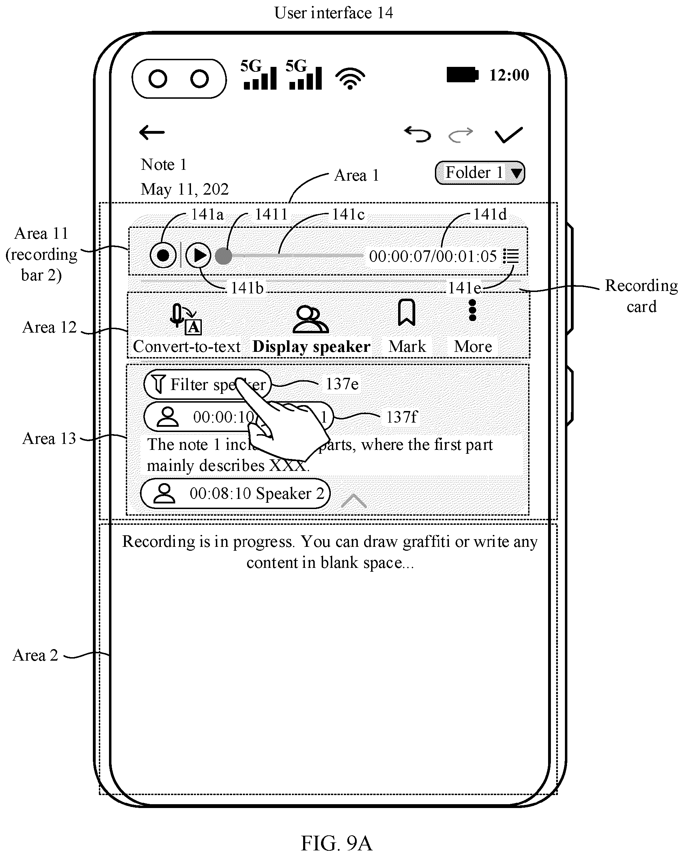

For related content of filtering a speaker, refer to the following descriptions of FIG. 8 and FIG. 9A to FIG. 9D. Details are not described herein.

According to the first aspect or any one of the foregoing implementations of the first aspect, before the fourth moment, the filter speaker capsule displayed in the third area is of a first style, and the filter speaker capsule of the first style is configured to indicate that all selectable speakers are selected; and after the fourth moment, the filter speaker capsule displayed in the third area is of a second style, and the filter speaker capsule of the second style is configured to indicate that some of the selectable speakers are selected.

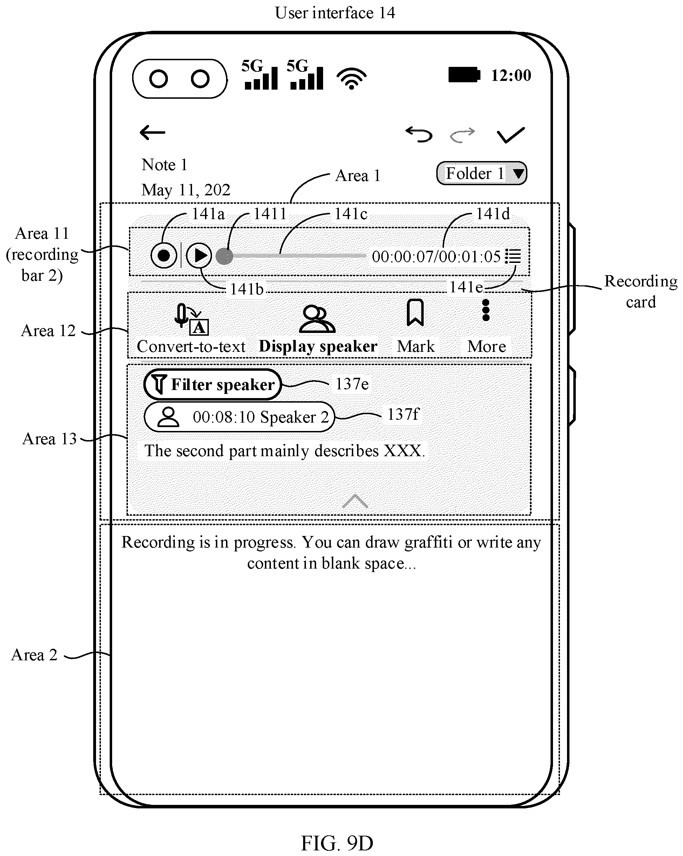

The filter speaker capsule of the first style is, for example, a filter speaker capsule 137e in a state A mentioned in the following embodiments, for example, is of a style shown in FIG. 9A. The filter speaker capsule of the second style is, for example, a filter speaker capsule 137e in a state B mentioned in the following embodiments, for example, is of a style shown in FIG. 9D.

For related content of filtering a speaker, refer to the following descriptions of FIG. 8 and FIG. 9A to FIG. 9D. Details are not described herein.

According to the first aspect or any one of the foregoing implementations of the first aspect, the displaying a filter speaker capsule, a first speaker capsule, a second speaker capsule, and the first text information in the third area includes: displaying the filter speaker capsule at a top of the third area; displaying the first speaker capsule at a position below the display speaker capsule; displaying the first text content at a position below the first speaker capsule; displaying the second speaker capsule at a position below the first text content; and displaying the second text content at a position below the second speaker capsule.

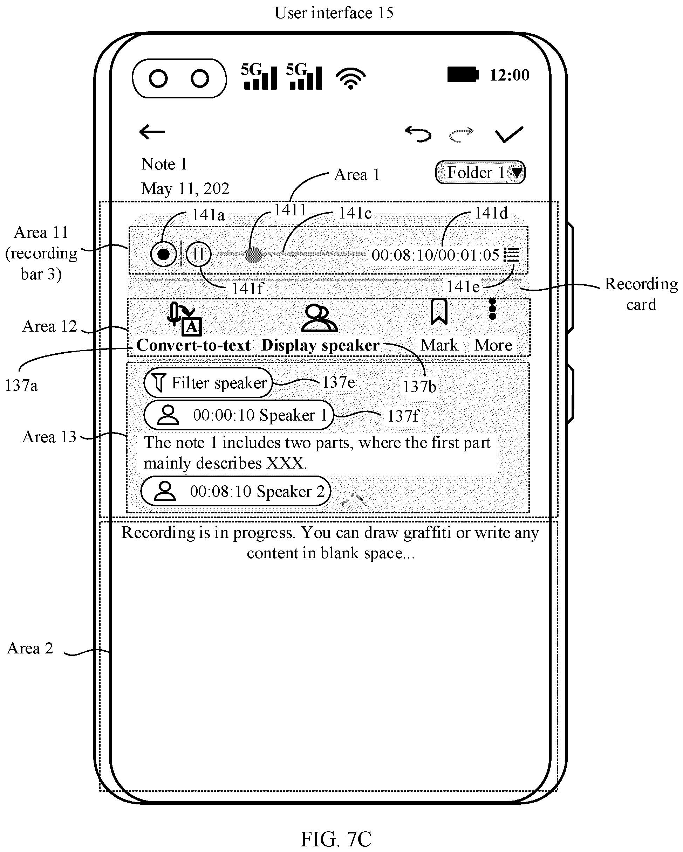

Positional relationships among the filter speaker capsule, the speaker capsule corresponding to each speaker, and the text information corresponding to each speaker in the third area may be, for example, a filter speaker capsule, a speaker capsule corresponding to a speaker 1, text content "the note 1 includes two parts, where the first part mainly describes XXX." corresponding to the speaker 1, and a speaker capsule corresponding to a speaker 2 in an area 13 shown in FIG. 7C. Details are not described herein.

According to the first aspect or any one of the foregoing implementations of the first aspect, the method further includes: displaying the filter speaker capsule at the top of the third area in response to an operation of the user for sliding from a bottom of the third area to the top of the third area at a fifth moment, displaying the first text content at the position below the display speaker capsule, displaying the second speaker capsule at the position below the first text content, and displaying the second text content at the position below the second speaker capsule; and displaying the filter speaker capsule at the top of the third area in response to an operation of the user for sliding from the bottom of the third area to the top of the third area at a sixth moment, displaying the second speaker capsule at the position below the display speaker capsule, and displaying the second text content at the position below the second speaker capsule, where the sixth moment is later than the fifth moment.

In other words, the filter speaker capsule is fixedly displayed at the top of the third area, and does not change with a change of content displayed in the third area. In this way, fixing the filter speaker capsule, that is, arranging the filter speaker capsule to have a sticky header display effect (a pinning function) can ensure that the user operates the filter speaker capsule at any time to perform a speaker filtering operation.

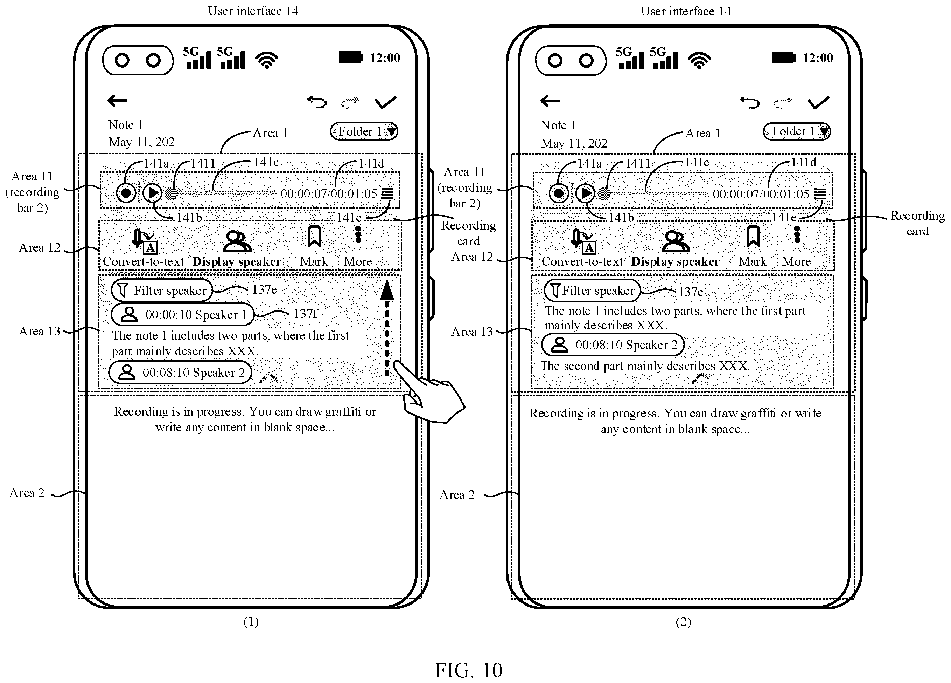

For related content of sticky header arrangement of the filter speaker capsule, refer to the following description of FIG. 10. Details are not described herein.

According to the first aspect or any one of the foregoing implementations of the first aspect, at the first moment, the convert-to-text control displayed in the second area is in a first state, the display speaker control is in a third state, the first state indicates that a function corresponding to the control is not enabled, the third state indicates that the control is incapable of interacting with the user, the convert-to-text control in the first state indicates that a voice-to-text function is not enabled, and the display speaker control in the third state indicates that the display speaker control is incapable of interacting with the user; at the second moment, in response to the operation performed by the user on the convert-to-text control, the electronic device updates a state of the convert-to-text control from the first state to a second state, and updates a state of the display speaker control from the third state to the first state, where the second state indicates that the function corresponding to the control is enabled, the convert-to-text control in the second state indicates that the voice-to-text function is enabled, and the display speaker control in the first state indicates that a display speaker function is not enabled; and when the voice-to-text function is enabled, the electronic device is capable of performing a convert-to-text operation on the first voice information; and at the third moment, in response to the operation performed by the user on the display speaker control, the electronic device updates a state of the display speaker control from the first state to the second state, where the display speaker control in the second state indicates that a display speaker function is enabled.

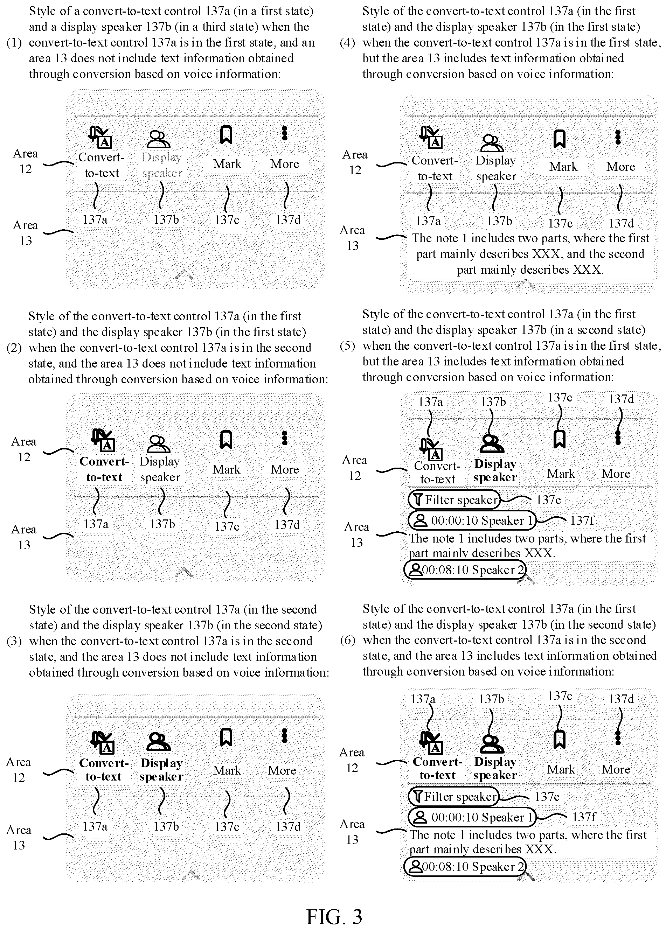

The convert-to-text control in the first state is, for example, of a style of the convert-to-text control 137a shown in (1) in FIG. 3. The convert-to-text control in the second state is, for example, of a style of the convert-to-text control 137a shown in (2) in FIG. 3.

The display speaker control in the third state is, for example, of a style of the display speaker control 137b shown in (1) in FIG. 3. The display speaker control in the first state is, for example, of a style of the display speaker control 137b shown in (2) in FIG. 3. The display speaker control in the second state is, for example, of a style of the display speaker control 137b shown in (3) in FIG. 3.

For switching and association of states of the convert-to-text control and the display speaker control, refer to the description of FIG. 3 in the following content. Details are not described herein.

According to the first aspect or any one of the foregoing implementations of the first aspect, when the convert-to-text control is in the second state and the display speaker control is in the second state, the method further includes: at a seventh moment, in response to an operation performed by the user on the convert-to-text control in the second state, updating the state of the convert-to-text control from the second state to the first state; and still displaying the filter speaker capsule, the first speaker, the first text content, the second speaker, and the second text content in the third area; and at an eighth moment, in response to an operation performed by the user on the start recording control, replacing the start recording control and the start playback control with a stop recording control, recording second voice information, and replacing the first playback progress bar with a recording status bar corresponding to the second voice information; and still displaying the filter speaker capsule, the first speaker, the first text content, the second speaker, and the second text content in the third area, where the eighth moment is later than the seventh moment.

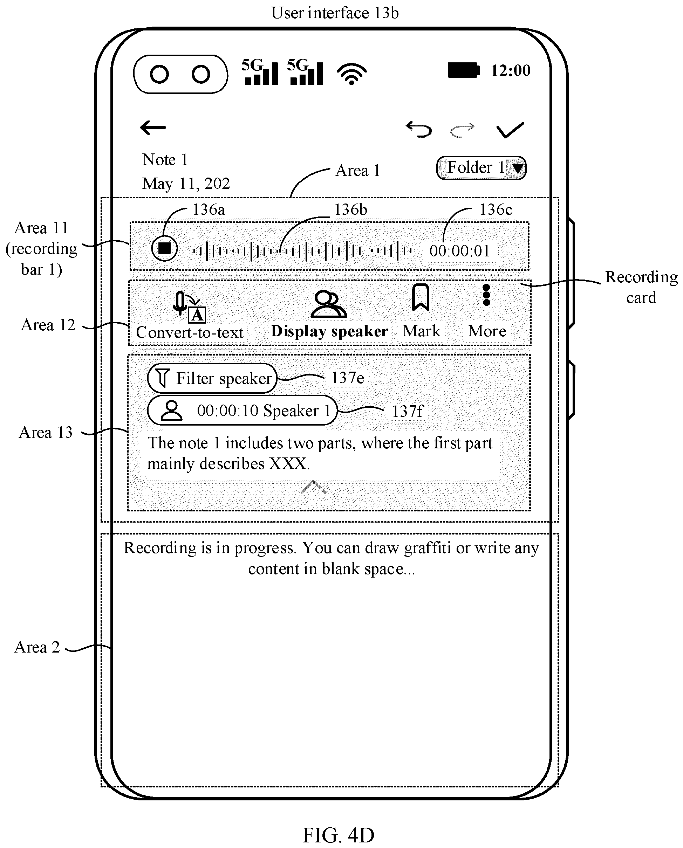

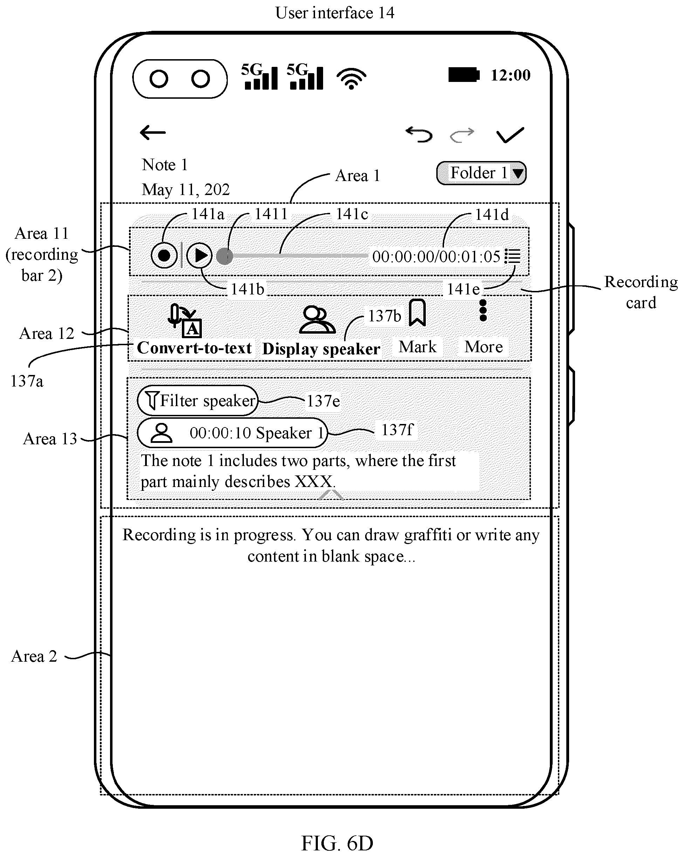

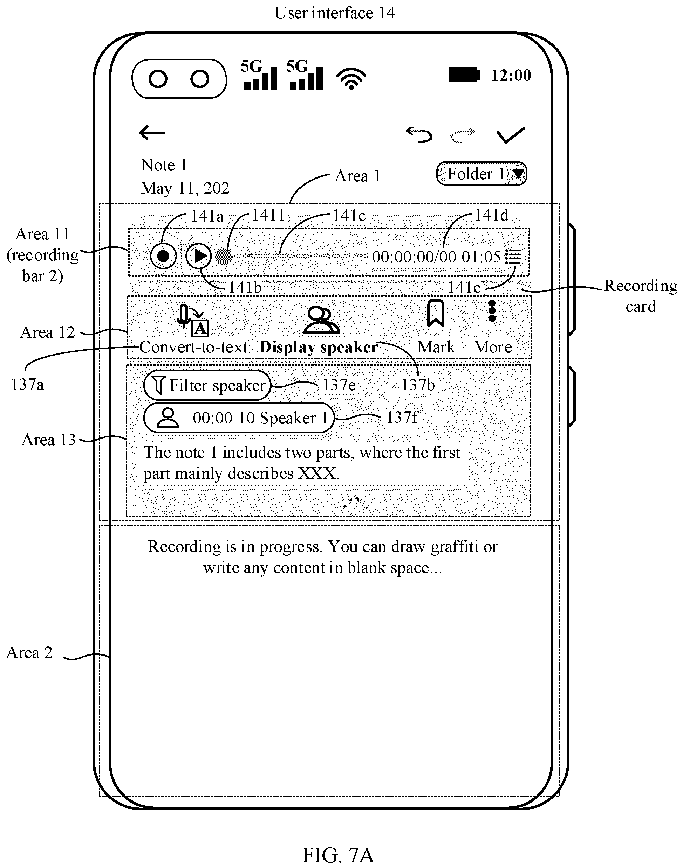

For implementation of this aspect, for example, in the following scenario in FIG. 6D, the user taps a convert-to-text control 137a, so that a user interface 14 switches from a style in FIG. 6D to a style in FIG. 7A. Then, the user taps a start recording control 141a. In this case, a corresponding user interface is, for example, a user interface 13b shown in FIG. 4D. Specific implementation details are not described herein.

According to the first aspect, or any one of the foregoing implementations of the first aspect, after the still displaying the filter speaker capsule, the first speaker, the first text content, the second speaker, and the second text content in the third area, the method further includes: at a ninth moment, in response to an operation on the stop recording control, replacing the stop recording control with the start recording control, the start playback control, and a second playback progress bar, where the second area includes the convert-to-text control in the first state and the display speaker control in the second state, and the third area displays the filter speaker capsule, the first speaker, the first text content, the second speaker, and the second text content; at a tenth moment, in response to an operation performed by the user on the start playback control, replacing the start playback control with a pause playback control, and playing the second voice information recorded in the second playback progress bar; and still displaying the filter speaker capsule, the first speaker, the first text content, the second speaker, and the second text content in the third area; and at an eleventh moment, in response to an operation performed by the user on the convert-to-text control in the first state, updating the state of the convert-to-text control from the first state to the second state, and displaying the filter speaker capsule, the first speaker capsule, the first text content, the second speaker, the second text content, a third speaker capsule, and second text information in the third area, where the second text information corresponds to the second voice information recorded in the recording status bar, the third speaker capsule corresponds to the second text information, and the third speaker capsule includes a third speaker name and a third speaking time; and the eleventh moment is later than the tenth moment, the tenth moment is later than the ninth moment, and the ninth moment is later than the eighth moment.

For implementation of this aspect, for example, in the following scenario in FIG. 6D, the user taps a convert-to-text control 137a, so that a user interface 14 switches from a style in FIG. 6D to a style in FIG. 7A. Then, the user taps a start recording control 141a. In this case, a corresponding user interface is, for example, a user interface 13b shown in FIG. 4D. Specific implementation details are not described herein.

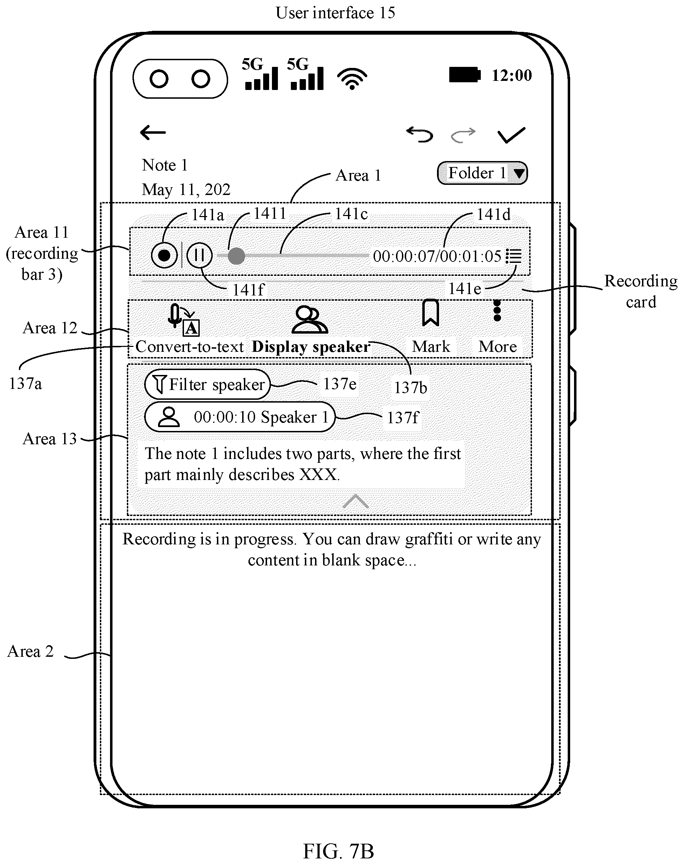

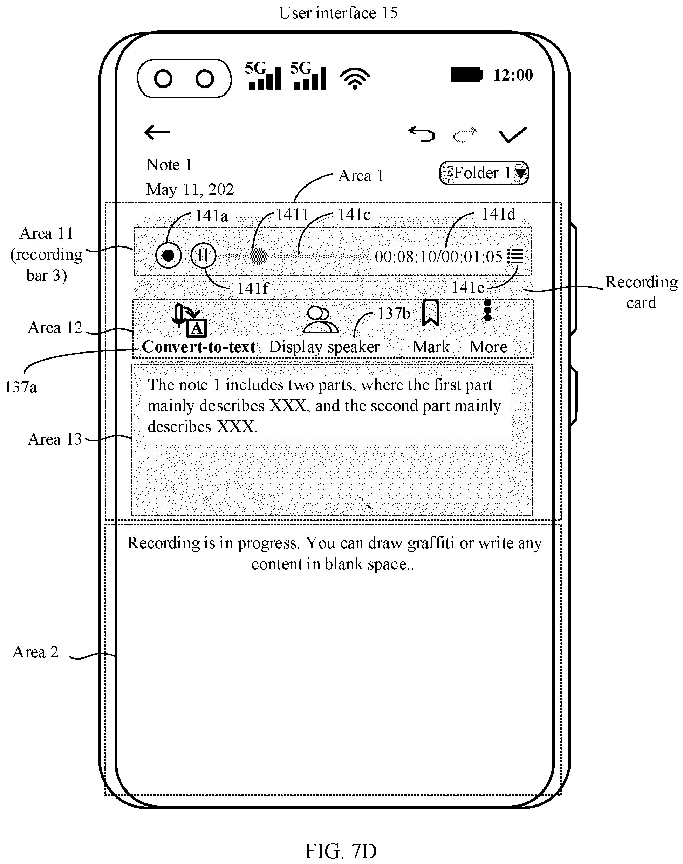

For implementation of this aspect, refer to the following description of FIG. 7. Details are not described herein.

According to the first aspect or any one of the foregoing implementations of the first aspect, when the convert-to-text control is in the second state and the display speaker control is in the second state, the method further includes: at a ninth moment, in response to an operation performed by the user on the start recording control, replacing the start recording control and the start playback control with a stop recording control, recording second voice information, and replacing the first playback progress bar with a recording status bar corresponding to the second voice information; and displaying the filter speaker capsule, the first speaker capsule, the first text content, the second speaker, the second text content, a third speaker capsule, and second text information in the third area, where the second text information corresponds to the second voice information recorded in the recording status bar, the third speaker capsule corresponds to the second text information, and the third speaker capsule includes a third speaker name and a third speaking time.

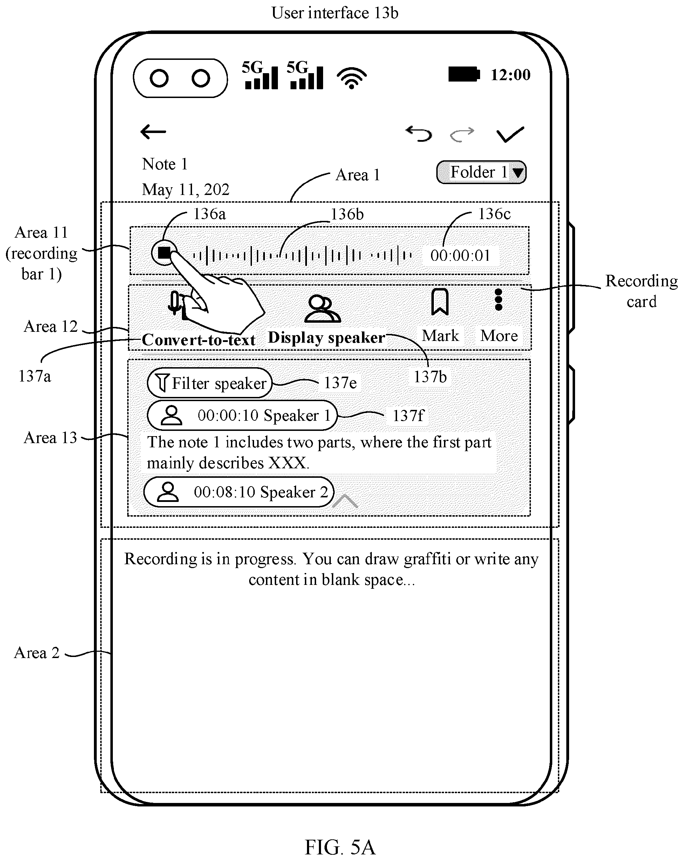

For implementation of this aspect, which is similar to that in a scenario shown in FIG. 5A to FIG. 5C, refer to the following descriptions of FIG. 5A to FIG. 5C. Details are not described herein.

According to the first aspect or any one of the foregoing implementations of the first aspect, after displaying the filter speaker capsule, the first speaker capsule, and the first text information in the third area, the method further includes: updating the state of the display speaker control from the second state to the first state in response to an operation performed by the user on the display speaker control in the second state; and displaying the first text content and not displaying the filter speaker capsule or the first speaker capsule in the third area.

For implementation of this aspect, refer to the following descriptions of FIG. 3 and FIG. 5A to FIG. 5C. Details are not described herein.

According to the first aspect or any one of the foregoing implementations of the first aspect, after displaying any speaker capsule in the third area, the method further includes: in a process of displaying the stop recording control in the first area, not responding to an operation performed by the user on any speaker capsule displayed in the third area; in a process of displaying the start recording control and the start playback control in the first area, in response to an operation performed by the user on any speaker capsule in the third area, displaying a renaming window corresponding to the operated speaker capsule in the first interface; and in a process of displaying the start recording control and the pause playback control in the first area, in response to an operation performed by the user on any speaker capsule in the third area, moving a recording playback progress control in the first playback progress bar to a target position, where a time corresponding to the target position is a speaking time displayed in the operated speaker capsule.

The renaming window is, for example, a renaming window 137h mentioned in the following embodiments.

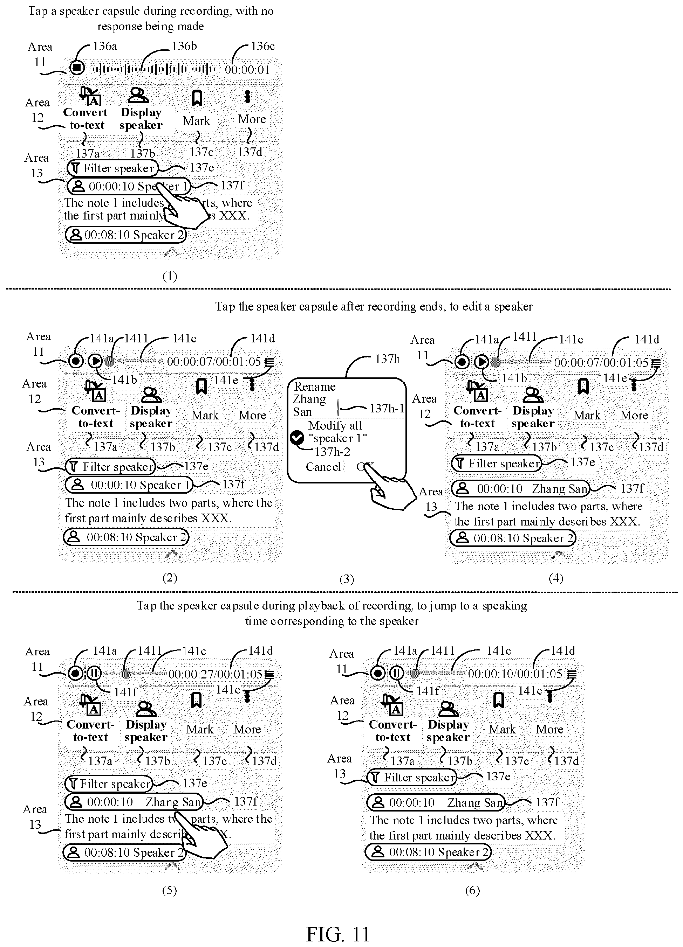

For related content involved in operating the speaker capsule during recording (in a process of displaying the stop recording control in the first area), after recording ends (in a process of displaying the start recording control and the start playback control in the first area), and during playback of recording (in a process of displaying the start recording control and the pause playback control in the first area), refer to the following description of FIG. 11. Details are not described herein.

According to the first aspect or any one of the foregoing implementations of the first aspect, after the displaying a renaming window corresponding to the operated speaker capsule in the first interface, the method further includes: in response to a rename operation performed by the user in the renaming window, closing the renaming window, and updating a speaker name displayed in the speaker capsule to a name named based on the renaming window.

For related content involved in renaming a speaker name, refer to the following descriptions of (2) in FIG. 11 to (4) in FIG. 11. Details are not described herein.

According to the first aspect or any one of the foregoing implementations of the first aspect, the first voice information belongs to a first recording segment, the first recording segment belongs to a first voice file, and the first voice file further includes a second recording segment; and the updating a speaker name displayed in the speaker capsule to a name named based on the renaming window includes: updating, to the name named based on the renaming window, each of speaker names displayed in all speaker capsules corresponding to a same speaker in text information that is obtained through conversion based on the first voice segment and that is displayed in the third area.

According to the first aspect or any one of the foregoing implementations of the first aspect, the first voice information belongs to a first recording segment, the first recording segment belongs to a first voice file, and the first voice file further includes a second recording segment; and the updating a speaker name displayed in the speaker capsule to a name named based on the renaming window includes: updating, to the name named based on the renaming window, each of speaker names displayed in all speaker capsules corresponding to a same speaker in the first recording segment and the second recording segment that are displayed in the third area.

According to the first aspect or any one of the foregoing implementations of the first aspect, the second area further includes a mark control, and the mark control is configured to add a label to recorded voice information.

The mark control is, for example, a mark control 137c mentioned in the following embodiments.

According to the first aspect or any one of the foregoing implementations of the first aspect, the method further includes: in a process of displaying the stop recording control in the first area, in response to an operation performed by the user on the mark control, adding a label to a recording status bar corresponding to the recorded voice information, and displaying the added label at a corresponding time position in the recording status bar displayed in the first area.

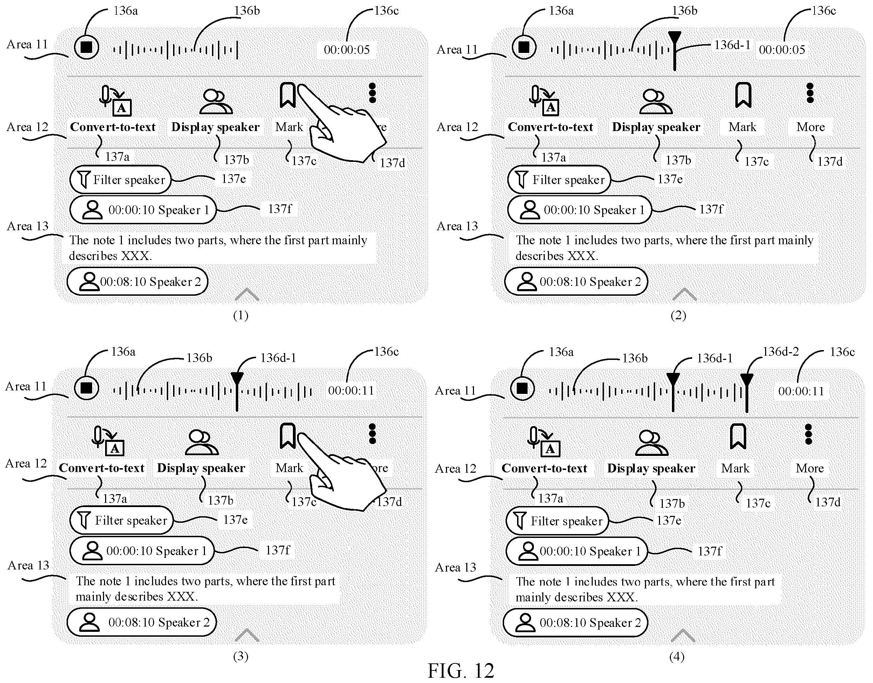

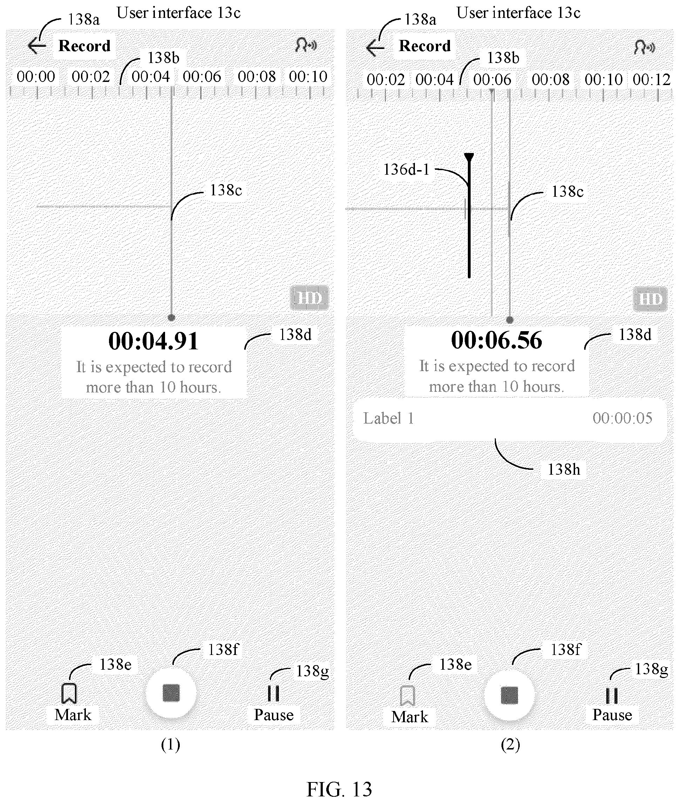

For related content of adding a label in a process of recording voice information, refer to the following descriptions of FIG. 12 and FIG. 13. Details are not described herein.

According to the first aspect or any one of the foregoing implementations of the first aspect, the method further includes: in a process of displaying the start recording control and the start playback control in the first area, in response to a drag operation performed by the user on a recording playback progress control in the first playback progress bar, moving the recording playback progress control to a first position corresponding to a first playback time point; in response to an operation performed by the user on the mark control, adding a first label to the first position; in response to the drag operation performed by the user on the recording playback progress control, moving the recording playback progress control to a second position corresponding to a second playback time point, where a time difference between the first playback time point and the second playback time point is not less than a specified time threshold; and in response to the operation performed by the user on the mark control, adding a second label to the second position.

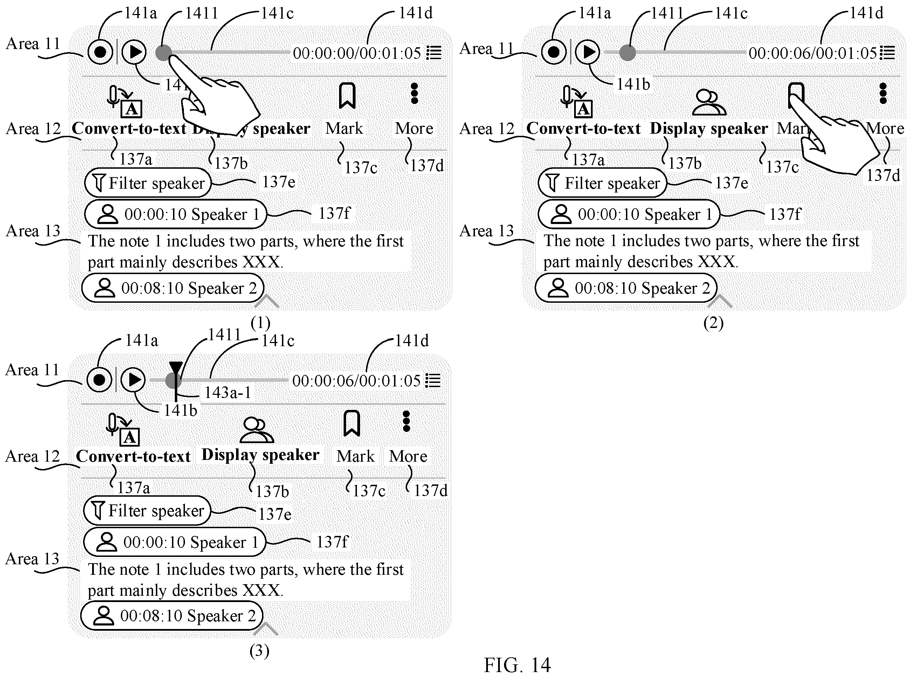

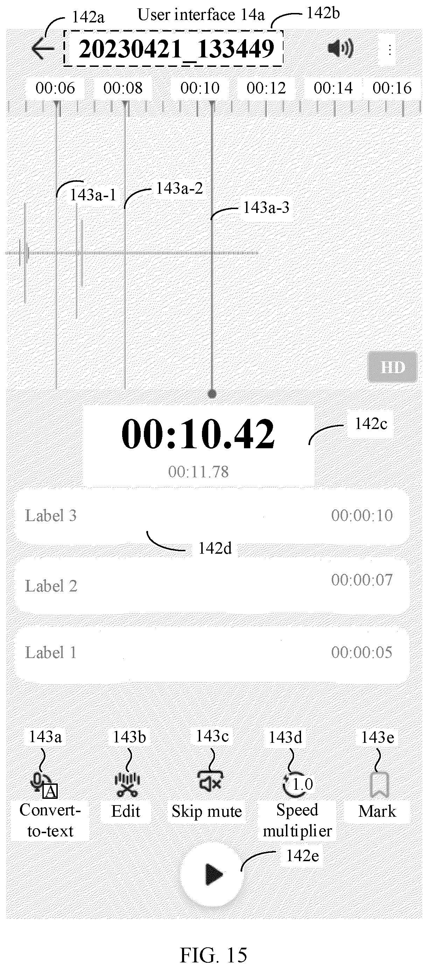

For related content of adding a label after recording of voice information ends, refer to the following descriptions of FIG. 14 and FIG. 15. Details are not described herein.

The time threshold is, for example, 5 ms mentioned in the following embodiments.

According to the first aspect or any one of the foregoing implementations of the first aspect, the method further includes: in a process of displaying the start recording control and the pause playback control in the first area, in response to an operation performed by the user on the mark control, adding a label to a playback time currently corresponding to the first playback progress bar.

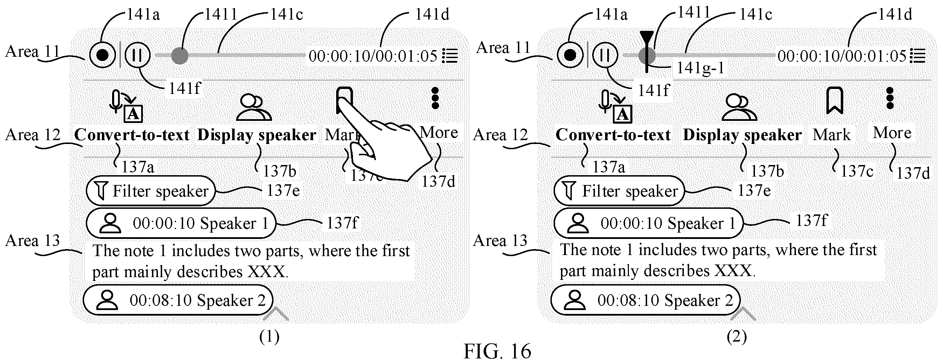

For related content of adding a label in a process of playing voice information, refer to the following description of FIG. 16. Details are not described herein.

According to the first aspect or any one of the foregoing implementations of the first aspect, the method further includes: in a process of displaying the start recording control and the pause playback control in the first area, in response to a drag operation performed by the user on a recording playback progress control in the first playback progress bar, moving the recording playback progress control to a third position corresponding to a third playback time point; in response to the operation performed by the user on the mark control, adding a third label to the third position; and continuing to play the voice information from the third position.

For related content of adding a label in a process of playing voice information, refer to the following description of FIG. 16. Details are not described herein.

According to the first aspect or any one of the foregoing implementations of the first aspect, in a process of displaying the start recording control and the start playback control in the first area, or in a process of displaying the start recording control and the pause playback control in the first area, the first area further displays a voice menu control; and the method further includes: in response to an operation performed by the user on the voice menu control, displaying a voice menu window in the first interface, where the voice menu window includes a recording option and a label option; in response to an operation performed by the user on the label option, displaying, in the voice menu window, all recording bands included in the first note, and displaying, under each recording segment, all labels included in the recording segment; and in response to a deletion operation performed by the user on any label displayed in the voice menu window, deleting the label.

The voice menu control is, for example, a voice menu control 141e mentioned in the following embodiments.

The voice menu window is, for example, a voice menu window 139c mentioned in the following embodiments.

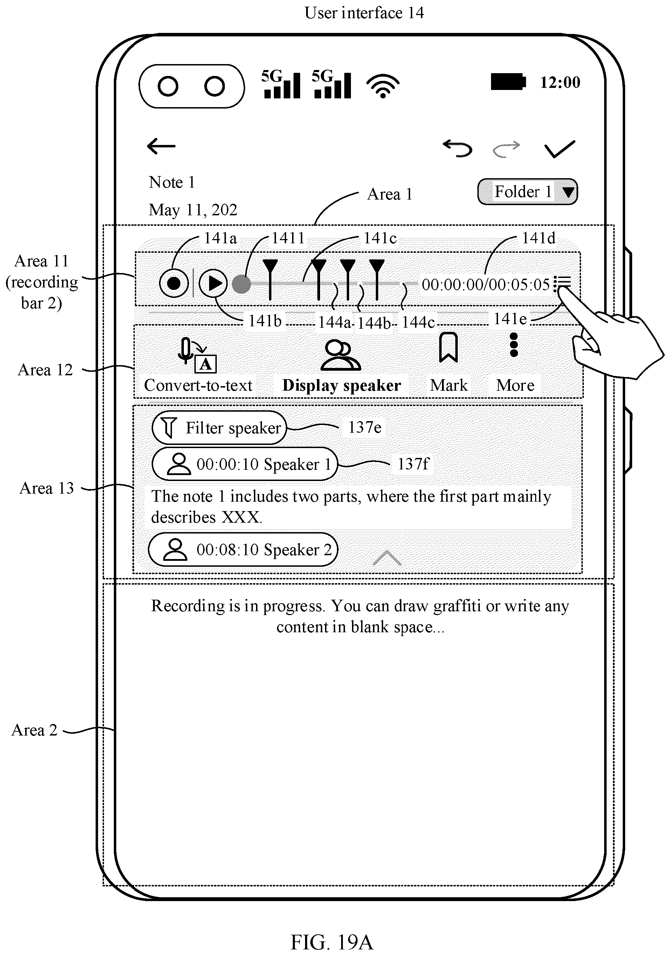

For related content of deleting a label by using a window corresponding to the label option in the voice menu window 139c, refer to the following descriptions of FIG. 19A to FIG. 19D. Details are not described herein.

According to the first aspect or any one of the foregoing implementations of the first aspect, the second area further includes a mark control, and the mark control is configured to add a label to recorded voice information; in a process of displaying the start recording control and the start playback control in the first area, or in a process of displaying the start recording control and the pause playback control in the first area, the first area further displays a voice menu control; and the method further includes: in response to an operation performed by the user on the voice menu control, displaying a voice menu window in the first interface, where the voice menu window includes a recording option and a label option; in response to an operation performed by the user on the recording option, displaying, in the voice menu window, all recording bands included in the first note, and an edit control; in response to an operation performed by the user on the edit control, displaying a second interface corresponding to the first note, where the second interface displays all recording bands included in the first note, and displays, under each recording segment, all labels included in the recording segment; and in response to a deletion operation performed by the user on any label displayed in the second interface, deleting the label.

The second interface is, for example, a user interface 16 mentioned in the following embodiments.

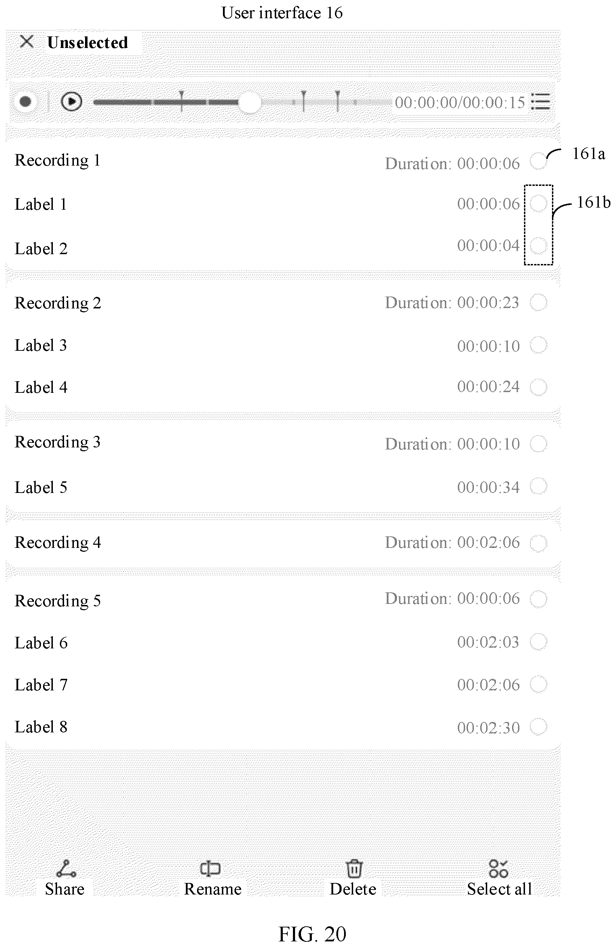

For related content of deleting a label by operating a control in the second interface, refer to the following description of FIG. 20. Details are not described herein.

According to the first aspect or any one of the foregoing implementations of the first aspect, in response to a deletion operation performed by the user on any recording segment displayed in the second interface, the recording segment and all labels included in the recording segment are deleted.

For related content of deleting a label by operating a control in the second interface, refer to the following description of FIG. 20. Details are not described herein.

According to the first aspect or any one of the foregoing implementations of the first aspect, the second area further displays a first control; and the method further includes: in response to an operation performed by the user on the first control, displaying a management window in the first interface, where the management window displays a label management entry; in response to an operation performed by the user on the label management entry, displaying a label management window, where the label management window displays all labels included in a current recording segment; and in response to a deletion operation performed by the user on any label displayed in the label management window, deleting the label.

The control configured to evoke the management window is, for example, a "more" control 137d mentioned in the following embodiments.

The management window is, for example, a management window 139a mentioned in the following embodiments.

The label management entry is, for example, a label management entry 139a-2 mentioned in the following embodiments.

The label management window is, for example, a label management window 139b mentioned in the following embodiments.

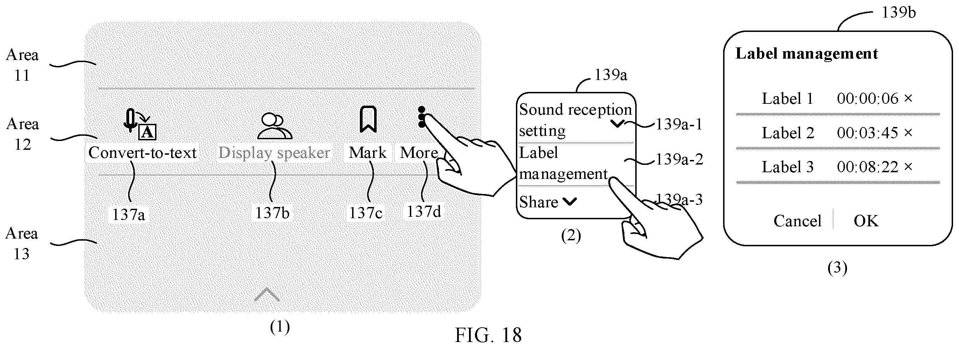

For related content of deleting a label by using the label management window, refer to the following description of FIG. 18. Details are not described herein.

According to the first aspect or any one of the foregoing implementations of the first aspect, the second area further includes a first control; and the method further includes: in response to an operation on the first control, displaying a management window in the first interface, where the management window displays a sharing entry; when the third area includes the filter speaker capsule, the first speaker capsule, the second speaker capsule, and the first text information, sharing, with a first application in a text manner, a name of the first note, the first speaker name displayed in the first speaker capsule, the second speaker name displayed in the second speaker capsule, and the sent first text information after an operation performed by the user on the sharing entry is detected; and when the third area includes the filter speaker capsule, the first speaker capsule, and the first text content, sharing, with the first application in a text manner, the name of the first note, the first speaker name displayed in the first speaker capsule, and the first text content after the operation performed by the user on the sharing entry is detected.

The sharing entry is, for example, a sharing entry 139a-3 mentioned in the following embodiments.

The third interface is, for example, a user interface 17 mentioned in the following embodiments.

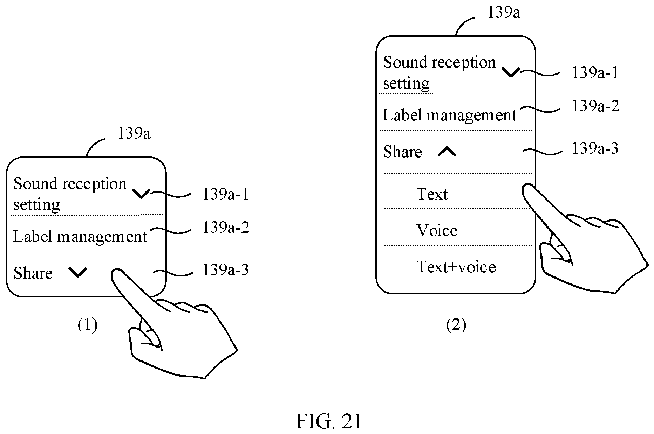

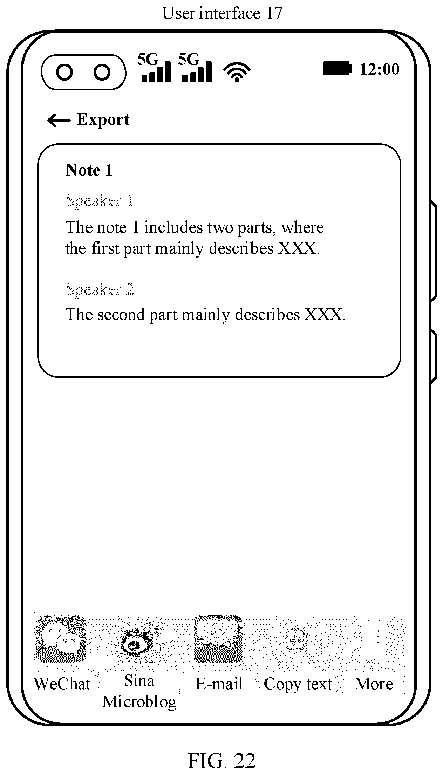

For related content involved in this aspect, refer to the following descriptions of FIG. 21 and FIG. 22. Details are not described herein.

According to the first aspect or any one of the foregoing implementations of the first aspect, the sharing, with a first application in a text manner, a name of the first note, the first speaker name displayed in the first speaker capsule, the second speaker name displayed in the second speaker capsule, and the sent first text information after an operation performed by the user on the sharing entry is detected includes: displaying a sharing manner in the management window after the operation performed by the user on the sharing entry is detected, where the sharing manner includes a first sharing manner, a second sharing manner, and a third sharing manner; when a selection operation performed by the user on the first sharing manner is detected, displaying the third interface; and displaying, in the third interface, the name of the first note, the first speaker name displayed in the first speaker capsule, the second speaker name displayed in the second speaker capsule, the sent first text information, and the first application; and in response to an operation performed by the user on the first application, sharing, with the first application in a text manner, the name of the first note, the first speaker name displayed in the first speaker capsule, and the first text content.

The first sharing manner is, for example, the following sharing manner 1 in which only text information is shared. The second sharing manner is, for example, the following sharing manner 2 in which only voice information is shared. The third sharing manner is, for example, the following sharing manner 3 in which both the text information and the voice information corresponding to the text information are shared.

According to the first aspect or any one of the foregoing implementations of the first aspect, the method further includes: when a selection operation performed by the user on the second sharing manner is detected, displaying the third interface; and displaying, in the third interface, the first voice information corresponding to the first text information, and the first application; and in response to the operation performed by the user on the first application, sharing the first voice information with the first application in a voice manner.

According to the first aspect or any one of the foregoing implementations of the first aspect, the method further includes: when a selection operation performed by the user on the third sharing manner is detected, displaying the third interface; and displaying, in the third interface, the name of the first note, the first speaker name displayed in the first speaker capsule, the second speaker name displayed in the second speaker capsule, the sent first text information, the first voice information corresponding to the first text information, and the first application; and in response to the operation performed by the user on the first application, sharing, with the first application in a text manner, the name of the first note, the first speaker name displayed in the first speaker capsule, and the first text content; and sharing the first voice information with the first application in a voice manner.

According to the first aspect or any one of the foregoing implementations of the first aspect, the management window further displays a sound reception setting entry, and the sound reception setting entry is in a collapsed state; and the method further includes: in response to an operation performed by the user on the sound reception setting entry in the collapsed state, updating a state of the sound reception setting entry from the collapsed state to an expanded state, and displaying a sound reception manner in the management window, where the sound reception manner includes internal sound reception, external sound reception, and internal and external sound reception; and in response to an operation performed by the user on any sound reception manner, setting a sound reception manner of the electronic device to a selected sound reception manner.

The sound reception setting entry is, for example, a sound reception setting entry 139a-1 in the following embodiments.

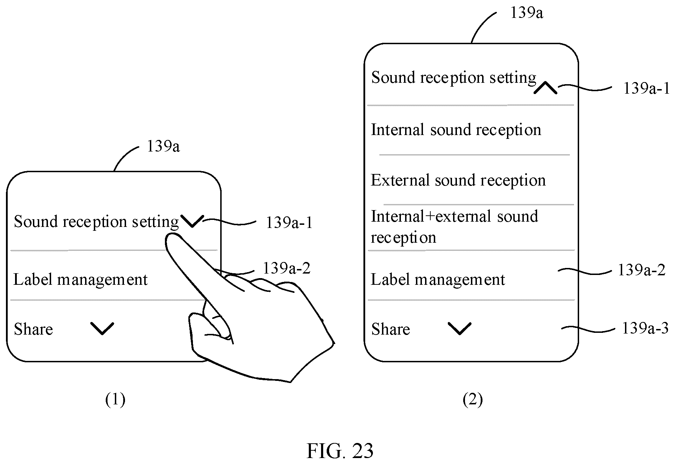

For related content involved in this aspect, refer to the following description of FIG. 23. Details are not described herein.

According to a second aspect, this application provides an electronic device. The electronic device includes a memory and a processor. The memory is coupled to the processor. The memory stores program instructions, and when the program instructions are executed by the processor, the electronic device is enabled to perform the instructions of the method in any one of the first aspect or the possible implementations of the first aspect.

The second aspect and any implementation of the second aspect respectively correspond to the first aspect and any implementation of the first aspect. For technical effects corresponding to the second aspect and any implementation of the second aspect, refer to technical effects corresponding to the first aspect and any implementation of the first aspect. Details are not described herein again.

According to a third aspect, this application provides a computer-readable medium, configured to store a computer program, where the computer program includes instructions for performing the method in any one of the first aspect or the possible implementations of the first aspect.

The third aspect and any implementation of the third aspect respectively correspond to the first aspect and any implementation of the first aspect. For technical effects corresponding to the third aspect and any implementation of the third aspect, refer to technical effects corresponding to the first aspect and any implementation of the first aspect. Details are not described herein again.

According to a fourth aspect, this application provides a computer program, where the computer program includes instructions for performing the method in any one of the first aspect or the possible implementations of the first aspect.

The fourth aspect and any implementation of the fourth aspect respectively correspond to the first aspect and any implementation of the first aspect. For technical effects corresponding to the fourth aspect and any implementation of the fourth aspect, refer to technical effects corresponding to the first aspect and any implementation of the first aspect. Details are not described herein again.

According to a fifth aspect, this application provides a chip, where the chip includes a processing circuit and a transceiver pin. The transceiver pin and the processing circuit communicate with each other through an internal connection path. The processing circuit performs the method in any one of the first aspect or the possible implementations of the first aspect, to control a receive pin to receive a signal, and to control a transmit pin to send a signal.

The fifth aspect and any implementation of the fifth aspect respectively correspond to the first aspect and any implementation of the first aspect. For technical effects corresponding to the fifth aspect and any implementation of the fifth aspect, refer to technical effects corresponding to the first aspect and any implementation of the first aspect. Details are not described herein again.

### BRIEF DESCRIPTION OF DRAWINGS

FIG. 1A and FIG. 1B are schematic diagrams of example user interfaces in which an electronic device creates a new note;
FIG. 2A(1) to FIG. 2A(4) are schematic diagrams of an example user interface involved in recording text information and voice information in a newly created note;
FIG. 2B is a schematic diagram of example user interfaces of different states in an area 13;
FIG. 3 is a schematic diagram of example user interfaces involved in styles of a convert-to-text control 137a and a display speaker control 137b in different states;
FIG. 4A to FIG. 4D are schematic diagrams of an example user interface involved in displaying a speaker during recording;
FIG. 5A to FIG. 5C are schematic diagrams of an example user interface involved in displaying a speaker after recording ends;
FIG. 6A to FIG. 6D are schematic diagrams of another example user interface involved in displaying a speaker after recording ends;
FIG. 7A to FIG. 7D are schematic diagrams of an example user interface involved in displaying a speaker during playback of recording;
FIG. 8 is a schematic diagram of an example user interface involved in filtering a speaker;
FIG. 9A to FIG. 9D are schematic diagrams of an example user interface involved in filtering a speaker after recording ends;
FIG. 10 is a schematic diagram of an example user interface involved in a sticky header effect of filtering a speaker after recording ends;
FIG. 11 is a schematic diagram of an example user interface involved in editing a speaker;
FIG. 12 is a schematic diagram of an example user interface involved in adding a label during recording;
FIG. 13 is a schematic diagram of another example user interface involved in adding a label during recording;
FIG. 14 is a schematic diagram of an example user interface involved in adding a label after recording ends;
FIG. 15 is a schematic diagram of another example user interface involved in adding a label after recording ends;
FIG. 16 is a schematic diagram of an example user interface involved in adding a label during playback of recording;
FIG. 17 is a schematic diagram of an example user interface for deleting a label;
FIG. 18 is a schematic diagram of another example user interface for deleting a label;
FIG. 19A to FIG. 19D are schematic diagrams of another example user interface for deleting a label;
FIG. 20 is a schematic diagram of another example user interface for deleting a label;
FIG. 21 is a schematic diagram of an example user interface for sharing content in a recording card;
FIG. 22 is a schematic diagram of another example user interface for sharing content in a recording card;
FIG. 23 is a schematic diagram of an example user interface for setting a sound reception manner;
FIG. 24 is a schematic diagram of another example user interface for setting a sound reception manner;
FIG. 25A and FIG. 25B are schematic diagrams of example user interfaces involved in segment-wise recording;
FIG. 26 is a schematic diagram of an example user interface for sound-text synchronization;
FIG. 27 is an example flowchart of a note processing method;
FIG. 28 is a schematic diagram of a hardware structure of an electronic device according to an embodiment of this application; and
FIG. 29 is a schematic diagram of a software structure of an electronic device according to an embodiment of this application.

### DESCRIPTION OF EMBODIMENTS

The technical solutions in the embodiments of this application are clearly and completely described below with reference to the accompanying drawings in the embodiments of this application. Clearly, the described embodiments are some rather than all of the embodiments of this application. All other embodiments obtained by a person of ordinary skill in the art based on the embodiments of this application without creative efforts shall fall within the protection scope of this application.

In this specification, the term "and/or" is merely used to describe an association relationship between associated objects, and indicates that three relationships may exist. For example, A and/or B may indicate the following three cases: Only A exists, both A and B exist, and only B exists.

The terms "first", "second", and the like in the specification and claims of the embodiments of this application are used to distinguish between different objects, and are not used to describe a particular order of the objects. For example, a first target object, a second target object, and the like are used to distinguish between different target objects, and are not used to describe a particular order of target objects.

In the embodiments of this application, words such as "example" or "for example" are used to indicate an example, illustration, or description. Any embodiment or design solution described as an "example" or "for example" in the embodiments of this application should not be explained as being more preferred or having more advantages than other embodiments or design solutions. Exactly, use of the words such as "example" or "for example" is intended to present a related concept in a specific manner.

In the description of the embodiments of this application, unless otherwise stated, "a plurality of" means two or more. For example, a plurality of processing units refer to two or more processing units, and a plurality of systems refer to two or more systems.

In a solution, a note application may be installed on an electronic device. A user may use the note application to record voice information in a recording manner. During recording, other user-input information, for example, one or more of text information (which may be referred to as a text in the following content), picture information (which may be referred to as a picture in the following content), or the like may be further received.

However, in this manner of recording information, the electronic device can only simply convert a voice into a text for recorded voice information. The electronic device does not support determining of a specific speaker from which text information obtained through label conversion comes, does not support filtering of text information of a specified speaker, does not support editing (such as renaming) of a specified speaker, does not support adding of a label to or deleting of a label from recording content at a specified position, does not support sharing of the recorded voice information and text information obtained through conversion based on the voice information, or does not support modifying of a sound reception manner. Therefore, an applicable scenario is undiversified and different usage requirements of the user cannot be met, resulting in poor user experience.

In view of this, this application provides a note processing method. The note processing method may be applied to a note that is generated by an electronic device by using a note application, so as to implement more processing on voice information recorded in the note, thereby meeting different scenario requirements and improving user experience.

It should be noted that the processing performed on the recorded voice information in this application may be, for example, the foregoing processing of displaying, filtering, or editing a speaker, processing of adding or deleting a label, processing of sharing voice information and text information converted from the voice information, or processing of modifying a sound reception manner.

Specifically, in an actual application, by implementing the note processing method provided in this application, the electronic device may implement one or more of the following functions, and the following functions constitute no limitation.

### Function 1:

When a voice-to-text function is enabled or text information obtained through conversion is already available, the electronic device may implement processing such as displaying a speaker, filtering a speaker, and editing a speaker on the text information converted from the voice information during recording, after recording ends, and during playback of recording. In addition, switching may be performed between enabling the display speaker function and disabling the display speaker function. In addition, when the display speaker function is enabled, the processing of filtering a speaker and editing a speaker may be implemented at any time.

This can be better applied to a scenario of a multi-person conference, so that the user can learn a speaker corresponding to each sentence of text information that is obtained through conversion based on the voice information. In addition, only text information corresponding to a speaker selected through processing of filtering a speaker may be displayed based on a requirement of the user. In addition, the function of editing a speaker is provided, so that the user can rename a specified speaker as required, thereby further helping the user learn a speaker actually corresponding to each sentence of text information.

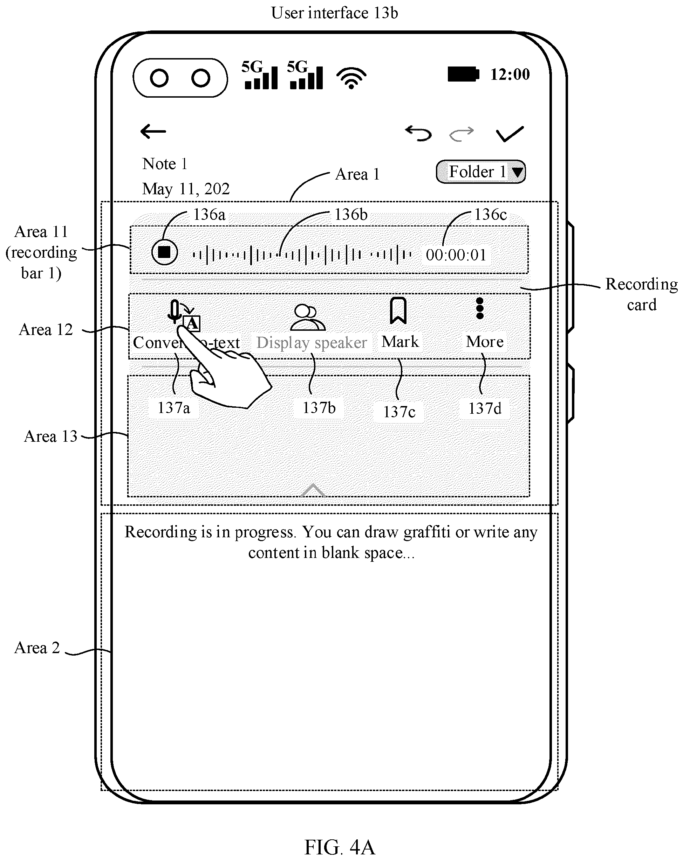

It should be understood that, in a process of implementing the function 1, other functions may be further implemented, for example, any one or more of the following listed functions 2 to 6 and other unlisted functions. These functions can enable the user to use the note application more conveniently, and to implement processing of a note. For related content in such a scenario of implementing the function 1, refer to the following descriptions of FIG. 4A to FIG. 11. Details are not described herein.

### Function 2:

During recording, after recording ends, and during playback of recording, the electronic device may add a label to a specified position (time point) in the voice information, and delete the added label.

In this way, the user can label, as required, voice content that the user wants to focus on, thereby helping quickly locate a label position subsequently for playback.

It should be understood that, in a process of implementing the function 2, other functions may be further implemented, for example, any one or more of the foregoing listed function 1, and the following listed functions 3 to 6, and other unlisted functions. These functions can enable the user to use the note application more conveniently, and to implement processing of a note. For related content in such a scenario of implementing the function 2, refer to the following descriptions of FIG. 12 to FIG. 20. Details are not described herein.

### Function 3:

When a voice-to-text function is enabled or text information obtained through conversion is already available, the electronic device may implement processing of sharing text information for the text information obtained through conversion based on the voice information during recording, after recording ends, and during playback of recording. In addition, the user may alternatively choose to perform sharing processing of sharing the voice information corresponding to the text information, and perform processing of sharing both the text information and the corresponding voice information.

A sharing manner includes but is not limited to one or more of the following sharing manners:
Sharing manner 1: Only the text information is shared.
Sharing manner 2: Only the voice information is shared.
Sharing manner 3: Both the text information and the voice information corresponding to the text information are shared.

In addition, the sharing manner 1 includes but is not limited to any one or more of the following forms:

Sharing manner 11: A to-be-shared text is shared with an application or a device selected by the user directly in a text form. In other words, the text shared with the application or the device selected by the user is displayed directly in a style of text information.

Sharing manner 12: The to-be-shared text is converted into a document in a specified format, such as a TXT format, a PDF format, a Word format, or a picture format, and is shared with the application or the device selected by the user in a document form.

Sharing manner 13: The to-be-shared text information is still shared with the application or the device selected by the user in a note form.

It should be understood that the foregoing description is merely an example provided to better understand the technical solution of this embodiment, and is not used as a unique limitation on this embodiment. For ease of description, in a subsequent embodiment, the sharing manner 11 is used as an example for specific description. Specific implementation details are not described herein.

In this way, the user may share a note recorded by the current electronic device with another application or another electronic device, thereby helping the user use another device to continue to view content of the note.

It should be further understood that, in a process of implementing the function 3, other functions may be further implemented, for example, any one or more of the foregoing listed functions 1 and 2, and the following listed functions 4 to 6, and other unlisted functions. These functions can enable the user to use the note application more conveniently, and to implement processing of a note. For related content in such a scenario of implementing the function 3, refer to the following descriptions of FIG. 21 and FIG. 22. Details are not described herein.

### Function 4:

The electronic device may implement processing of modifying a sound reception manner during recording, so that recording can be performed in different sound reception manners as required during recording, thereby better ensuring a recording effect.

In addition, the processing of modifying a sound reception manner may also be implemented after recording ends or during playback of recording. In this way, when recording is started next time, the recording may be performed in a sound reception manner that is set by the user before the recording is started.

The sound reception manner includes but is not limited to one or more of the following sound reception manners:
Sound reception manner 1: internal sound reception (internal recording). A condition for internal sound reception is that the electronic device has a sound reception function, and a sound signal received by the electronic device is directly transmitted to a recording system and recorded in a storage medium. In this recording method, the audio signal is not subject to external interference and therefore is not lost, and quality of recording is good.
Sound reception manner 2: external sound reception (external recording). External sound reception means that a sound signal of an external sound is transmitted to a recording system by using a microphone that comes with the electronic device or an external sound pickup device, and then the sound signal is recorded in a storage medium. In this recording manner, the sound signal is easily subject to external interference and therefore is prone to distortion. An advantage of this recording manner is that a plurality of sound signals such as a human voice can be conveniently recorded.
Sound reception manner 3: internal and external sound reception (full-scenario sound reception), that is, recording of an internal sound and an external sound.

It should be understood that the foregoing description is merely an example provided to better understand the technical solution of this embodiment, and is not used as a unique limitation on this embodiment. For ease of description, in a subsequent embodiment, an example in which the sound reception manner includes the foregoing listed sound reception manner 1 and sound reception manner 2 is used for specific description. Specific implementation details are not described herein.

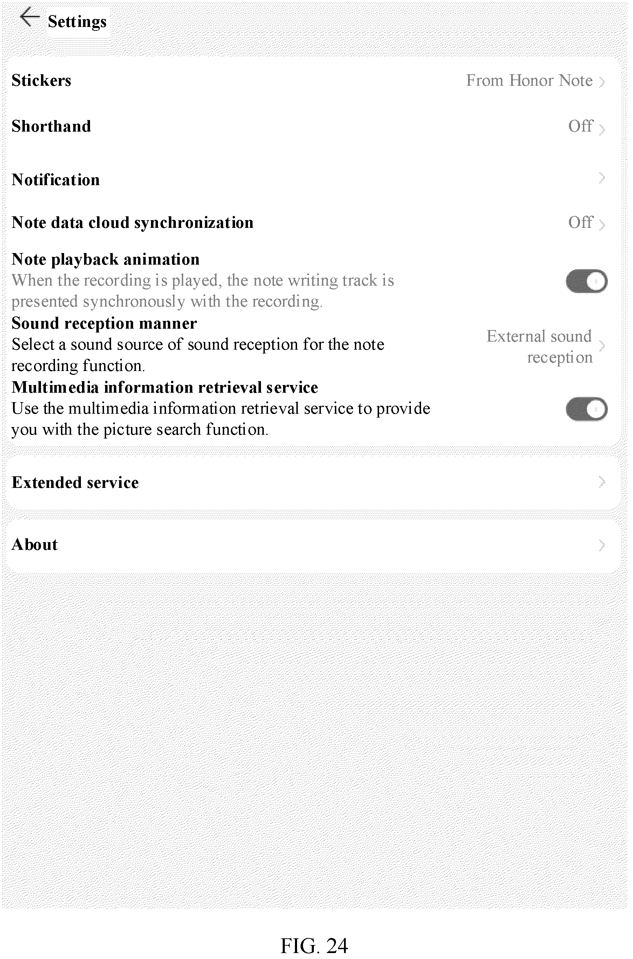

It should be further understood that, in a process of implementing the function 4, other functions may be further implemented, for example, any one or more of the foregoing listed functions 1, 2, and 3, and the following listed functions 5 and 6, and other unlisted functions. These functions can enable the user to use the note application more conveniently, and to implement processing of a note. For related content in such a scenario of implementing the function 4, refer to the following descriptions of FIG. 23 and FIG. 24. Details are not described herein.

### Function 5:

When the information is recorded, the electronic device may separately record a plurality of segments of voice information (voice segments), and make the plurality of segments of voice information into one segment of long voice (a voice file). The plurality of segments of voices can be continuously played when the long voice is played.

For example, Q segments of voices indicate that the electronic device performs recording for Q times. Specifically, after one time of recording is started, the electronic device may collect a sound signal, and may obtain one segment of voice information based on the collected sound signal after the time of recording ends. To be specific, the electronic device may perform recording in different times (Q separated time periods), to obtain the Q segments of voices. Then, the electronic device may integrate the Q segments of voices, to obtain one segment of long voice. In this way, when the long voice is played, the separately recorded Q segments of voices can be continuously played. Q is an integer greater than or equal to 2.

In some possible cases, after a Qth time of recording is stopped, the electronic device may display a playback progress bar corresponding to the segment of long voice. The playback progress bar includes Q-1 nodes, and the playback progress bar is divided into Q segments (which may be referred to as Q sub-progress bars). An ith sub-progress bar in the Q sub-progress bars corresponds to an ith segment of voice. A length of the ith sub-progress in the playback progress bar is directly proportional to a ratio of total duration of the ith segment of voice to total duration of the long voice. A larger ratio of the total duration of the ith segment of voice to the total duration of the long voice indicates a higher proportion of the ith segment of voice in the long voice, and a greater length of the ith sub-progress bar in the playback progress bar.

It should be understood that the long voice involved herein means that the voice includes more content than any one of the plurality of segments of voice information, and may be considered as a set of the plurality of segments of voice information, instead of indicating that a time of the long voice is long. The total duration of the long voice is not limited in this embodiment of this application.

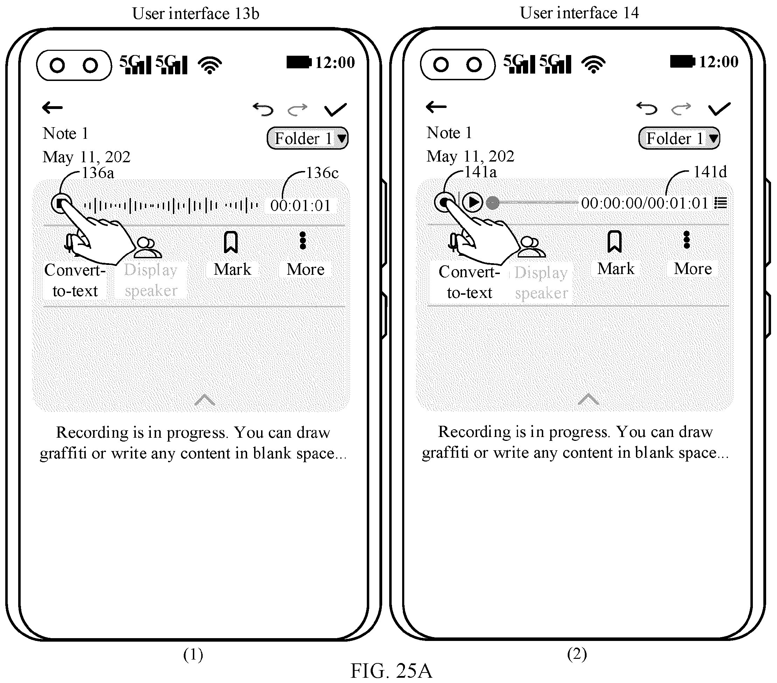

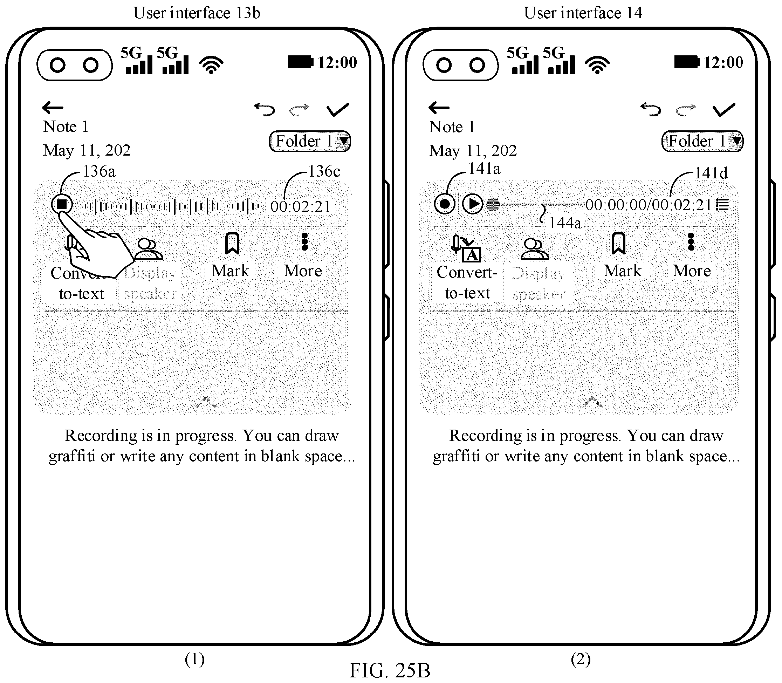

It should be further understood that, in a process of implementing the function 5, other functions may be further implemented, for example, any one or more of the foregoing listed functions 1 to 4, and the following listed function 6, and other unlisted functions. These functions can enable the user to use the note application more conveniently, and to implement processing of a note. For related content in such a scenario of implementing the function 5, refer to the following descriptions of FIG. 25A and FIG. 25B. Details are not described herein.

### Function 6:

When the recording is played, the electronic device may implement sound-text synchronization. Sound-text synchronization includes displaying text information corresponding to played voice information in a state A (for example, with the font being boldfaced), and displaying text information corresponding to unplayed voice information in a state B (for example, with the font being gray in color) when the recording is played. In this way, the user can quickly learn text information corresponding to the currently played voice information.

In addition, during playback of recording, the user may further edit text information obtained through conversion based on voice information, for example, add, modify, or delete some content. For a scenario of modification, for example, replacement of some wrongly written characters, sound-text synchronization may continue to be stored. For a scenario of deletion, during sound-text synchronization, content before deletion may be stayed, and after playback of voice information corresponding to the deleted text information is completed, subsequent text information is kept synchronized with the voice information. For a scenario of addition, during sound-text synchronization, the text information corresponding to the voice information may be kept changed synchronously with the playback of the voice information. For example, the state A is switched to the state B, and the newly added part of text information is always in a state C (for example, with the font being underscored or displayed in different background colors). This further facilitates user operation and improves user experience.

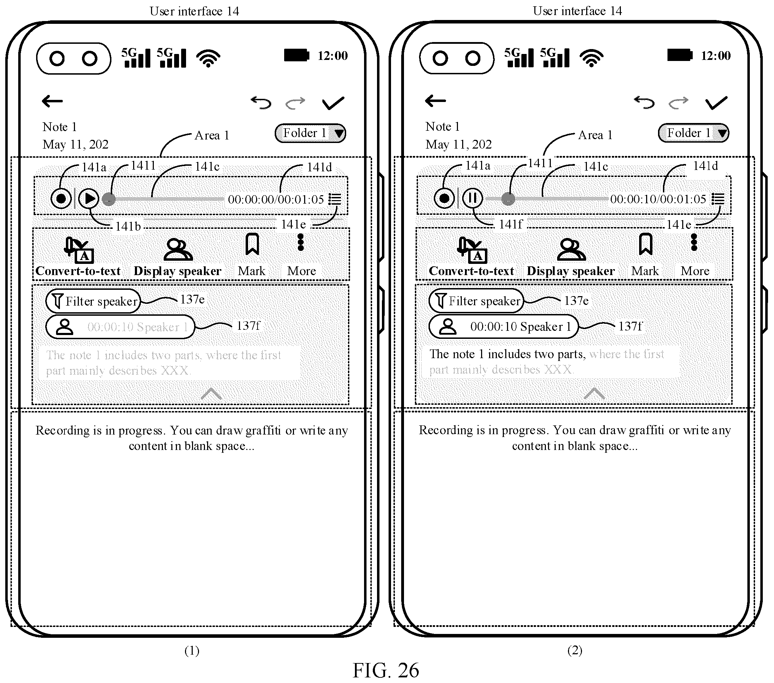

It should be understood that, during playback of recording, in addition to the function 6, other functions may be included, for example, any one or more of the foregoing listed functions 1 to 5, and other unlisted functions. These functions can enable the user to use the note application more conveniently, and to implement processing of a note. For related content in such a scenario of implementing the function 6, refer to the following description of FIG. 26. Details are not described herein.

To better understand the foregoing listed six functions, the following describes related content involved in implementing these functions with reference to user interface diagrams involved in practice.

Before the related content involved in the foregoing six functions is described, first, related content for creating a new note in the electronic device is described using examples with reference to FIG. 1A and FIG. 1B, and related content for recording text information and voice information in the newly created note is described using examples with reference to FIG. 2A(1) to FIG. 2A(4) and FIG. 2B.

Referring to a user interface 10 shown in (1) in FIG. 1A, in response to an operation (for example, a tap operation) on a note application (for example, a note 101), the electronic device may enable the note application. In this case, the electronic device may display a user interface 11a shown in (2) in FIG. 1A.

As shown in (2) in FIG. 1A, the user interface 11a is an example user interface involved when the new note is created. The user interface 11a may include a control 111 corresponding to viewing all notes. In response to an operation on the control 111, the electronic device may display a user interface 11b shown in (3) in FIG. 1A.

As shown in (3) in FIG. 1A, the user interface 11b may include a control 1131. The control 1131 may trigger the electronic device to display a folder involved in storing a note.

In response to an operation on the control 1131, the electronic device may display all folders. All the folders include a folder created by the user by using the electronic device (which may be, for example, collectively referred to as a newly created folder), and further include a default folder in a system. Any non-empty folder may include at least one file, and each file may be referred to as a note. An empty folder includes no file. For example, as shown in a user interface 11c shown in (4) in FIG. 1A, the newly created folder may include a folder 1, and the default folder may be independent of the newly created folder. In response to an operation on an icon 112 corresponding to the folder 1, the electronic device may display all notes included in a file 1. For example, in this case, the electronic device may display a user interface 11d shown in (1) in FIG. 1B.

As shown in (1) in FIG. 1B, the user interface 11d includes a note involved in the file 1, for example, a note A and a note B.

In addition, the user interface 11a, the user interface 11b, and the user interface 11c may further include a create control 113. The create control 113 may be configured to trigger creation of a new note.

In an example in which the user triggers an operation on the create control 113 in the user interface 11c, the electronic device creates a new note in response to an operation (for example, a tap operation) performed by the user on the create control 113 in the user interface 11c. The newly created note belongs to a currently opened folder, which is the file 1 herein.

It should be understood herein that, in the user interface 11a shown in (2) in FIG. 1A, because no folder is currently opened but all the notes are displayed, in response to an operation (for example, a tap operation) performed by the user on the create control 113 in the user interface 11a, the new note created by the electronic device does not belong to a folder created by the user by using the electronic device, which is, for example, the foregoing file 1, but belongs to the default folder included in the system. Subsequently, the user can set the newly created note in another folder.

In response to the operation on the create control 113, the electronic device may create the new note. In this case, the electronic device may display a user interface 12 shown in (2) in FIG. 1B.

As shown in (2) in FIG. 1B, the user interface 12 is an initialization interface involved after the new note is created. In response to an operation on a title input control 121, the electronic device may set a name of the newly created note. For example, the newly created note is named as a note 1 herein.

It should be understood that a manner of creating the new note shown in FIG. 1A and FIG. 1B is described as an example. In an actual application, a process of creating the new note may involve more or fewer interfaces and controls, and should not constitute a limitation on this embodiment of this application.

User-input information is not recorded in the foregoing involved note 1. After entering the note 1, the electronic device may trigger enabling of a recording function by using a record control. After the recording function is enabled, the electronic device may obtain two areas (an area 1 and an area 2) through division in a user interface. The area 1 is used to present a recording card (which displays content, option/control, and the like related to recording), and the area 1 may also be referred to as a recording area. The area 2 is used to present other user-input information (for example, a text or a picture). The other information may be referred to as non-recording information. The area 2 may also be referred to as an editing area.

The recording card located in the recording area (area 1) may include three sub-areas: a voice recording and playback area (denoted as an area 11), a voice processing tool area (denoted as an area 12), and a text area (denoted as an area 13). For related descriptions of the area 11, the area 12, and the area 13, refer to the following descriptions of FIG. 2A(1) to FIG. 2A(4) and FIG. 2B. Details are not described herein.

For related content of recording text information and voice information in the area 1, the area 2, and the note, refer to the following example descriptions of FIG. 2A(1) to FIG. 2A(4) and FIG. 2B.

Referring to FIG. 2A(1), the user interface 13 is a corresponding user interface after the user names a newly created note as a note 1. In this case, the electronic device may provide a default input tool, such as a keypad 131. When the keypad is displayed, the electronic device may further display a note toolbar (for example, a note toolbar 132).

The note toolbar can provide a convenient function (for example, the recording function) entry when the user records information. The note toolbar 132 may include an insert control 132a, a record control 132b, and a handwrite control 132c. The insert control 132a may be configured to trigger insertion of information such as a picture or a video into the user interface 13 for display. The record control 132b may be configured to trigger enabling of the recording function. The handwrite control 132c may be configured to trigger switching of the input tool from the keypad 131 to the stylus toolbar. In addition to the insert control 132a, the record control 132b, and the handwrite control 132c, the note toolbar may further include another control, for example, may further include a checklist creation control 132d and a style setting control 132e.

For example, in response to an operation (for example, a tap operation) on the handwrite control 132c, the electronic device switches the input tool from the keypad 131 to the stylus toolbar. As shown in FIG. 2A(2), the stylus toolbar may be, for example, a stylus toolbar 134 displayed in a user interface 13a. The stylus toolbar 134 may include different styluses such as a stylus 134a~a stylus 134f. The stylus may be used to make a mark in the editing area, for example, adding an underscore, drawing a circle, or writing text information. The user interface 13a may further include a keypad switching control 135. The keypad switching control 135 may be configured to trigger the electronic device to switch the input tool from the stylus toolbar to the keypad. For example, in some possible cases, the keypad switching control 135 may be used as a shortcut control in the stylus toolbar 134.

Still referring to FIG. 2A(1), for example, in response to an operation (for example, a tap operation) on the record control 132b, the electronic device may enable the recording function, and obtain the foregoing involved area 1 and area 2 through division in the user interface, as shown in the user interface 13b shown in FIG. 2A(3).

Referring to FIG. 2A(3), for example, the user interface 13b includes an area 1 and an area 2. The area 1 includes an area 11, an area 12, and an area 13.

For example, the area 11 may include a function control, for example, a recording bar, involved when a voice is recorded/played (recorded or played). The recording bar may be used to trigger functions such as recording a voice, pausing voice recording, playing a voice, and pausing voice playback. The recording bar has different states. The recording bar in different states includes different components. Different states of the recording bar indicate different functions of the recording bar.

For example, the recording bar included in the area 11 shown in FIG. 2A(3) is a recording bar in a state 1 (which may also be referred to as a recording bar 1). The recording bar 1 may include a stop recording control 136a, a recording status bar 136b, and corresponding recording duration 136c when a voice is recorded.

The stop recording control 136a is configured to indicate that the electronic device has currently started recording. After the user taps the control, the electronic device stops recording, and the recording bar 1 is switched to a recording bar in a state 2 (which may also be referred to as a recording bar 2), for example, a user interface 14 shown in FIG. 2A(4).

The recording status bar 136b may reflect a magnitude of energy of a sound signal collected by the electronic device. Larger energy indicates that the recording status bar 136b may change to a larger extent. Smaller energy indicates that the recording status bar 136b changes to a smaller extent.

In some possible cases, the recording duration 136c may be used to indicate total duration of all recorded voices. In some other possible cases, the recording duration 136c may not be used to indicate the total duration of all the recorded voices, and may be used to indicate total duration of the segment of voice being recorded.

Referring to FIG. 2A(4), the user interface 14 is an example user interface involved after recording is paused. In some possible cases, the recording bar 2 in the state 2 may include a start recording control 141a, a start playback control 141b, a playback progress bar 141c, a playback time indicator 141d, and a voice menu control 141e.

The start recording control 141a may be configured to trigger the electronic device to start recording again (restart recording of a voice segment). The start playback control 141b may be configured to trigger the electronic device to play a recorded voice (voice segment). The playback progress bar 141c may be used to indicate a current voice playback progress. The playback time indicator 141d is used to indicate a current playback time and total duration of all voices. The voice menu control 141e is configured to trigger the electronic device to display and manage all recorded voices. All the voices include all voice segments recorded in the note 1. When all the voices recorded in the note 1 is Q (an integer greater than or equal to 2) segments of voices, the electronic device may integrate the Q segments of voices into one segment of long voice, and total duration of the Q segments of voices is total duration of the long voice. In this case, the playback progress bar 141c may further include Q-1 nodes, and the playback progress bar 141c is divided into Q segments (which may be referred to as Q sub-progress bars). An ith sub-progress bar in the Q sub-progress bars corresponds to an ith segment of voice. For descriptions of a node and related content of the node, refer to the following description of (2) in FIG. 25B. Details are not described herein.

In addition, the playback progress bar 141c may include a recording playback progress control 1411. If the recording playback progress control 1411 is at a position A1 in the playback progress bar 141c, it indicates that voice information corresponding to the position A1 is played.

Still referring to FIG. 2A(3), for example, in some possible cases, the area 12 may include a convert-to-text control 137a (a voice-to-text control), a display speaker control 137b, a label control 137c, and a "more" control 137d that has some functions hidden.

The display speaker control 137b in the area 12 may include three states, for example, a first state indicating that a display speaker function is not enabled (disabled), a second state indicating that the display speaker function is enabled, and a third state indicating that the display speaker function is unavailable. When the display speaker control 137b is in the first state or the second state, and when the user taps the display speaker control 137b, switching between the two states may be implemented. For example, when the user taps the display speaker control 137b in the first state, the electronic device switches the display speaker control 137b from the first state to the second state in response to the operation behavior. When the user taps the display speaker control 137b in the second state, the electronic device switches the display speaker control 137b from the second state to the first state in response to the operation behavior.

In addition, it should be noted that, the display speaker control 137b may be in the first state or the second state only when the convert-to-text control 137a is in the second state, that is, the user enables the voice-to-text function, or text information obtained through conversion based on voice information is already displayed in the text area (the area 13). Otherwise, the display speaker control 137b is in the third state.

The label control 137c in the area 12 is available in a full scenario (during recording, after recording ends, and during playback of recording). Specifically, each time the user performs tapping, a label is added to a specified position (time point) in the recording bar. For details about related content involved in the label control, refer to the following descriptions of related content of adding and deleting a label. Details are not described herein.

The "more" control 137d in the area 12 is available in a full scenario. Specifically, each time the user taps the control, a corresponding window is displayed. The window displays a hidden function control, such as a share control, a sound reception manner modification (sound reception setting) control, or a manage label control. For details about related content involved in these controls, refer to the following descriptions of related content of setting a sound reception manner and deleting a label. Details are not described herein.

The following describes styles of the convert-to-text control 137a and the display speaker control 137b in different states, and association between the two controls with reference to an example user interface shown in FIG. 3.

For example, when the convert-to-text control 137a is in the first state, that is, the state indicating that the voice-to-text function is not enabled, and the area 13 does not include text information obtained through conversion based on voice information, it can be learned from the foregoing description that in this case, the display speaker function is unavailable, that is, the display speaker control 137b is in the third state. In this case, the convert-to-text control 137a in the first state may be of a style shown in (1) in FIG. 3, and the display speaker control 137b in the third state may be of a style (with the font being gray in color) shown in (1) in FIG. 3.

For example, after the user taps the convert-to-text control 137a in the first state in (1) in FIG. 3, in response to the operation behavior, the electronic device switches the convert-to-text control 137a from the first state to the second state, that is, the state indicating that the voice conversion function is enabled. In addition, the style of the convert-to-text control 137a is switched from the style shown in (1) in FIG. 3 to the style with an icon and a text being both boldfaced, as shown in (2) in FIG. 3.

It can be learned from the foregoing description that, when the convert-to-text control 137a is in the second state, the display speaker control 137b may be selected by the user, that is, may be switched from the third state to a non-third state (the first state or the second state), regardless of whether the area 13 includes the text information obtained through conversion based on the voice information. In an actual application, when the third state is switched to the non-third state, whether the third state is switched to the first state or the second state may be set based on a service requirement. This is not limited in this application. For ease of description, in this embodiment of this application, for example, the non-third state switched from the third state is the first state by default. The style of the display speaker control 137b in the first state may be, for example, the style (with the font being switched from gray to black in color) shown in (2) in FIG. 3.

For example, when the convert-to-text control 137a is in the second state (the style shown in (2) in FIG. 3) and the display speaker control 137b is in the first state (the style shown in (2) in FIG. 3), after the user taps the display speaker control 137b in the first state, in response to the operation behavior, the electronic device switches the display speaker control 137b from the first state to the second state, that is, the state indicating that the display speaker function is enabled. In addition, the style of the display speaker control 137b is switched from the style shown in (2) in FIG. 3 to the style with an icon and a text being both boldfaced, as shown in (3) in FIG. 3.

It may be understood that when the convert-to-text control 137a is in the second state (the style shown in (3) in FIG. 3) and the display speaker control 137b is also in the second state (the style shown in (3) in FIG. 3), and when the area 13 displays the text information obtained by the electronic device through conversion based on the voice information, for example, "The note 1 includes two parts, where the first part mainly describes XXX, and the second part mainly describes XX.", the area 13 displays a control for filtering a specified speaker, for example, a filter speaker capsule 137e shown in (6) in FIG. 3, and a control for displaying speaker information corresponding to each piece of text information, for example, a speaker capsule 137f shown in (6) in FIG. 3.

In some possible cases, after the display speaker function is enabled, all speakers may be displayed by default. Correspondingly, the area 13 displays all the text information obtained through conversion based on the voice information.

In some other possible cases, the user may filter a speaker by operating the filter speaker capsule 137e, for example, select one or more specified speakers as required. Correspondingly, the area 13 displays only text information corresponding to the selected speaker. For content involved in filtering a speaker, refer to the following descriptions of FIG. 8 to FIG. 10. Details are not described herein.

For ease of description, in the embodiments of this application, for example, after the display speaker function is enabled, all speakers are displayed by default.

A speaker capsule 137f corresponding to each piece of text information may include a speaker profile picture, a speaker time, a speaker name, and the like that correspond to the piece of text information. In some possible cases, the speaker profile picture and the speaker name that are displayed in the speaker capsule 137f may be a default profile picture and name that are set by a system. In some other possible cases, the speaker profile picture and the speaker name that are displayed in the speaker capsule 137f may be synchronized with a profile picture and a name of a related contact person in an application such as contacts. In some other possible cases, the user may modify the speaker profile picture and the speaker name by operating the speaker capsule 137f. For content involved in such an operation, refer to the following description of FIG. 11. Details are not described herein.

For example, when the convert-to-text control 137a is in the first state, that is, the state indicating that the voice-to-text function is not enabled, but the area 13 includes the text information obtained through conversion based on the voice information, for example, "The note 1 includes two parts, where the first part mainly describes XXX, and the second part mainly describes XX.", it can be learned from the foregoing description that in this case, the display speaker function is available, that is, the display speaker control 137b is in the non-third state (in this embodiment of this application, for example, the non-third state is the first state by default). In this case, the convert-to-text control 137a in the first state may be of styles shown in (1) in FIG. 3 and (4) in FIG. 3, and the display speaker control 137b in the first state may be of a style (with the font being black in color) shown in (4) in FIG. 3.

For example, when the display speaker control 137b is in the first state (the style shown in (4) in FIG. 3), after the user taps the display speaker control 137b in the first state, in response to the operation behavior, the electronic device switches the display speaker control 137b from the first state to the second state, that is, the state indicating that the display speaker function is enabled. In addition, the style of the display speaker control 137b is switched from the style shown in (4) in FIG. 3 to the style with an icon and a text being both boldfaced, as shown in (5) in FIG. 3.

It may be understood that, the area 13 displays the text information obtained by the electronic device through conversion based on the voice information, for example, "The note 1 includes two parts, where the first part mainly describes XXX, and the second part mainly describes XX." Therefore, after the display speaker function is enabled, the area 13 displays a control for filtering a specified speaker, for example, a filter speaker capsule 137e shown in (5) in FIG. 3, and a control for displaying speaker information corresponding to each piece of text information, for example, a speaker capsule 137f shown in (5) in FIG. 3.

The filter speaker capsule 137e and the speaker capsule 137f that are shown in (5) in FIG. 3 are the same as the foregoing filter speaker capsule 137e and speaker capsule 137f that are shown in (6) in FIG. 3. Details are not described herein again.

In addition, for content involved in the filter speaker capsule 137e and the speaker capsule 137f, refer to the following descriptions of FIG. 8 to FIG. 10 and FIG. 11. Details are not described herein.

It should be understood that the foregoing description is merely an example provided to better understand the technical solution of this embodiment, and is not used as a unique limitation on this embodiment. In an actual application, based on service requirements, different styles may be set to indicate the first state and the second state of the convert-to-text control 137a, and different styles may be set to indicate the first state, the second state, and the third state of the display speaker control 137b. This is not limited in this application.

Still referring to FIG. 2A(3), for example, the area 13 is used to display the text information obtained through conversion based on the voice information, when the user enables the voice-to-text function, that is, when the convert-to-text control 137a is in the second state. For the displayed text information, specifically, the electronic device processes the collected sound signal to obtain a voice, converts the voice, and then displays, in the area 13, a text obtained through conversion.

In addition, in some implementations, when the voice-to-text function is enabled, in a process of obtaining the text information through conversion based on the voice information, the area 13 may further display prompt information. The prompt information may be used to prompt the electronic device that the voice-to-text function is enabled. For example, the prompt information may be a prompt text: "Converting a voice to a text...".

In addition, it can be learned from the foregoing description that, when the user enables the voice-to-text function, that is, the convert-to-text control 137a is in the second state, or the text information obtained through conversion based on the voice information is already displayed in the area 13, and when the user enables the display speaker function, that is, the display speaker control 137b is in the second state, the area 13 not only displays the text information obtained through conversion based on the voice information, but also displays a control for filtering a specified speaker, for example, the filter speaker capsule 137e shown in (5) in FIG. 3 and (6) in FIG. 3, and speaker information corresponding to each piece of text information, for example, a speaker profile picture, a speaker time, and a speaker name that correspond to the piece of text information and that are displayed in the speaker capsule 137f shown in (5) in FIG. 3 and (6) in FIG. 3.

In addition, in some possible cases, a control for user operation, such as 150a shown in (1) in FIG. 2B or 150b shown in (2) in FIG. 2B, may be disposed in the area 13.

When the control displayed in the area 13 is 150a, it indicates that the area 13 is in an expanded state. Specifically, when the area 13 is in the expanded state, and includes the text information obtained through conversion based on the voice information, the user can see, in the area 13, the text information obtained through conversion based on the voice information.

It may be understood that when the control displayed in the area 13 is 150a, and when the user taps the control 150a, in response to the operation behavior, the electronic device switches the area 13 from the expanded state shown in (1) in FIG. 2B to a collapsed state shown in (2) in FIG. 2B, and updates the control 150a to the control 150b.

When the control displayed in the area 13 is 150b, it indicates that the area 13 is in the collapsed state. Specifically, when the area 13 is in the collapsed state, the area 13 is collapsed. In this case, even if there is the text information obtained through conversion based on the voice information, the user cannot see the text information.

It may be understood that when the control displayed in the area 13 is 150b, and when the user taps the control 150b, in response to the operation behavior, the electronic device switches the area 13 from the collapsed state shown in (2) in FIG. 2B to the expanded state shown in (1) in FIG. 2B, and updates the control 150b to the control 150a.

For example, in some possible cases, the state of the area 13 may be bound to the state of the convert-to-text control 137a in the area 12.

For example, when the convert-to-text control 137a is in the foregoing second state, the area 13 may be in the expanded state. Correspondingly, when the convert-to-text control 137a is in the foregoing first state, the area 13 may be in the collapsed state.

For another example, when the convert-to-text control 137a is switched from the foregoing second state to the foregoing first state, if the text information obtained through conversion based on the voice information already exists, the area 13 may still be in the expanded state.

For example, in some other possible cases, the area 13 may be set to be in the expanded state by default. To be specific, the area 13 is in the expanded state regardless of a state in which the convert-to-text control 137a is in or whether there is currently the text information obtained through conversion based on the voice information.

For example, in this implementation, a change of the state of the area 13 depends only on an operation performed by the user on the control 150a.

Correspondingly, after the user taps 150a to switch the area 13 from the expanded state to the collapsed state, and to update the control 150a to 150b, the change of the state of the area 13 depends only on an operation performed by the user on the control 150b.

It should be understood that the foregoing description is merely an example provided to better understand the technical solution of this embodiment, and is not used as a unique limitation on this embodiment. For ease of description, an example in which the area 13 is in the expanded state by default is used for description in the following embodiments.

It should be further understood that, an example in which the area 11, the area 12, and the area 13 are displayed in one area (the area 1) is used for description herein. In another possible case, the area 11, the area 12, and the area 13 may be separated.

Still referring to FIG. 2A(3), for example, the area 2 is used to present input non-recording information such as a text or a picture. When no non-recording information is displayed in the area 2, prompt information may be displayed. The prompt information may be used to prompt the user that recording is being performed currently, and may further prompt the user that information may be currently input into the area 2. For example, the prompt information may be a text prompt: "Recording is in progress. You can write content or draw graffiti in blank space...".

In addition, the electronic device may provide an input tool for inputting information. The input tool may include a keypad and a stylus toolbar.

In some possible cases, the electronic device may display one input tool in one user interface. When the input tool is displayed, a shortcut control for switching to another input tool may be provided.

In this way, in some possible cases, during recording, after completion of recording, and during playback of recording by the electronic device, the user may view a recording status in the area 11 by using the recording bar. In addition, in the foregoing processes, the electronic device may further implement processing on the recorded voice information by operating options in the area 12. In addition, in the foregoing processes, when the voice-to-text function is enabled, after converting a voice to a text, the electronic device may display, in the area 13, text information obtained through conversion for the user to view and edit. In addition, in the foregoing processes, the user may further implement a manual input by using the input tool, and display input information in the area 2 for the user to view. The manual input includes inputting a text, inserting a picture, and so on.

It should be understood that the foregoing description is merely an example provided to better understand the technical solution of this embodiment, and is not used as a unique limitation on this embodiment.

Based on FIG. 4A to FIG. 11, the following provides example descriptions of related content involved in displaying a speaker, filtering a speaker, and editing a speaker in the foregoing function 1 by using three scenarios as examples, namely, during recording, after recording ends, and during playback of recording.

The following provides the related content involved in displaying a speaker.

For the related content of displaying a speaker during recording, refer to the following example description of FIG. 4A to FIG. 4D.

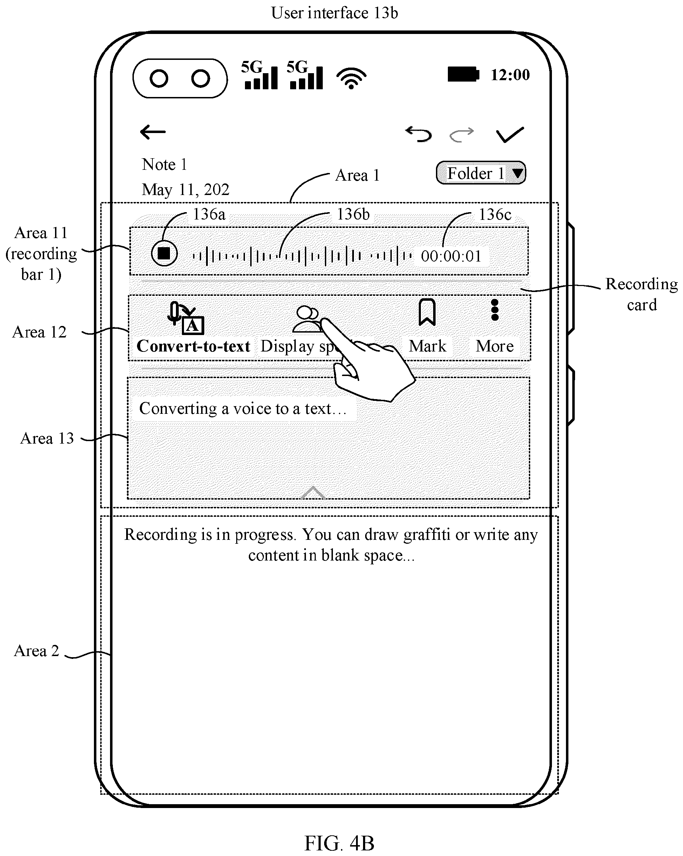

In a user interface 13b shown in FIG. 4A, in response to an operation (for example, a tap operation) on a convert-to-text control 137a (in a first state), an electronic device (for example, a mobile phone) may enable a voice-to-text function, and update a state of the convert-to-text control 137a from the first state (a style shown in FIG. 4A) to a second state (a style shown in FIG. 4B).

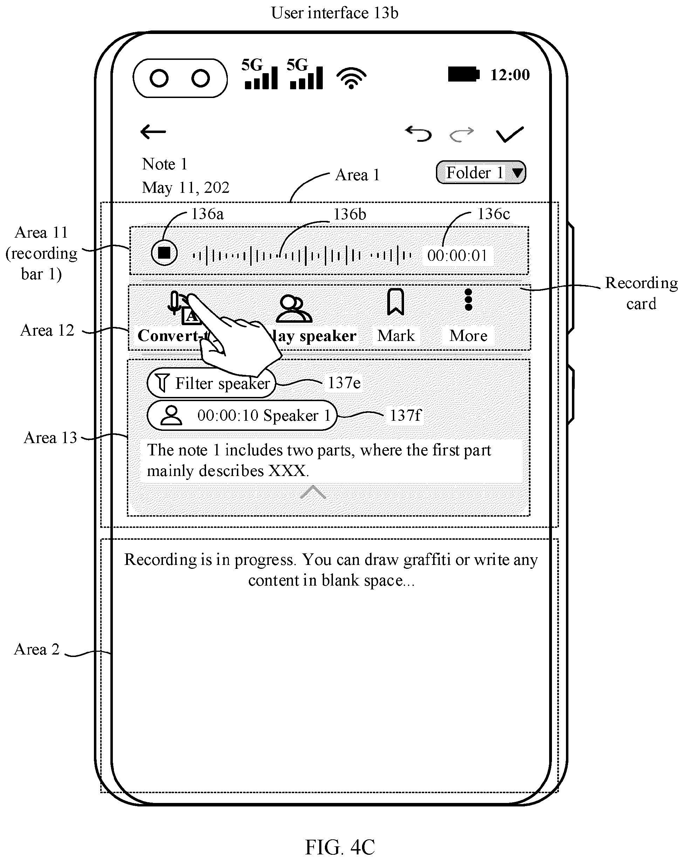

It can be learned from the foregoing description of the association between the convert-to-text control 137a and the display speaker control 137b that, when the state of the convert-to-text control 137a is the second state (the style shown in FIG. 4B), the state of the display speaker control 137b may be a non-third state, that is, the first state (the style shown in FIG. 4B) or the second state (the style shown in FIG. 4C). In this embodiment of this application, for example, the non-third state is the first state. Therefore, in response to the operation on the convert-to-text control 137a in the first state (the style shown in FIG. 4A), the electronic device enables the voice-to-text function, and updates the state of the convert-to-text control 137a from the first state (the style shown in FIG. 4A) to the second state (the style shown in FIG. 4B). In addition, the electronic device further updates the state of the display speaker control 137b from the third state (the style shown in FIG. 4A) to the first state (the style shown in FIG. 4B).

Referring to FIG. 4B, for example, after the voice-to-text function is enabled, the electronic device processes the collected sound signal to obtain a voice, converts the voice, and displays, in the area 13, a text obtained through conversion. To improve user experience, in a process of waiting for the electronic device to convert the collected sound signal into a text and display the text in the area 13, prompt information may be displayed in the area 13, for example, "Converting a voice to a text...". This prevents the following case: The user mistakenly considers that the voice-to-text function is not enabled, and repeatedly taps the convert-to-text control 137a, thereby causing constant switching between enabling and disabling of the voice-to-text function.

Still referring to FIG. 4B, for example, when the voice-to-text function is enabled, and when the user taps the display speaker control 137b in the first state, in response to the operation behavior, the electronic device enables the display speaker function, and updates the state of the display speaker control 137b from the first state (the style shown in FIG. 4B) to the second state (the style shown in FIG. 4C).

It can be learned from the foregoing description that after the display speaker function is enabled, the filter speaker capsule 137e is displayed in the area 13. After obtaining the text information through conversion based on the received voice information, the electronic device may further display at least one speaker capsule 137f in the area 13. The foregoing text information may include a plurality of statements. In some possible cases, the plurality of statements in the text information may come from a same speaker, or may come from different speakers. A speaker corresponding to each statement may be, for example, identified by identifying, according to a voiceprint recognition technology, the voice information that needs to be converted into a text, and then is determined. For related content of determining different speakers based on the voiceprint recognition technology, refer to the voiceprint recognition technology. Details are not described herein.

In addition, the foregoing division of a plurality of statements included in the text information may be, in some possible cases, division of pause duration when a speaker gives a speech in the voice information. For example, when pause duration between first speech content and second speech content in the voice information is greater than a specified duration threshold such as 1s, a text converted from the first speech content is classified into one statement, and a text converted from the second speech content is classified into another statement.

In another possible case, the division may alternatively be based on switching of a speaker, that is, a text converted from speech content corresponding to each speaker is classified into one statement.

It should be understood that the foregoing description is merely an example provided to better understand the technical solution of this embodiment, and is not used as a unique limitation on this embodiment.

For example, in some possible cases, a speaker profile picture and a speaker name that are displayed in each speaker capsule 137f may be set by default by the system. In some other possible cases, the speaker profile picture and the speaker name that are displayed in each speaker capsule 137f may alternatively be modified by editing a speaker. For related content of modifying, by editing a speaker, the speaker profile picture and the speaker name that are displayed in the speaker capsule, refer to the following description of FIG. 11. Details are not described herein.

It should be further understood that, when the voice-to-text function and the display speaker function are enabled during recording, the content displayed in the area 13 changes according to text information converted from voice information recorded in real time. For example, in FIG. 4C, text information 1 obtained through conversion based on voice information 1 is "The note 1 includes two parts, where the first part mainly describes XXX." In addition, it is determined, by using the voiceprint recognition technology, that the text information 1 currently obtained through conversion comes from a same speaker (by default, the first speaker is a speaker 1). In this case, when the text information 1 is displayed in the area 13, a speaker capsule 137f corresponding to the speaker 1 is displayed before the text information 1, and a default speaker profile picture and a speaker time such as "00:00:10" at which the speaker 1 starts to say "The note 1 includes two parts, where the first part mainly describes XXX." are displayed in the speaker capsule 137b.

For example, when the voice-to-text function and the display speaker function are enabled, if the electronic device collects another segment of voice information, such as voice information 2, the electronic device determines, based on the voiceprint recognition technology, that a voiceprint corresponding to the voice information 2 is different from a voiceprint corresponding to the voice information 1, that is, the voice information 2 is not a speech of the speaker 1. In this case, the electronic device may determine the speaker corresponding to the voice information 2 as a speaker 2, and display, in the area 13, a speaker capsule corresponding to the speaker 2 and corresponding text information, for example, "The second part mainly describes XXX." (not shown in FIG. 4C) that is obtained through conversion based on the voice information 2.

It should be noted that, in some possible cases, the area 13 may be fixed, thereby avoiding blocking the area 2, and avoiding affecting user input of non-voice information during recording. Corresponding to this case, the area 13 may be set to be a sliding panel. To be specific, the user moves a finger up and down in the area 13, so as to drive content of the area 13 to slide, thereby displaying text information that is not displayed in the current area.

It should be understood that the foregoing description is merely an example provided to better understand the technical solution of this embodiment, and is not used as a unique limitation on this embodiment.

Still referring to FIG. 4C, for example, after the user taps the convert-to-text control 137a in the second state, in response to the operation behavior, the electronic device disables the voice-to-text function, and updates the state of the convert-to-text control 137a from the second state (the style shown in FIG. 4C) to the first state (the style shown in FIG. 4D). It may be understood that after the voice-to-text function is disabled, the electronic device does not convert voice information into text information any more. Specifically, in this embodiment, the area 13 does not display new text information any more, but may retain the text information obtained through conversion based on the voice information before the voice-to-text function is disabled.

It can be learned from the foregoing description that, when the area 13 includes text information, even if the voice-to-text function is not enabled, the display speaker function can still be used. Therefore, when the voice-to-text function is disabled, and the electronic device is in the scenario shown in FIG. 4D, that is, when the convert-to-text control 137a is in the first state, the display speaker control 137b may still be in the second state. The text information already displayed in the area 13 still keeps the previous corresponding speaker capsule.

For example, in some other possible cases, if the text information obtained through conversion based on the voice information is still not displayed in the area 13 when the voice-to-text function is disabled, after the voice-to-text function is disabled, that is, after the state of the convert-to-text control 137a is updated from the second state to the first state, the state of the display speaker control 137b is updated from the non-third state to the third state, that is, regardless of whether the display speaker control 137b is in the first state or in the second state at this time, the state of the display speaker control 137b is updated to the third state.

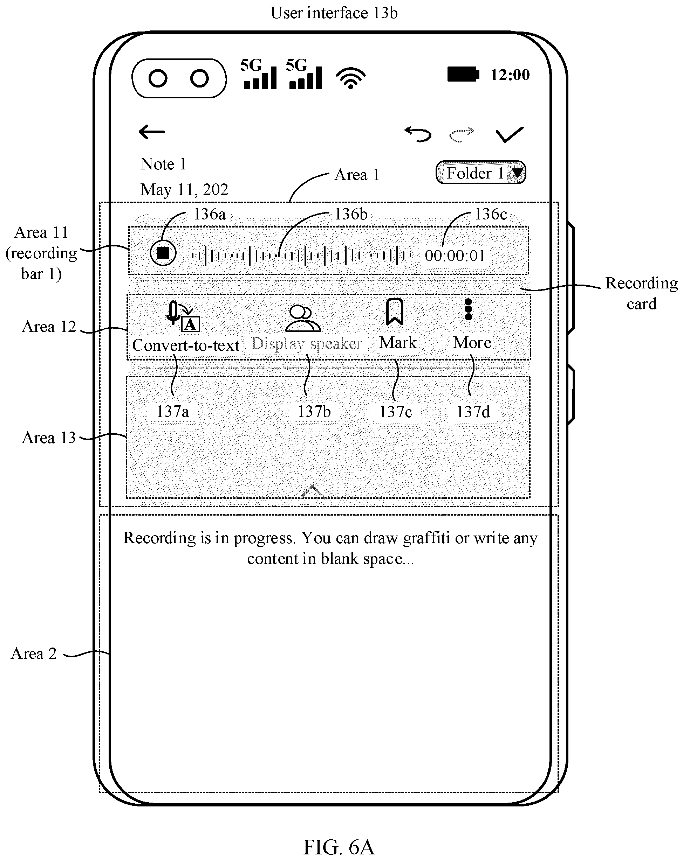

For the related content of displaying a speaker after recording ends, refer to the following example descriptions of FIG. 5A to FIG. 5C and FIG. 6A to FIG. 6D.

### Scenario 1:

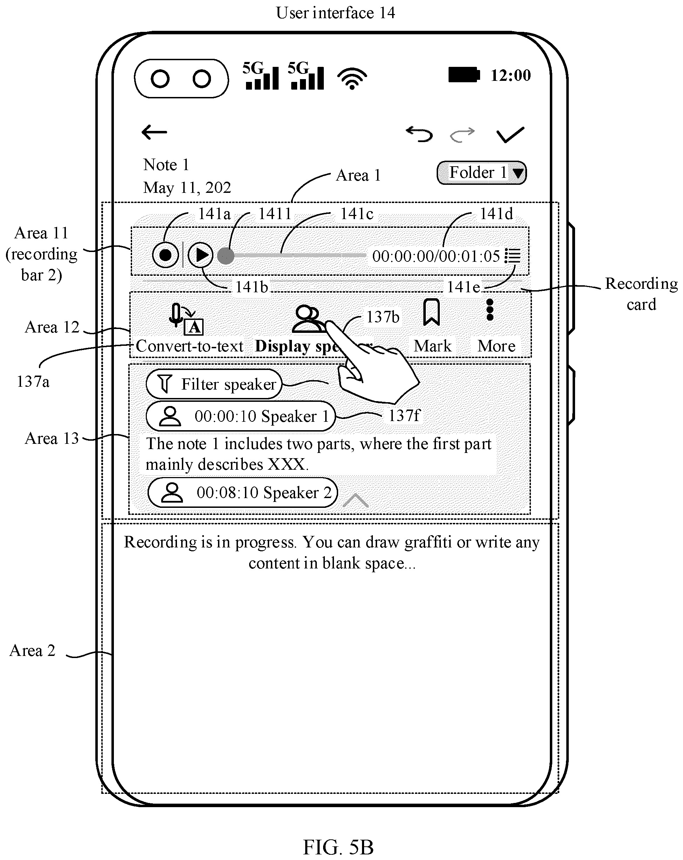

For example, during recording, the voice-to-text function is enabled (the convert-to-text control 137a is in the second state, for example, a style shown in FIG. 5A), and the display speaker function is enabled (the display speaker control 137b is in the second state, for example, a style shown in FIG. 5A), and the area 13 displays the filter speaker capsule 137e, the text information obtained through conversion based on the voice information, and speaker capsules 137f corresponding to different speakers. When the user taps the stop recording control 136a, in response to the operation behavior, the electronic device pauses recording and at the same time, displays a user interface 14 shown in FIG. 5B. To be specific, the recording bar displayed in the area 11 is updated from a style of a recording bar 1 shown in FIG. 5A to a style of a recording bar 2 shown in FIG. 5B.

In some possible cases, it may be set that when the user taps the stop recording control 136a to pause recording, the voice-to-text function is disabled at the same time. To be specific, when the recording bar is updated from the style of the recording bar 1 shown in FIG. 5A to the style of the recording bar 2 shown in FIG. 5B, the state of the convert-to-text control 137a displayed in the area 12 is also updated from the second state (the style shown in FIG. 5A) to the first state (the style shown in FIG. 5B).

Still referring to FIG. 5A, for example, when the voice-to-text function and the display speaker function are enabled during recording, the area 13 already displays the text information obtained through conversion based on the voice information, and displays the filter speaker capsule 137e and a speaker capsule 137f corresponding to each piece of text information. Therefore, when the recording is paused and the voice-to-text function is disabled, the display speaker function can still be used, that is, can still be kept in the previous second state (the style shown in FIG. 5B). Correspondingly, the area 13 still displays the text information that has been displayed, and displays the filter speaker capsule 137e and a speaker capsule 137f corresponding to each piece of currently displayed text information.

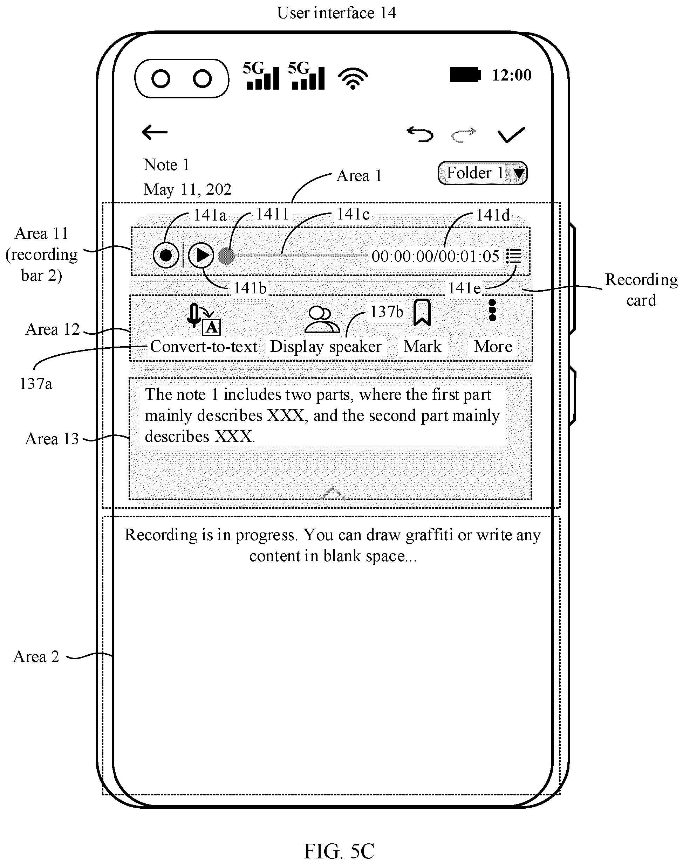

For example, in the user interface 14 shown in FIG. 5B, in response to an operation (for example, a tap operation) on the display speaker control 137b in the second state (the style shown in FIG. 5B), in response to the operation behavior, the electronic device disables the display speaker function, and updates the state of the display speaker control 137b from the second state (the style shown in FIG. 5B) to the first state (the style shown in FIG. 5C).

Referring to FIG. 5C, for example, when both the voice-to-text function and the display speaker function are disabled, the area 13 no longer displays text information obtained through conversion based on new voice information, but may continue to display the text information that has been obtained through conversion and displayed in the area 13. In addition, because the display speaker function is also disabled, the area 13 no longer displays the filter speaker capsule and the speaker capsule, but directly displays the previous text information obtained through conversion based on the voice information, for example, "The note 1 includes two parts, where the first part mainly describes XXX, and the second part mainly describes XXX."

In addition, it can be learned from the foregoing description that when the area 13 includes the text information, the display speaker function can be used, that is, the display speaker control 137b is in the non-third state. For example, in FIG. 5C, the display speaker control 137b is in the first state.

### Scenario 2:

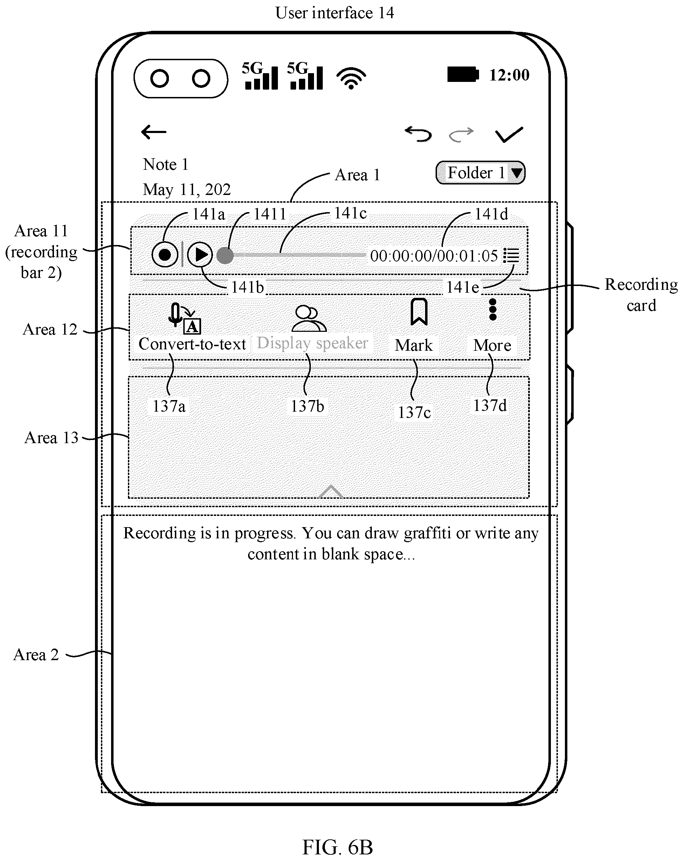

For example, during recording, the voice-to-text function is not enabled (the convert-to-text control 137a is in the first state, for example, a style shown in FIG. 6A), and the display speaker function is not enabled (the display speaker control 137b is in the third state, for example, a style shown in FIG. 6A). When the user taps the stop recording control 136a, in response to the operation behavior, the electronic device pauses recording and at the same time, displays a user interface 14 shown in FIG. 6B. To be specific, the recording bar displayed in the area 11 is updated from a style of a recording bar 1 shown in FIG. 6A to a style of a recording bar 2 shown in FIG. 6B.

Before the recording is paused, the voice-to-text function or the display speaker function is not enabled. Therefore, the area 13 does not display the text information obtained through conversion based on the voice information. Therefore, after the recording is paused, the convert-to-text control 137a continues to be kept in the first state, and the display speaker control 137b continues to be kept in the third state.

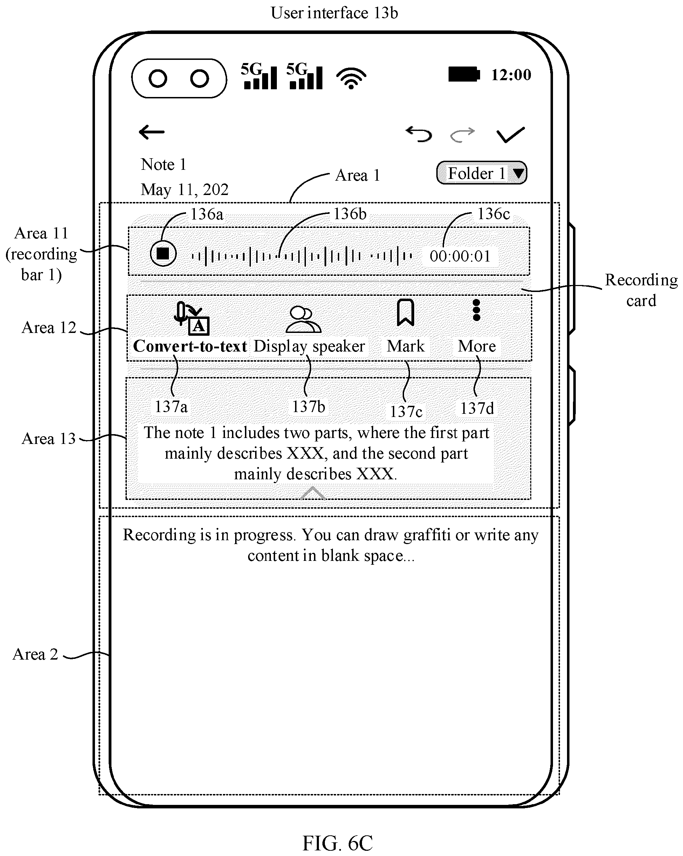

In addition, it should be noted that, in the user interface 14 shown in FIG. 6B, after the user taps the convert-to-text control 137a in the first state (the style shown in (1) or FIG. 6B), in response to the operation behavior, the electronic device updates the state of the convert-to-text control 137a from the first state to the second state (the style shown in FIG. 6C), and displays, in the area 13, the text information obtained through conversion based on the recorded voice information, for example, "The note 1 includes two parts, where the first part mainly describes XXX, and the second part mainly describes XXX." Because the voice-to-text function is enabled, the state of the display speaker control 137b is also updated from the third state (the style shown in (1) or FIG. 6B) to the non-third state (the first state is used as an example in this embodiment, for example, the style shown in FIG. 6C). In this case, after the user taps the display speaker control 137b in the first state, in response to the operation behavior, the electronic device updates the state of the display speaker control 137b from the first state to the second state (a style shown in (4) inFIG. 6), and displays, in the area 13, a speaker capsule indicating different speakers. In this way, when the area 13 displays the text information obtained through conversion based on the voice information, the area 13 also displays the filter speaker capsule and the speaker capsule.

For the related content of displaying a speaker during playback of recording, refer to the following example descriptions of FIG. 7A to FIG. 7D.

For example, the area 13 displays the text information obtained through conversion based on the voice information, for example, "The note 1 includes two parts, where the first part mainly describes XXX." After the recording ends (or after the recording is paused), the user disables the voice-to-text function. To be specific, a style of the recording bar in the area 11 is shown in FIG. 7A, and a style of each control in the area 12 is shown in FIG. 7A. In this case, the display speaker function can be used. If the display speaker function is not disabled by the user all the time, that is, the display speaker control 137b is always of the style shown in FIG. 7A, the area 13 displays the filter speaker capsule, for example, the filter speaker capsule 137e shown in FIG. 7A, and a speaker capsule corresponding to the piece of text information "The note 1 includes two parts, where the first part mainly describes XXX."

For example, still in an example in which the speaker corresponding to the piece of text information "The note 1 includes two parts, where the first part mainly describes XXX." is the foregoing speaker 1, and a speaking time corresponding to the piece of text information is "00:00:10", the area 13 displays the speaker capsule 137f shown in FIG. 7A.

In addition, it should be noted that if the currently recorded voice information includes speeches of a plurality of speakers, for example, text information that may be converted from an entire voice segment includes "The note 1 includes two parts, where the first part mainly describes XXX." corresponding to the speaker 1, and "the second part mainly describes XXX." corresponding to the speaker 2. In some possible scenarios, as shown in FIG. 7A, after the electronic device obtains the text information corresponding to the speaker 1 through conversion, the user disables the voice-to-text function. In this case, the electronic device stops converting voice information into text information, and consequently, the text information corresponding to the speaker 2 is not obtained through conversion. In this case, the area 13 does not display the text information corresponding to the speaker 2 or the speaker capsule corresponding to the speaker 2, for example, the style of the area 13 shown in FIG. 7A.

Still referring to FIG. 7A, for example, after the user taps the start playback control 141b in the user interface 14, in response to the operation behavior, the electronic device starts to play the recorded voice segment. At the same time, the start playback control 141b in the recording bar 2 shown in FIG. 7A is replaced with the pause playback control 141f shown in FIG. 7B, so as to obtain a recording bar in a state 3, for example, a recording bar 3 shown in FIG. 7B.

Referring to FIG. 7B, for example, the recording bar 3 may further include other controls such as a start recording control 141a, a playback progress bar 141c, a recording playback progress control 1411, a playback time indicator 141d, and a voice menu control 141e. In a process of playing the recorded voice segment, the recording playback progress control 1411 continuously changes with the playback progress, and at the same time, a playback time displayed in the playback time indicator 141d also changes accordingly. For example, when playback is performed for 7s, the recording playback progress control 1411 may be located at a position in a user interface 15 shown in FIG. 7B, and content displayed in the playback time indicator 141d is also updated from "00:00:00/00:01:05" shown in FIG. 7A to "00:00:07/00:01:05".

Still referring to FIG. 7B, for example, because the voice-to-text function is not enabled currently, in a process of playing a recorded voice segment (with voice duration being "00:01:05"), the text information displayed in the area 13 does not change. In other words, the area 13 still displays only the text information "The note 1 includes two parts, where the first part mainly describes XXX." corresponding to the speaker 1, and a speaker capsule corresponding to the speaker 1. In this case, when the user taps the convert-to-text control 137a in the first state (the style shown in FIG. 7B), in response to the operation behavior, the electronic device enables the voice-to-text function, and updates the state of the convert-to-text control 137a from the first state (the style shown in FIG. 7B) to the second state (the style shown in FIG. 7C). In this way, the electronic device may continue to perform voice-to-text processing, and continue to display, in the area 13, new text information obtained through conversion based on voice information, for example, the text information "The second part mainly describes XXX." corresponding to the speaker 2, and the speaker capsule corresponding to the speaker 2. To be specific, after the text information corresponding to the speaker 1 is displayed, for example, the area 13 is shown in FIG. 7C.

In addition, it should be noted that, in some possible cases, the content displayed in the area 13 may be associated with the playback progress of the recording bar in the area 11. To be specific, when the corresponding voice information is played, content corresponding to the voice information is synchronously displayed in the area 13.

In addition, it should be further noted that, in some other possible cases, it may alternatively be set that when the voice-to-text function is enabled during playback, the entire recording is directly converted into corresponding text information, which is displayed in the area 13, and the corresponding speaker capsule is displayed. When the corresponding voice information is played, state switching is performed on the content displayed in the area 13, that is, a sound-text synchronization function mentioned in the following description. For specific implementation, refer to the description part in FIG. 26. Details are not described herein.

It should be understood that the foregoing description is merely an example provided to better understand the technical solution of this embodiment, and is not used as a unique limitation on this embodiment. The following describes an implementation procedure of the foregoing scenario in detail.

Still referring to FIG. 7C, for example, in the user interface 15 shown in FIG. 7C, after the user taps the display speaker control 137b in the second state, in response to the operation behavior, the electronic device disables the display speaker function, and updates the state of the display speaker control 137b from the second state (the style shown in FIG. 7C) to the first state (the style shown in FIG. 7D).

Referring to FIG. 7D, for example, after the display speaker function is disabled, the area 13 no longer displays the filter speaker capsule and the speaker capsules respectively corresponding to the speaker 1 and the speaker 2, but directly displays text information obtained through conversion based on a currently played voice segment, for example, "The note 1 includes two parts, where the first part mainly describes XXX, and the second part mainly describes XXX."

It can be learned from the foregoing descriptions of FIG. 4A to FIG. 7D that, the operation of displaying a speaker may be performed in any stage of the following: during recording, after recording ends, and during playback of recording. In other words, the display speaker function in the function 1 may be implemented in a full scenario.

The following provides the related content involved in filtering a speaker.

The display speaker function may be implemented in a full scenario. After the display speaker function is enabled, the area 13 displays a filter speaker capsule when displaying the text information. Therefore, the filter speaker function may also be implemented in a full scenario.

Referring to FIG. 8, for example, for the filter speaker capsule 137e displayed in the area 13 in any scenario, after the user taps the filter speaker capsule 137e, in response to the operation behavior, the electronic device may display a filter speaker window 137g in a current user interface, such as a corresponding user interface 13b during recording, a corresponding user interface 14 after recording ends, or a corresponding user interface 15 during playback of recording.

For example, the filter speaker window 137g may include a selection control 137g-1 corresponding to an "all" option, a selection control 137g-1 corresponding to each currently identified speaker option (for example, a selection control 137g-1 corresponding to a speaker 1 and a selection control 137g-1 corresponding to a speaker 2 in FIG. 8), and a "cancel" option 137g-2 and an "OK" option 137g-3.

When the user taps the "cancel" option, the electronic device does not store an operation performed by the user in the filter speaker window 137g this time, but continues to use a selection made when a speaker is filtered last time, and closes the filter speaker window 137g.

When the user taps the "OK" option, the electronic device stores an operation performed by the user in the filter speaker window 137g this time. For example, when all identified speakers are selected during last speaker filtering, but only the speaker 2 is selected this time, after the user taps the "OK" option, the electronic device closes the filter speaker window 137g, and then the area 13 displays only text information corresponding to the speaker 2 (as shown in FIG. 9D).

For example, the user may alternatively select some or all speakers by using the filter speaker window 137g. For example, after the user sets, in the foregoing manner, that only the text information corresponding to the speaker 2 is displayed, the user taps the filter speaker capsule again, and additionally selects the speaker 1 by using the pop-up filter speaker window 137g. In other words, when the speaker 2 is kept selected, the speaker 1 is further selected. After a specified speaker is selected, and after the "OK" option is tapped, the electronic device closes the filter speaker window 137g, and the area 13 displays a speaker capsule and text information that correspond to the speaker 1, and a speaker capsule and text information that correspond to the speaker 2 (as shown in FIG. 9A).

A specific change of a user interface involved in the process is shown in FIG. 9A to FIG. 9D. For specific implementation of the operation, refer to the following related descriptions of FIG. 9A to FIG. 9D. Details are not described herein.

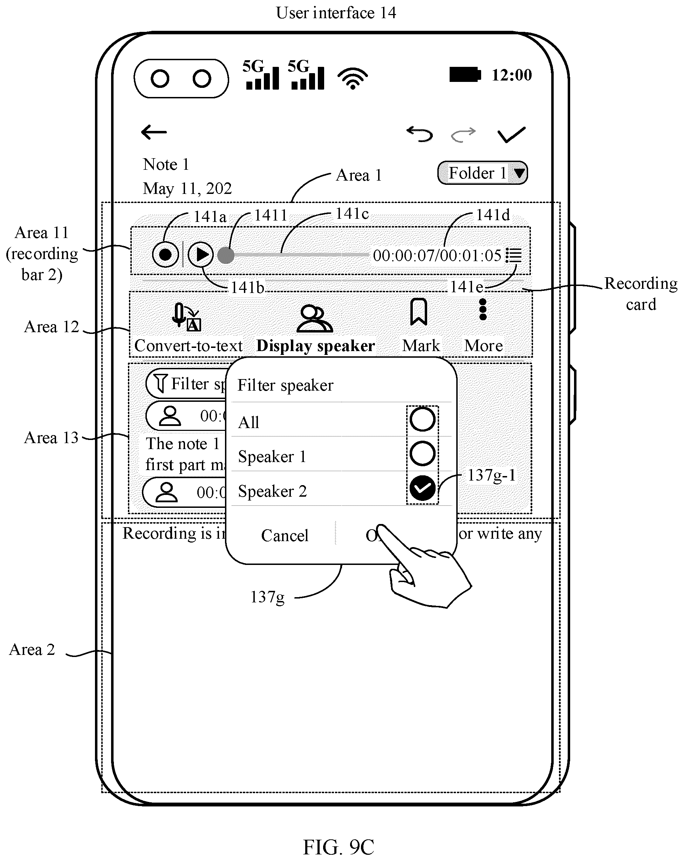

When the selection control 137g-1 corresponding to the "all" option is selected, that is, when the selection control 137g-1 is of a style shown in FIG. 8, selection controls corresponding to all speakers displayed in the filter speaker window 137g are selected by default. Correspondingly, when the user taps on the selection control 137g-1 (in the selected state, the style shown in FIG. 8) corresponding to the "all" option again, in response to the operation behavior, the electronic device cancels selection of the selection controls corresponding to all the speakers, that is, states of all the selection controls 137g-1 shown in the filter speaker window 137g are all updated from the selected state to an unselected state (for example, the styles of the selection controls 137g-1 corresponding to the "all" option and the "speaker 1" option shown in FIG. 9C).

It should be noted that, in some possible cases, it may be set that after the display speaker function is enabled, all identified speakers are displayed by default. To be specific, in the filter speaker window 137g that pops up after the filter speaker capsule 137e is tapped, selection controls corresponding to all displayed speakers are all selected by default, as shown in FIG. 8.

To help the user learn whether speaker filtering has been performed, in this embodiment, it is set that when the selection controls corresponding to all the speakers are all selected, the filter speaker capsule 137e is in a state A, for example, the style shown in FIG. 9A. When the user reselects a speaker by using the filter speaker window 137g, that is, when the selection controls corresponding to all the speakers are not all selected, the filter speaker capsule 137e is in a state B, for example, the style shown in FIG. 9D.

It should be understood that the foregoing description is merely an example provided to better understand the technical solution of this embodiment, and is not used as a unique limitation on this embodiment. The given style is also for ease of understanding, and is not limited to the form shown in this embodiment during specific implementation.

Based on FIG. 9A to FIG. 9D, the following provides example descriptions of related content involved in filtering a speaker by using an example of a scenario in which after recording ends, the user triggers the filter speaker capsule displayed in the area 13 to implement the filter speaker function.

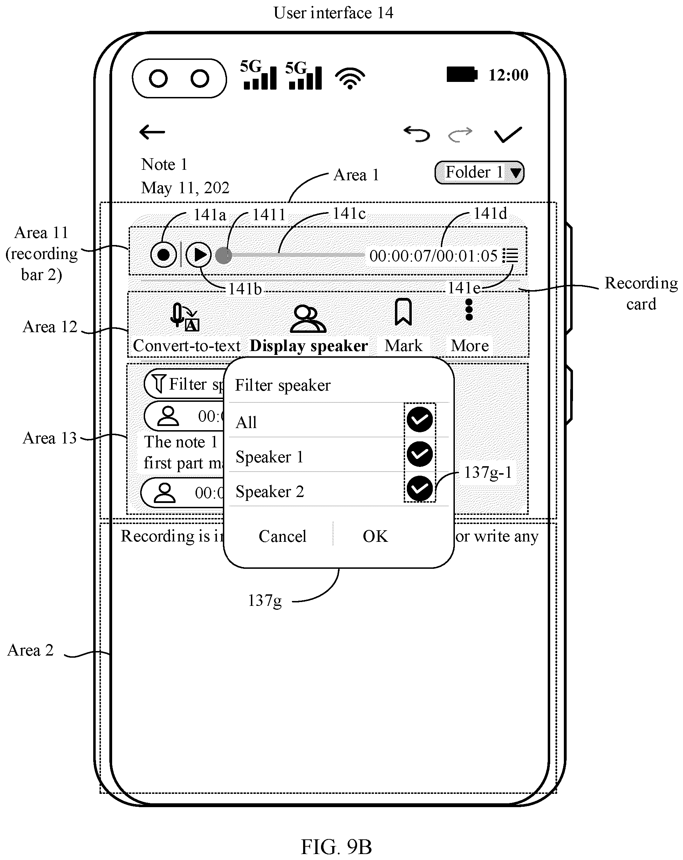

As shown in the user interface 14 in FIG. 9A, in response to an operation (for example, a tap operation) on the filter speaker capsule 137e in the state A, in response to the operation behavior, the electronic device displays the filter speaker window 137g in the user interface 14, as shown in FIG. 9B.

For example, because the voice-to-text function is currently disabled, if the text information that is obtained through conversion and that is displayed in the area 13 includes the text information corresponding to the speaker 1 and the speaker 2, speakers that are available for the user to select and that are displayed in the filter speaker window 137g include the speaker 1 and the speaker 2.

For example, if the user only wants to display the text information corresponding to the speaker 2 in the area 13, a feasible operation manner is as follows: First, tap the option control 137g-1 corresponding to the "all" option. In this way, the states of all the selection controls 137g-1 shown in the filter speaker window 137g may be updated from the selected state to the unselected state. Then, tap the selection control 137g-1 corresponding to the speaker 2 in this case. In this way, the state of the selection control 137g-1 corresponding to the speaker 2 may be updated from the unselected state to the selected state, for example, the style shown in FIG. 9C.

For example, another feasible operation manner is directly tapping the selection control 137g-1 in the selected state corresponding to the speaker 1. In this way, the state of the selection control is updated from the selected state to the unselected state. In addition, the selection control corresponding to the "all" option is also automatically updated from the selected state to the unselected state. This can ensure that only the selection control 137g-1 corresponding to the speech 2 remains in the selected state.

For example, after the user taps the "OK" option in the filter speaker window 137g in the user interface 14 shown in FIG. 9C, in response to the operation behavior, the electronic device stores a selection made by the user by filtering a speaker this time, and closes the filter speaker window 137g.

For example, after the filter speaker window 137g is closed, the state of the filter speaker capsule 137e displayed in the area 13 is updated from the state A to the state B (for example, the style with the font being boldfaced, as shown in FIG. 9D). Correspondingly, after the operation of filtering a speaker is performed, when the selected speaker is only the speaker 2, the text information displayed in the area 13 includes only the text information corresponding to the speaker 2, and the speaker capsule displayed in the area 13 includes only the speaker capsule (for example, the speaker capsule 137f) corresponding to the speaker 2, as shown in FIG. 9D.

It should be understood that the foregoing description is merely an example provided to better understand the technical solution of this embodiment, and is not used as a unique limitation on this embodiment.

In this way, filtering of the speaker is implemented, so that the user can quickly select the text information corresponding to the specified speaker based on an actual requirement. In addition, the speaker capsule further displays a speaking start time of each piece of text information, so that the user can quickly locate voice information of the specified speaker.

In addition, it should be further noted that, in some possible cases, the filter speaker capsule 137e displayed in the area 13 may be set to have a sticky header effect. To be specific, the filter speaker capsule 137e is always fixed at a specified position in the area 13, for example, a position shown in (1) in FIG. 10. When the user slides up in the area 13 shown in (1) in FIG. 10 in an arrow direction, the filter speaker capsule 137e does not disappear with the sliding, as shown in (2) in FIG. 10. This can help the user perform the operation of filtering a speaker by using the filter speaker capsule 137e at any time.

The following provides the related content involved in editing a speaker.

The display speaker function may be implemented in a full scenario. After the display speaker function is enabled, the area 13 displays a speaker capsule 137f corresponding to each piece of identified text information when displaying the text information. Therefore, each speaker capsule 137f may alternatively be tapped in a full scenario, but a response made after the tapping varies.

Based on FIG. 11, the following provides example descriptions of responses made by the electronic device after the user separately taps the speaker capsule 137f during recording, after recording ends, and during playback of recording.

Referring to (1) in FIG. 11, a recording card (hereinafter referred to as a recording card 1) during recording is shown as an example. To avoid modifying information about a speaker during recording, and to further avoid causing impact on speaker information corresponding to subsequent text information obtained through conversion, in this embodiment, it is set that when any speaker capsule 137f is tapped during recording, the electronic device does not respond. To be specific, after the user taps any speaker capsule 137f, the current user interface does not display the renaming window 137h shown in (3) in FIG. 11, and the recording bar 1 in the state 1 does not change any more. In other words, the style of the recording card 1 is still maintained.

Referring to (2) in FIG. 11, a recording card (hereinafter referred to as a recording card 2) after recording ends is shown as an example. After the user taps any speaker capsule in the recording card 2, such as the speaker capsule 137f corresponding to the speaker 1, in response to the operation behavior, the electronic device displays, in the current user interface such as the foregoing user interface 14, the renaming window 137h shown in (3) in FIG. 11.

Referring to (3) in FIG. 11, for example, the renaming window 137h may include a speaker editing area 137h-1. When the renaming window 137h pops up, the speaker editing area 137h-1 displays a speaker name allocated by the system by default, such as the speaker 1. After tapping the speaker editing area 137h-1, the user may delete the "speaker 1" by using a deletion option in a pop-up system keypad, and edit a new name for the speaker 1, such as "Zhang San".

Still referring to (3) in FIG. 11, for example, the renaming window 137h may further include a selection control 137h-2. After the selection control 137h-2 is selected, in the speaker capsule 137f corresponding to all the speakers 1 displayed in the area 13, the names of the speakers 1 are all changed to "Zhang San".

Still referring to (2) in FIG. 11, for example, the renaming window 137h may further include a "cancel" option and an "OK" option.

When the user taps the "cancel" option, in response to the operation behavior, the electronic device closes the renaming window 137h, but does not store an operation performed by the user in the renaming window 137h. In this case, the speaker name displayed in the speaker capsule corresponding to the speaker 1 displayed in the area 13 in the recording card 2 is still the speaker 1 rather than "Zhang San", for example, the recording card 2 shown in (2) in FIG. 11.

When the user taps the "OK" option, in response to the operation behavior, the electronic device closes the renaming window 137h, and stores an operation performed by the user in the renaming window 137h. In this case, the speaker name displayed in the speaker capsule corresponding to the speaker 1 displayed in the area 13 in the recording card 2 is updated to "Zhang San", for example, the recording card 2 shown in (4) in FIG. 11.

It should be understood that the foregoing description is merely an example provided to better understand the technical solution of this embodiment, and is not used as a unique limitation on this embodiment.

Referring to (5) in FIG. 11, a recording card (hereinafter referred to as a recording card 3) during playback of recording is shown as an example. When the user taps any speaker capsule in the area 13, such as the speaker capsule 137f corresponding to "Zhang San", the electronic device jumps to the time point "00:00: 10" in response to the operation behavior. For example, when a time displayed in a playback time indicator 141d is "00:00:27/00:01:05", and the recording playback progress control 1411 is at a position shown in (5) in FIG. 11, after the user taps the speaker capsule 137f corresponding to "Zhang San", the electronic device jumps to a time point of "00:00:07" in response to the operation behavior. In this case, the time displayed in the playback time indicator 141d is changed to "00:00:07/00:01:05", and the recording playback progress control 1411 is at a position shown in (6) in FIG. 11.

It should be understood that the foregoing description is merely an example provided to better understand the technical solution of this embodiment, and is not used as a unique limitation on this embodiment.

In this way, the speaker capsule is bound to different scenarios, so that when the speaker capsule is tapped in different scenarios, the electronic device can make a response suitable for the current scenario, and is better applicable to an actual use requirement.

Based on FIG. 12 to FIG. 20, the following provides example descriptions of related content involved in adding a label and deleting a label in the foregoing function 2 by using three scenarios as examples, namely, during recording, after recording ends, and during playback of recording.

The following provides the related content involved in adding a label.

For the related content of adding a label (which may also be referred to as adding a mark) during recording, refer to the following example descriptions of FIG. 12 and FIG. 13.

In a recording card shown in (1) in FIG. 12, during recording of voice information, the user may tap the mark control 137c in the area 12 at any time.

Still referring to (1) in FIG. 12, for example, it is assumed that the user taps the mark control 137c at a moment of "00:00:05" during recording of voice information. In response to the operation behavior, the electronic device adds a label to a position corresponding to "00:00:05" on the recording status bar 136b, for example, a label 136d-1 shown in (2) in FIG. 12.

For example, in a process in which the user does not tap the stop recording control 136a and continues to record voice information, for example, at a moment of "00:00:11" shown in (2) in FIG. 12, the mark control 137c is tapped again. In response to the operation behavior, the electronic device adds a label to a position corresponding to "00:00:11" on the recording status bar 136b, for example, a label 136d-2 shown in (4) in FIG. 12.

In this way, during recording, the user may tap the mark control 137c at any time as required, and further add a corresponding label to a specified position. This helps quickly locate the specified position subsequently based on the added label.

In addition, it should be further noted that the foregoing description is merely an example provided to better understand the technical solution of this embodiment, and is not used as a unique limitation on this embodiment. In an actual application, a corresponding recording card style during recording is not limited to that shown in FIG. 12, that is, not limited to enabling the voice-to-text function and the display speaker function. In other words, when the voice-to-text function or the display speaker function is not enabled, the user may alternatively trigger the electronic device to add a label to the recording content according to the foregoing method.

In addition, it should be further noted that, in some possible cases, it may be set that after a specified area of the recording status bar 136b or the area 11 is tapped by the user, in response to the operation behavior, the electronic device jumps to a user interface 13c shown in (1) in FIG. 13.

Referring to (1) in FIG. 13, for example, the user interface 13c may include one or more controls. The one or more controls include but are not limited to a return control 138a for returning a user interface in which the recording card shown in FIG. 12 is located, a recording status bar 138b (corresponding to a recording status bar 136b), a recording progress control 138c indicating current recording progress, a recording duration control 138d (corresponding to recording duration 136c) for displaying current recording duration, a mark control 138e (corresponding to a mark control 137c), a stop recording control 138f (corresponding to a stop recording control 136a), and a pause recording control 138g.

For example, when the user taps the stop recording control 138f or the stop recording control 136a, the electronic device ends recording of the current recording segment in response to the operation behavior. To be specific, when the user taps the start recording control 141a (or the start recording control 142e shown in FIG. 15) again after tapping the stop recording control 138f or the stop recording control 136a, the electronic device starts recording of a new recording segment in response to the operation behavior.

For example, when the user taps the pause recording control 138g, in response to the operation behavior, the electronic device pauses recording of the current recording segment, and switches the pause recording control 138g to a set style of restarting recording (not shown in the figure). For example, after the user taps the pause recording control 138g of the set style of restarting recording, the electronic device continues recording of the recording segment in response to the operation behavior. In other words, the voice information for which recording is restarted still belongs to the recording segment rather than a new recording segment.

In addition, it may be understood that during recording, after the user adds a label by using the mark control 137c or the mark control 138e, the user interface 13c may further include a label detail control corresponding to each label, for example, the label detail control 138h shown in (2) in FIG. 13.

Referring to (2) in FIG. 13), for example, the label detail control 138h may include a label name (which may be named by default based on an addition sequence) of a corresponding label, and a specific recording time corresponding to the label.

For example, in some possible implementations, it may be set that when the user taps the mark detail control 138h, a window for renaming a label is displayed, so that the user renames the label name as required. Related content of the window for renaming a label and related content of renaming a label name are not described in this embodiment of this application.

For the related content of adding a label after the recording ends, refer to the following example descriptions of FIG. 14 and FIG. 15.

For the recording card shown in (1) in FIG. 14, after the recording ends, the user may drag the recording playback progress control 1411 to an expected position as required, and then tap the mark control 137c to add a label at a time point corresponding to a current position of the recording playback progress control 1411. For example, the user taps the mark control 137c when dragging the recording playback progress control 1411 from the position shown in FIG. 4A to the position corresponding to the time of "00:00:06/00:01:05" shown in (2) in FIG. 14. In response to the operation behavior, the electronic device adds a label to the position corresponding to "00:00:06/00:01:05" on the playback progress bar 141c, for example, the label 141 shown in (3) in FIG. 14.

In this way, after the recording ends, the user drags the recording playback progress control 1411 to a specified position of the playback progress bar 141c, and then taps the mark control 137c, so as to add a corresponding label to the specified position. This helps quickly locate the specified position subsequently based on the added label.

In addition, it should be further noted that the foregoing description is merely an example provided to better understand the technical solution of this embodiment, and is not used as a unique limitation on this embodiment. In an actual application, a corresponding recording card style during recording is not limited to that shown in FIG. 14, that is, not limited to enabling the voice-to-text function and the display speaker function.

In addition, it should be further noted that, in some possible cases, it may be set that after a specified area of the playback progress bar 141c or the area 11 is tapped by the user, in response to the operation behavior, the electronic device jumps to a user interface 14a shown in FIG. 15.

Referring to FIG. 15, for example, the user interface 14a may include one or more controls. The one or more controls include but are not limited to a return control 142a for returning a user interface in which the recording card shown in FIG. 14 is located, a name (for example, "20230421_133449" shown in FIG. 15, which may be specifically generated based on a timestamp) 142b of the recording segment, the added label such as 143a-1, 143a-2, and 143a-3, a playback time indicator 142c, a label detail control 142d corresponding to each label, a start playback control 142e (corresponding to a start playback control 141b), a convert-to-text control 143a (corresponding to a convert-to-text control 137a) corresponding to the voice-to-text function, an edit control 143b, a skip mute control 143c, a speed multiplier control 143d, a mark control 143e (corresponding to a mark control 137c), and the like.

Still referring to FIG. 15, for example, each label detail control 142d may include a label name (which may be named by default based on an addition sequence) of a corresponding label, and a specific recording time corresponding to the label.

For example, in some possible implementations, it may be set that when the user taps the mark detail control 142d, a window for renaming a label is displayed, so that the user renames the label name as required. Related content of the window for renaming a label and related content of renaming a label name are not described in this embodiment of this application.

In addition, it should be further understood that the added labels displayed in the recording card shown in FIG. 14 and in the user interface 14a in FIG. 15 include not only the label added when the user taps the mark control 137c after the recording ends, but also the label added when the user taps the mark control 137c during the recording.

For the related content of adding a label during playback of recording, refer to the following example description of FIG. 16.

In a recording card shown in (1) in FIG. 16, during playback of recording, the user may tap the mark control 137c in the area 12 at any time.

Still referring to (1) in FIG. 16, for example, it is assumed that the user taps the mark control 137c at a moment of "00:00: 10" during playback of voice information. In response to the operation behavior, the electronic device adds a label to a position corresponding to "00:00: 10" on the playback progress bar 141c, for example, a label 141g-1 shown in (2) in FIG. 16.

In this way, during playback of recording, the user may tap the mark control 137c at any time as required, and further add a corresponding label to a specified position. This helps quickly locate the specified position subsequently based on the added label.

In addition, it should be further noted that the foregoing description is merely an example provided to better understand the technical solution of this embodiment, and is not used as a unique limitation on this embodiment. In an actual application, a corresponding recording card style during recording is not limited to that shown in FIG. 16, that is, not limited to enabling the voice-to-text function and the display speaker function.

In addition, it should be further noted that, in some possible cases, during playback of recording, the user may also drag the recording playback progress control 1411 to a specified position of the playback progress bar 141c, and then tap the mark control 137c, so as to add a corresponding label to the specified position. This helps quickly locate the specified position subsequently based on the added label.

In addition, it should be further noted that, in some other possible cases, to avoid redundancy of the label, it may be set that a label cannot be added again within a specified time before and after each label, for example, 5 ms. In other words, a time interval between any two adjacent labels is not less than 5 ms.

In addition, it should be further noted that the added label displayed in the recording card shown in FIG. 16 includes not only a label added when the user taps the mark control 137c during playback of recording, but also a label added when the user taps the mark control 137c during recording and after recording ends.

The following provides the related content involved in deleting a label.

### Deletion manner 1:

For example, in some possible cases, for example, in the user interface 13c shown in (2) in FIG. 13 or the user interface 14a shown in FIG. 15, the user may slide rightward the label detail control that needs to be deleted, and then the current user interface displays a label deletion control for deleting the current label.

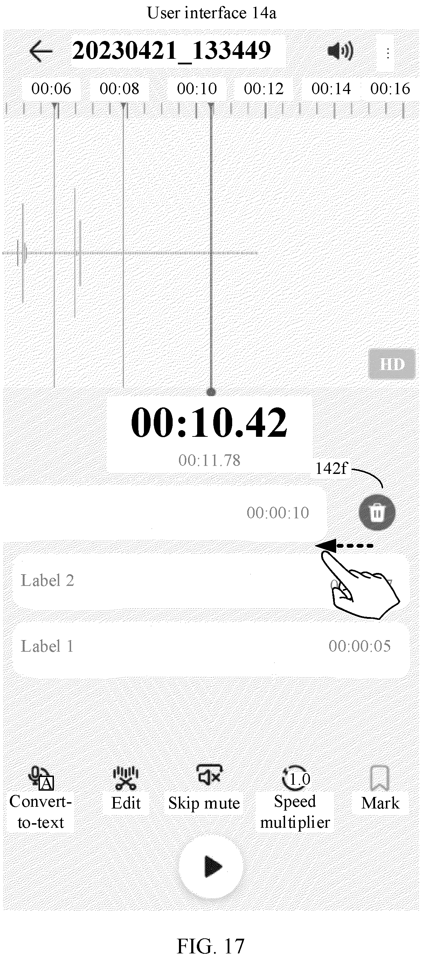

The user interface 14a shown in FIG. 15 is used as an example. If the user wants to delete a label 3, the user may slide leftward a label detail control 142d corresponding to the label 3 at the label detail control. In response to the operation behavior, the electronic device displays the label deletion control 142f shown in FIG. 17.

For example, after the user interface 14a displays the label deletion control 142f corresponding to the label 3, the user taps the label deletion control 142f, and in response to the operation behavior, the electronic device deletes the label 3 and deletes the label 143a-3 from the current recording. In this way, deletion of a specified label is implemented.

### Deletion manner 2:

For example, in some other possible cases, the user may tap a "more" control 137d in the area 12 in the recording card corresponding to any scenario (during recording, after recording ends, and during playback of recording), as shown in (1) in FIG. 18.

For example, after the user taps the "more" control 137d, in response to the operation behavior, the electronic device may display, in the user interface shown in (1) in FIG. 18, a management window 139a shown in (2) in FIG. 18.

For example, in some possible cases, for example, a scenario in which the foregoing functions 2, 3, and 4 are implemented, the management window 139a may include a sound reception setting entry 139a-1, a label management entry 139a-2, and a sharing entry 139a-3. For related content of the sharing entry 139a-3, refer to the following descriptions of FIG. 21 and FIG. 22. Details are not described herein. For related content of the sound reception setting entry 139a-1, refer to the following descriptions of FIG. 23 and FIG. 24. Details are not described herein.

Referring to (2) in FIG. 18, for example, when the user taps the label management entry 139a-2, in response to the operation behavior, the electronic device may display, in the current user interface, a label management window 139b shown in (3) in FIG. 18.

Referring to (3) in FIG. 18, for example, the label management window 139b may display label names of all labels included in the current recording segment, a time corresponding to each label, and a control for deleting a corresponding label, for example, "×" shown in the figure.

In this way, the user may delete each label that needs to be deleted from the label management window 139b by tapping "×" corresponding to the label. After the operation is completed, if the user taps the "OK" option shown in the label management window 139b, in response to the operation behavior, the electronic device deletes a label just deleted from the recording segment, for example, the label corresponding to the label 3, such as 143a-3 mentioned in the foregoing embodiments.

For example, after the user taps "×" corresponding to each label that needs to be deleted, if the user does not tap the "OK" option shown in the label management window 139b, but taps the "cancel" option, the electronic device does not delete the label corresponding to the label 3.

In addition, it should be understood that in some possible cases, after the user taps the "OK" option or the "cancel" option shown in the label management window 139b, in response to the operation behavior, the electronic device may close the label management window 139b.

For example, in some possible cases, for the management window 139a, after the user taps any entry in the management window 139a, a response made by the electronic device may further include closing the management window 139a. For example, when the user taps the label management entry 139a-2 to display the label management window 139b, the management window 139a displayed in the current interface may be automatically cancelled.

For example, in some other possible cases, to help the user tap the "cancel" option in the label management window 139b, and further enable the user to select another entry such as a sound reception setting entry 139a-1 or a sharing entry 139a-3 from the management window 139a again after exiting the label management window 139b, it may be set that when the user taps the label management entry 139a-2 to display the label management window 139b, the management window 139a continues to be displayed in the current interface, but may be covered by the label management window 139b.

It should be understood that the foregoing description is merely an example provided to better understand the technical solution of this embodiment, and is not used as a unique limitation on this embodiment.

### Deletion manner 3:

It can be learned from the foregoing description of the corresponding recording card after recording ends and during playback of recording that, the area 11 of the recording card displays a voice menu control 141e in the following scenarios: after recording ends and during playback of recording.

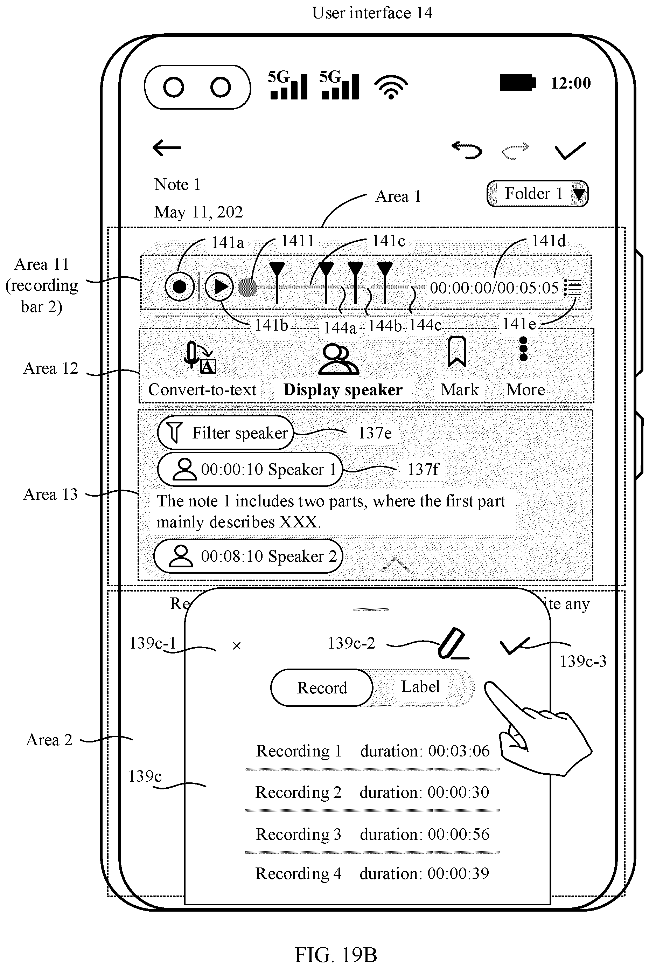

An example in which the corresponding recording card after recording ends is a recording card in a user interface 14 shown in FIG. 19A is used. For example, after the user taps the voice menu control 141e, in response to the operation behavior, the electronic device may display, in the user interface 14, the voice menu window 139c shown in FIG. 19B. The voice menu window 139c may be a slidable panel window. To be specific, a size of the voice menu window 139c displayed in the user interface 14 is fixed, but content displayed in the voice menu window 139c may be slidably displayed.

Referring to FIG. 19B, for example, the voice menu window 139c may include one or more controls. The one or more controls include but are not limited to a close control 139c-1 for closing the voice menu window 139c, an edit control 139c-2 for editing a recorded recording segment, a store control 139 for storing an operation performed in the voice menu window 139c, a recording option for viewing a recording segment included in a long voice, a label option for viewing a label, and the like.

For example, in some possible cases, it may be set that after the voice menu window 139c is displayed, the recording option is selected by default. To be specific, the voice menu window 139c displays, by default, information about all voice segments included in the long voice. For example, when the long voice includes four recording segments, a voice menu window 139c that pops up after the user taps the voice menu control 141e may be shown in FIG. 19B, and display a name of each recording segment included, such as recording 1~recording 4, and recording duration corresponding to each recording segment.

It should be noted that, for the four recording segments mentioned in the foregoing embodiment, the recording 1 may be, for example, voice information between a position of the recording playback progress control 1411 shown in FIG. 19A and a recording segment mark 144a, the recording 2 may be, for example, voice information between the recording segment mark 144a and a recording segment mark 144b, the recording 3 may be, for example, voice information between the recording segment mark 144b and a recording segment mark 144c, and the recording 4 may be, for example, voice information between the recording segment 144c and an end time indicated by a playback time indicator.

It should be understood that the foregoing description is merely an example provided to better understand the technical solution of this embodiment, and is not used as a unique limitation on this embodiment. For related content of segment-wise recording, refer to the following descriptions of FIG. 25A and FIG. 25B. Details are not described herein.

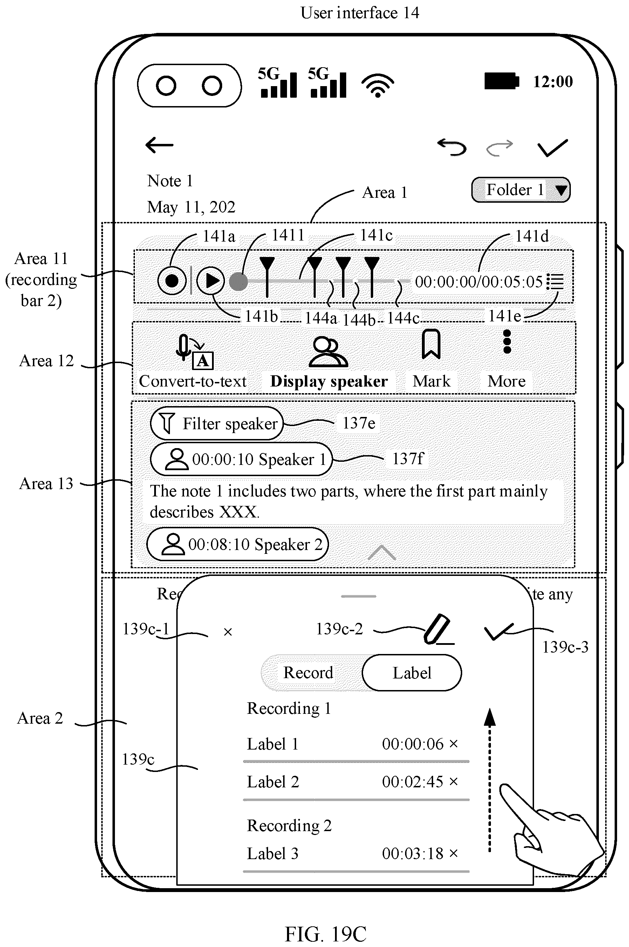

Still referring to FIG. 19B, for example, after the user taps the label option in the voice menu window 139c, in response to the operation behavior, the electronic device switches the voice menu window 139c from the information about the recording segment to the information about the label, as shown in FIG. 19C.

For example, the recording 1 in the long voice includes two labels: a label 1 and a label 2; the recording 2 includes one label: a label 3; the recording 3 includes one label: a label 4; and the recording 4 does not include a label. The user may slide up in a direction of an arrow in the voice menu window 139c shown in FIG. 19C, so as to slidably display blocked information about the label 4.

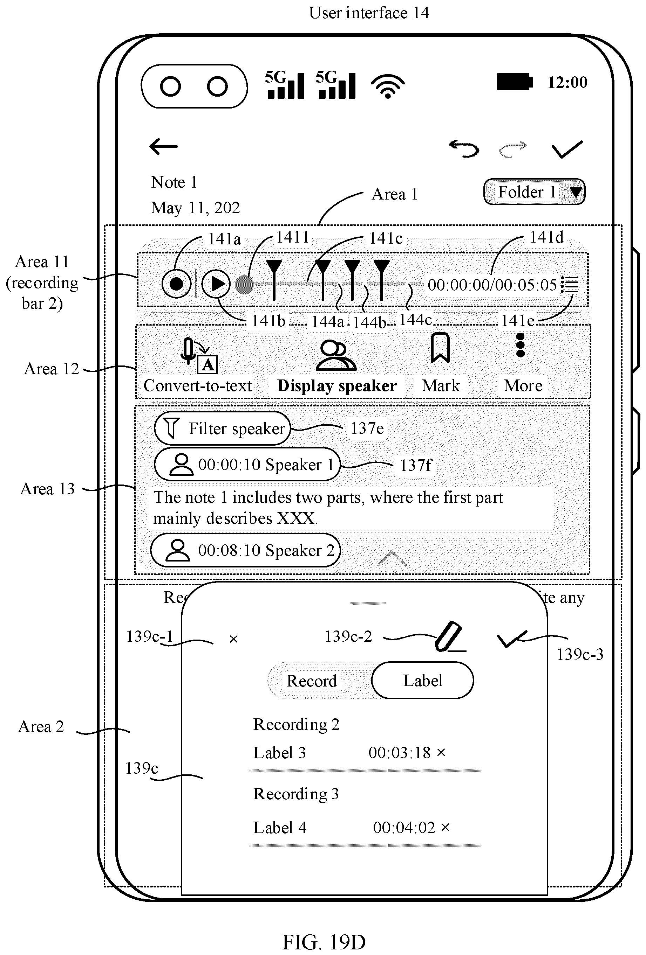

Referring to FIG. 19C and FIG. 19D, for example, the label information corresponding to each label may include a label name, a time point corresponding to the label, and a deletion control "×" for deleting the label.

For example, the user may tap, as required, "×" corresponding to different labels in the voice menu windows 139c shown in FIG. 19C and FIG. 19D, so as to delete the labels.

**In** this way, after the user selects the label option, the included label information is displayed under each recording segment, so that the user learns a relationship between each label and each recording segment.

### Deletion manner 4:

The voice menu window 139c shown in FIG. 19B is still used as an example. For example, when the voice menu window 139c displays the recording segment included in the long voice, after the user taps the edit control 139c-2, in response to the operation behavior, the electronic device may display a user interface 16 shown in FIG. 20.

Referring to FIG. 20, for example, the user interface 16 is evoked by the user by tapping the voice menu control 141 that is displayed in the corresponding user interface 14 after recording ends, as shown in FIG. 19A, so as to evoke the voice menu window 139c, and then tapping the edit control 139c-2 in the voice menu window 139c. Therefore, the user interface 16 includes a control of the recording bar 2 included in the area 11 in the recording card in the corresponding user interface 14, and each control in the recording bar 2 displayed in the user interface 16 corresponds to the control of the recording 2 displayed in the user interface 14.

Still referring to FIG. 20, for example, the user interface 16 further displays all recording segments included in the current long voice, for example, recording 1~recording 5 shown in FIG. 20, a selection control 161a for selecting each recording segment, and a label included in each recording segment.

Still referring to FIG. 20, for example, the label under each recording segment displayed in the user interface 16 includes a name of the label, a time point corresponding to the label, and a selection control 161b for selecting the label.

Still referring to FIG. 20, for example, the user interface 16 may further include a share control for sharing voice information at a position of a recording segment selected by the user by using the selection control 161a and/or voice information at a position of a label selected by the user by using the selection control 161b, a rename control for triggering a rename operation on the recording band and the label, a delete control for deleting the recording segment selected by the user by using the selection control 161a and/or the label selected by the user by using the selection control 161b, and a select all control for indicating to select all selection controls in the user interface 16.

For example, the user may move a cursor to a position at which renaming needs to be performed, for example, a recording name or a label name corresponding to a specific recording segment, and then tap the rename control to modify and rename, by using a system keypad, content in an area in which the cursor is located. Specific implementation is not limited in this application.

In this way, the user may select, in the user interface 16, a selection control 161b corresponding to any one or more labels to be deleted, and then tap the deletion control, so as to delete these selected labels. Alternatively, the user may directly select a selection control 161a corresponding to the recording segment in which the label is located, and then tap the deletion control, so as to delete all labels included in the recording segment.

It can be learned from the foregoing descriptions of the four deletion manners that, in any one of the foregoing deletion manners, an added label may be deleted by using different entries in different scenarios. This can be better applied to various use scenarios.

Based on FIG. 21 and FIG. 22, the following provides example descriptions of related content involved in sharing content in a note in the foregoing function 3.

An example in which the sharing entry is integrated into the management window 139a is still used. Referring to FIG. 21, for example, when the user taps the sharing entry 139a-3 in the management window 139a, in response to the operation behavior, the electronic device may update the sharing entry 139a-3 in a collapsed state (a style shown in (1) in FIG. 21) to be in an expanded state (a style shown in (2) in FIG. 21), and display selectable sharing options under the sharing entry 139a-3 in the management window 139a, for example, a "text" option, a "voice" option, and a "text+voice" option shown in (2) in FIG. 21. A sharing manner corresponding to the "text" option is the foregoing sharing manner 1, a sharing manner corresponding to the "voice" option is the foregoing sharing manner 2, and a sharing manner corresponding to the "text+voice" option is the foregoing sharing manner 3.

For example, when the user selects the sharing manner 1, the electronic device uses text information currently displayed in the area 13 in the recording card as sharing content.

For example, when the user selects the sharing manner 2, the electronic device uses all voice information currently recorded in the area 11 in the recording card or voice information corresponding to text information displayed in the area 13 as sharing content.

For example, when the user selects the sharing manner 3, the electronic device uses text information currently displayed in the area 13 in the recording card and corresponding voice information/all voice information as sharing content.

It should be understood that the foregoing description is merely an example provided to better understand the technical solution of this embodiment, and is not used as a unique limitation on this embodiment.

For ease of description, in this embodiment, for example, when the user selects the sharing manner 1, sharing is performed in a form of the foregoing sharing manner 11 by default. For example, after the user taps the "text" option in the management window 139a shown in FIG. 21, in response to the operation behavior, the electronic device may display a user interface 17 shown in FIG. 22.

Referring to FIG. 22, for example, the user interface 17 may display sharing content in a text form to be shared, and an icon of an application that is available for the user to select and with which sharing is to be performed.

It may be understood that the application that is mentioned herein and that is available for the user to select is specifically an application program currently installed in the electronic device, for example, WeChat, Sina Microblog, and E-mail shown in FIG. 22.

Still referring to FIG. 22, for example, the user interface 17 may further display a "copy text" control for copying currently displayed text information. In this way, the user can copy, by operating the "copy text" control, the to-be-shared text information displayed in the user interface 17, so that the user can paste the copied text information into a specified application for sharing.

In addition, it should be further noted that sharing of related content of the voice information, such as the voice information itself and text information corresponding to the voice information, may be implemented in a full scenario. To be specific, as long as there is shareable text information in the area 13 or shareable voice information is recorded in the area 11, in any scenario, the user may share content in a note in real time as required.

In addition, it should be further understood that, this embodiment is described by using a scenario in which when the display speaker function is enabled, that is, when the state of the display speaker control 137b is the second state (for example, the style in FIG. 4C), the user shares the text information in the area 13. Therefore, the user interface 17 not only displays the text information obtained through conversion based on the voice information, but also displays speaker information such as a speaker name corresponding to each piece of text information. In actual use, if the user triggers a sharing operation when the display speaker function is disabled, that is, when the state of the display speaker control 137b is the first state (for example, the style in FIG. 4B), the user interface 17 displays only the text information obtained through conversion based on the voice information, and does not display speaker information corresponding to each piece of text information.

Based on FIG. 23 and FIG. 24, the following provides example descriptions of related content involved in the sound reception manner in the foregoing function 4.

### Entry 1:

An example in which the sound reception setting entry is integrated into the management window 139a is still used. Referring to FIG. 23, for example, when the user taps the sound reception setting entry 139a-1 in the management window 139a, in response to the operation behavior, the electronic device may update the sound reception setting entry 139a-1 in a collapsed state (a style shown in (1) in FIG. 23) to be in an expanded state (a style shown in (2) in FIG. 23), and display selectable sound reception setting options under the sound reception setting entry 139a-1 in the management window 139a, for example, an "internal sound reception" option, an "external sound reception" option, and an "internal+external sound reception" option shown in (2) in FIG. 23. A sound reception manner corresponding to the "internal sound reception" option is the foregoing sound reception manner 1, a sound reception manner corresponding to the "external sound reception" option is the foregoing sound reception manner 2, and a sound reception manner corresponding to the "internal+external sound reception" option is the foregoing sound reception manner 3.

In this way, the user may tap the "internal sound reception" option, the "external sound reception" option, or the "internal+external sound reception" option as required, so as to implement flexible switching of the sound reception manner.

### Entry 2:

It may be understood that an application installed in the electronic device generally has its own setting interface. Therefore, in some possible cases, the sound reception setting entry may be arranged in a setting interface corresponding to the note application. Referring to FIG. 24, a setting interface corresponding to the note application of Honor Note is shown as an example. In this interface, the user may tap the sound reception manner option to display sound reception manners that are available for the user to select, for example, the foregoing sound reception manner 1, sound reception manner 2, and sound reception manner 3. In FIG. 24, for example, the currently set sound reception manner is external sound reception, that is, the foregoing sound reception manner 2.

It should be understood that the foregoing description is merely an example provided to better understand the technical solution of this embodiment, and is not used as a unique limitation on this embodiment.

In addition, it should be further noted that, the sound reception setting entries for setting a sound reception manner that are provided in the foregoing entry 1 and entry 2 are mutually bound, that is, a sound reception manner that is set by using any entry is synchronized.

In addition, it should be further noted that setting a sound reception manner may be implemented in a full scenario (during recording, after recording ends, and during playback of recording). Therefore, in any one of the foregoing sound reception setting manners, dynamic switching of different sound reception manners may be implemented by using different entries based on service requirements in different scenarios (during recording, after recording ends, and during playback of recording). This can be better applied to various use scenarios.

Based on FIG. 25A and FIG. 25B, the following provides example descriptions of related content involved in segment-wise recording in the foregoing function 5.

As shown in (1) in FIG. 25A, the user interface 13b is a user interface during recording. When recording is performed for duration "00:01:01", if the user taps the stop recording control 136a, the electronic device stops recording voice information in response to the operation behavior. In this case, the style of the recording bar in the area 11 in the recording card is updated from the style (the recording bar 1) shown in (1) in FIG. 25A to the style (the recording bar 2) shown in (2) in FIG. 25A.

Referring to (2) in FIG. 25A, for example, because the user taps the stop recording control 136a, recording of voice information of a current voice segment ends. Duration "00:01:01" of a voice file displayed in the playback time indicator 141d in the recording bar 2 is recording duration of the recording segment when recording is stopped, as shown in (1) in FIG. 25A.

Still referring to (2) in FIG. 25A, for example, after the user taps the start recording control 141a shown in the user interface 14, the electronic device starts recording of a new recording segment in response to the operation behavior. In this case, the user interface 14 is updated to the user interface 13b shown in (1) in FIG. 25B. A recording time of a newly started recording segment continues to be recorded from an end time of the previous recording segment. For example, in (1) in FIG. 25A, when the recording of the first recording segment ends at the time "00:01:01", a recording start time of the second recording segment is "00:01:02".

Referring to (1) in FIG. 25B, for example, when recording of the second recording segment reaches "00:02:21", the user taps the stop recording control 136a. The electronic device stops recording voice information in response to the operation behavior. In this case, the style of the recording bar in the area 11 in the recording card is updated from the style (the recording bar 1) shown in (1) in FIG. 25B to the style (the recording bar 2) shown in (2) in FIG. 25B.

Referring to (2) in FIG. 25B, for example, because the user taps the stop recording control 136a, recording of voice information of a current voice segment ends. Duration "00:02:21" of a voice file displayed in the playback time indicator 141d in the recording bar 2 is recording duration of the recording segment when recording is stopped, as shown in (1) in FIG. 25B.

For example, the user records two recording segments, starting from the user interface shown in (1) in FIG. 25A, and ending with the user interface shown in (2) in FIG. 25B. Therefore, the recording bar 2 shown in (2) in FIG. 25B further includes a node such as a recording segment mark 144a that divides the playback progress bar 141c into two segments. A time that is located after "/" and that is recorded in the playback time indicator 141d is a sum of times of all recording bands, and a time located before "/" is time progress of current playback.

In this way, segment-wise recording is implemented, thereby avoiding loss and damage of voice information caused by abnormality of directly recording a long voice.

Based on FIG. 26, the following provides example descriptions of related content involved in sound-text synchronization in the foregoing function 6.

As shown in (1) in FIG. 26, in the recording card displayed in the user interface 14, the user enables the voice-to-text function and the display speaker function, and the area 13 displays text information obtained through conversion based on voice information, and corresponding speaker information.

For example, after the user taps the start playback control 141b, the electronic device starts to play the recorded voice information in response to the operation behavior. At the same time, the recording bar displayed in the area 11 is updated from the style in (1) in FIG. 26 to the style in (2) in FIG. 26. For example, the start playback control 141b is updated to the pause playback control 141f.

Still referring to (2) in FIG. 26, for example, during playback of recording, the text information that is obtained through conversion based on the voice information and that is displayed in the area 13 in the recording card changes synchronously as the voice information is played. Specifically, in some possible cases, a font of the text information corresponding to the unplayed voice information may be set to be gray in color, for example, a style in (1) in FIG. 26. During playback of voice information, a font of the text information corresponding to the played voice information is updated to be black in color, as shown in (2) in FIG. 26.

It should be understood that the foregoing description is merely an example provided to better understand the technical solution of this embodiment, and is not used as a unique limitation on this embodiment.

In this way, during playback of recording, synchronization between voice information and text information is implemented, thereby helping the user learn current playback progress.

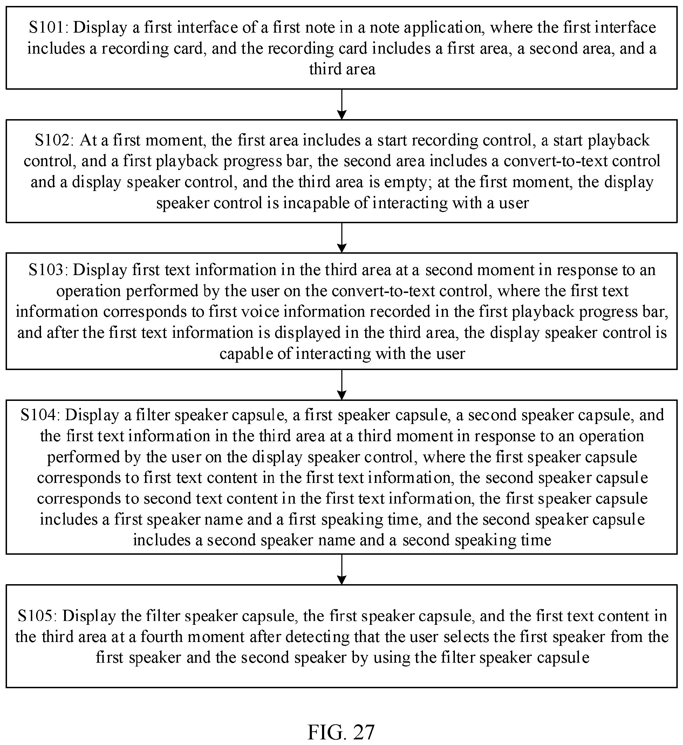

Based on the foregoing functions, FIG. 27 is an example flowchart of a note processing method according to this application.

In some possible cases, for an example process involved when an electronic device records a note, refer to the following descriptions of step S101 to step S105.

S101: Display a first interface of a first note in a note application, where the first interface includes a recording card, and the recording card includes a first area, a second area, and a third area.

S102: At a first moment, the first area includes a start recording control, a start playback control, and a first playback progress bar, the second area includes a convert-to-text control and a display speaker control, and the third area is empty; at the first moment, the display speaker control is incapable of interacting with a user.

S103: Display first text information in the third area at a second moment in response to an operation performed by the user on the convert-to-text control, where the first text information corresponds to first voice information recorded in the first playback progress bar, and after the first text information is displayed in the third area, the display speaker control is capable of interacting with the user.

S104: Display a filter speaker capsule, a first speaker capsule, a second speaker capsule, and the first text information in the third area at a third moment in response to an operation performed by the user on the display speaker control, where the first speaker capsule corresponds to first text content in the first text information, the second speaker capsule corresponds to second text content in the first text information, the first speaker capsule includes a first speaker name and a first speaking time, and the second speaker capsule includes a second speaker name and a second speaking time.

S105: Display the filter speaker capsule, the first speaker capsule, and the first text content in the third area at a fourth moment after detecting that the user selects the first speaker from the first speaker and the second speaker by using the filter speaker capsule.

In some possible cases, the convert-to-text control is, for example, a convert-to-text control 137a involved in the foregoing content, and the display speaker control is, for example, a display speaker control 137b involved in the foregoing content.

The convert-to-text control at the first moment is, for example, of a style of the convert-to-text control 137a shown in (1) in FIG. 3, that is, the foregoing convert-to-text control whose state is the first state. At the second moment, the state of the convert-to-text control that is tapped by the user is, for example, the foregoing second state. For example, the convert-to-text control in the second state is, for example, of a style of the convert-to-text control 137a shown in (2) in FIG. 3.

The display speaker control that is displayed at the first moment and that is incapable of interacting with the user is, for example, the foregoing display speaker control in the third state. For example, the display speaker control in the third state is, for example, of a style of the display speaker control 137b shown in (1) in FIG. 3.

After the first text information is displayed in the third area, the displayed display speaker control capable of interacting with the user is, for example, the foregoing display speaker control whose state is the first state. For example, the display speaker control in the first state is, for example, of a style of the display speaker control 137b shown in (2) in FIG. 3.

At the third moment, in response to an operation performed by the user on the display speaker control in the first state, the state of the display speaker may be switched to the foregoing second state. For example, the display speaker control in the second state is, for example, of a style of the display speaker control 137b shown in (3) in FIG. 3.

For switching and association of states of the convert-to-text control and the display speaker control, refer to the description of FIG. 3 in the following content. Details are not described herein.

In addition, the foregoing first speaker capsule is, for example, a speaker capsule corresponding to the speaker 1 mentioned in the foregoing embodiments. Correspondingly, the first speaker name displayed in the speaker capsule is the name of the speaker 1 mentioned in the foregoing embodiments. The first speaker time is a time during which the speaker says first text content (for example, the foregoing text information 1).

Correspondingly, the second speaker capsule is, for example, a speaker capsule corresponding to the speaker 2 mentioned in the foregoing embodiments. Correspondingly, the second speaker name displayed in the speaker capsule is the name of the speaker 2 mentioned in the foregoing embodiments. The second speaker time is a time during which the speaker says second text content (for example, the foregoing text information 2).

An operation of converting a voice into a text and an operation of displaying a speaker may be implemented in a full scenario (during recording, after recording ends, and during playback of recording). Therefore, the first interface may be interfaces corresponding to different scenarios. For example, during the recording, the first interface may be a user interface 13b mentioned in the following content. For another example, after recording ends, the first interface may be a user interface 14 mentioned in the following content. For another example, during playback of recording, the first interface may be a user interface 15 mentioned in the following content.

In this way, when voice information exists in a note, a display speaker function associated with a voice-to-text function is introduced, so that speaker information corresponding to each piece of text information that is converted can be displayed when a voice-to-text function is enabled, so that a user can quickly learn a speaker of each piece of text information in a scenario in which multiple speakers speak.

For related content of an obvious speaker involved in the note processing solution, refer to the foregoing descriptions of FIG. 4A to FIG. 7D. Details are not described herein again.

In addition, in some other possible cases, in a process of implementing the foregoing voice-to-text function and the foregoing display speaker function, functions of filtering a speaker, editing a speaker, adding a label, deleting a label, sharing note content, setting a sound reception manner, segment-wise recording of voice information, and playback with sound-text synchronization. For implementation of these functions, refer to the foregoing descriptions for various parts of the functions 1 to 6. Details are not described herein again.

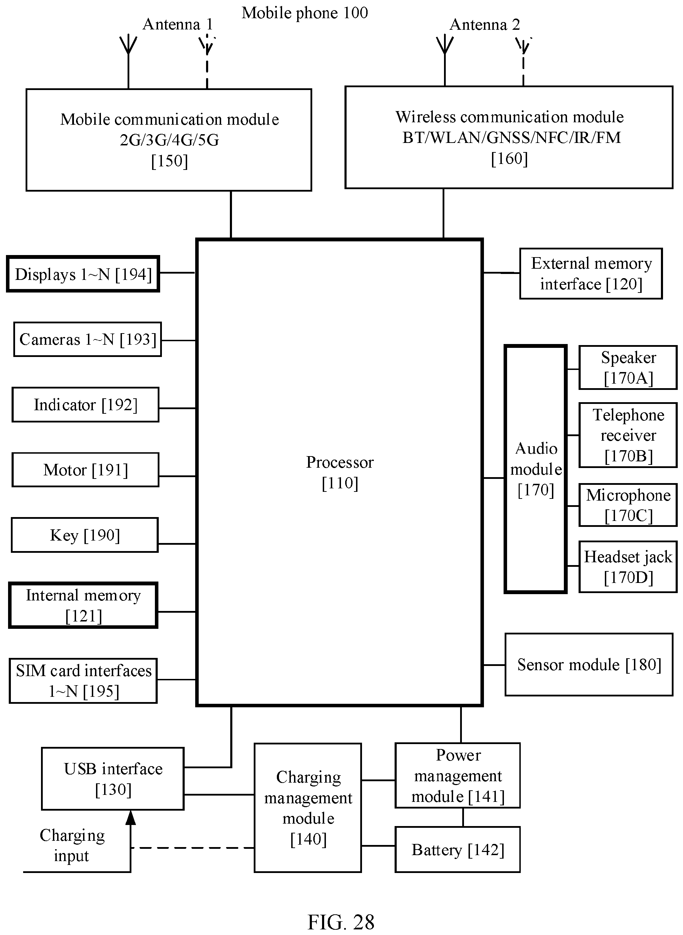

For a better understanding of the technical solutions provided in the embodiments of this application, a hardware structure of an electronic device (such as a mobile phone, a tablet computer, or a touch-controlled PC) to which the embodiments of this application are applicable is described below with reference to the accompanying drawings. For ease of description, a mobile phone is used as an example for description in FIG. 28.

Referring to FIG. 28, the mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a key 190, a motor 191, an indicator 192, a camera 193, a display 194, a subscriber identity module (subscriber identification module, SIM) card interface 195, and the like.

The processor 110 may include one or more processing units. For example, the processor 110 may include an application processor (application processor, AP), a modem processor (Modem), a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU), which are not listed one by one herein. This is not limited in this embodiment.

The foregoing controller used as a processing unit may be a nerve center and a command center of the mobile phone 100. In an actual application, the controller may generate an operation control signal based on instruction operation code and a timing signal, to complete control of instruction fetching and instruction execution.

In addition, it should be further noted that with respect to the processor 110 that includes the foregoing processing units, in some implementations, different processing units may be independent devices. In other words, each processing unit may be considered as one processor. In some other implementations, different processing units may alternatively be integrated into one or more processors. For example, in some implementations, the modem processor may be an independent device. In some other implementations, the modem processor may be independent of the processor 110, and is disposed in a same device as the mobile communication module 150 or another functional module.

It should be understood that the foregoing description is merely an example provided to better understand the technical solution of this embodiment, and is not used as a unique limitation on this embodiment.

In addition, the processor 110 may further include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like, which are not listed one by one herein. This is not limited in this embodiment.

In addition, a memory may be further disposed in the processor 110 to store instructions and data. In some implementations, the memory in the processor 110 is a cache memory. The memory may store instructions or data recently used or cyclically used by the processor 110. If the processor 110 needs to use the instructions or the data again, the processor may directly invoke the instructions or the data from the memory. This avoids repeated access and reduces a waiting time of the processor 110, thereby improving system efficiency.

Still referring to FIG. 28, the external memory interface 120 may be configured to connect to an external memory card such as a Micro SD card, to extend a storage capability of the mobile phone 100. The external memory card communicates with the processor 110 through the external memory interface 120, to implement a data storage function. For example, files such as music and videos are stored in the external memory card.

Still referring to FIG. 28, the internal memory 121 may be configured to store computer-executable program code, and the executable program code includes instructions. The processor 110 runs the instructions stored in the internal memory 121, to perform various function applications and data processing of the mobile phone 100. The internal memory 121 may include a program storage area and a data storage area. The program storage area may store an operating system, an application required by at least one function (for example, a sound playing function, an image playing function, and a stereo sound recording function mentioned in the embodiments of this application), and the like. The data storage area may store data (for example, audio data of a stereo sound recorded based on the technical solution provided in the embodiments of this application) and the like created during use of the mobile phone 100. In addition, the internal memory 121 may include a high-speed random access memory, and may further include a nonvolatile memory, for example, at least one magnetic disk storage device, a flash memory device, or a universal flash storage (universal flash storage, UFS).

Still referring to FIG. 28, the charging management module 140 is configured to receive a charging input from a charger. The charger may be a wireless charger or a wired charger. In some implementations of wired charging, the charging management module 140 may receive a charging input from a wired charger through the USB interface 130. In some implementations of wireless charging, the charging management module 140 may receive a wireless charging input through a wireless charging coil of the mobile phone 100. When charging the battery 142, the charging management module 140 may further supply power to the electronic device through the power management module 141.

Still referring to FIG. 28, the power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a quantity of battery cycles, and a battery health status (leakage or impedance). In some other implementations, the power management module 141 may alternatively be disposed in the processor 110. In some other implementations, the power management module 141 and the charging management module 140 may alternatively be disposed in a same device.

Still referring to FIG. 28, a wireless communication function of the mobile phone 100 may be implemented through the antenna 1, the antenna 2, the mobile communication module 150, the wireless communication module 160, the modem processor, the baseband processor, and the like.

It should be noted that, the antenna 1 and the antenna 2 are configured to transmit and receive electromagnetic wave signals. Each antenna in the mobile phone 100 may be configured to cover one or more communication frequency bands. Different antennas may be further multiplexed to improve antenna utilization. For example, the antenna 1 may be multiplexed as a diversity antenna of a wireless local area network. In some other implementations, the antenna may be used in combination with a tuning switch.

Still referring to FIG. 28, the mobile communication module 150 may provide a solution for wireless communication that is applied to the mobile phone 100 and that includes 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert, through the antenna 1, an amplified signal into an electromagnetic wave for radiation. In some implementations, at least some functional modules of the mobile communication module 150 may be disposed in the processor 110. In some implementations, at least some functional modules of the mobile communication module 150 may be disposed in a same device as at least some modules of the processor 110.

Still referring to FIG. 28, the wireless communication module 160 may provide a solution for wireless communication that is applied to the mobile phone 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, through the antenna 2, the to-be-sent signal into an electromagnetic wave for radiation.

Still referring to FIG. 28, the audio module 170 may include a speaker 170A, a telephone receiver 170B, a microphone 170C, and a headset jack 170D. For example, the mobile phone 100 may implement an audio function such as a sound recording or video recording function by using the application processor, and the speaker 170A, the telephone receiver 170B, the microphone 170C, the headset jack 170D, and the like in the audio module 170.

In the process of implementing the audio function by using the application processor and the audio module 170, the audio module 170 may be configured to convert digital audio information into an analog audio signal for output, and may be further configured to convert an analog audio input into a digital audio signal. The audio module 170 may be further configured to encode and decode an audio signal. In some implementations, the audio module 170 may be disposed in the processor 110, or some functional modules of the audio module 170 are disposed in the processor 110.

Still referring to FIG. 28, the sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like, which are not listed one by one herein. This is not limited in this application.

Still referring to FIG. 28, the key 190 includes a power-on/off key, a volume key, and the like. The key 190 may be a mechanical key, or may be a touch key. The mobile phone 100 may receive a key input, and generate a key signal input related to user settings and function control of the mobile phone 100.

Still referring to FIG. 28, the motor 191 may generate a vibration prompt. The motor 191 may be configured to provide a vibration prompt for an incoming call, and may be further configured to provide vibration feedback for a touch.

Still referring to FIG. 28, the indicator 192 may be an indicator light, may be configured to indicate a charging status or a battery change, and may be further configured to indicate a message, a missed incoming call, a notification, and the like.

Still referring to FIG. 28, the camera 193 is configured to capture a still image or a video. The mobile phone 100 may implement a shooting function by using the ISP, the camera 193, the video codec, the GPU, the display 194, the application processor, and the like. Specifically, an optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some implementations, the mobile phone 100 may include one or N cameras 193, where N is a positive integer greater than 1.

Still referring to FIG. 28, the display 194 is configured to display an image, a video, and the like. The display 194 includes a display panel. In some implementations, the mobile phone 100 may include one or N displays 194, where N is a positive integer greater than 1. The mobile phone 100 may implement a display function by using the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs, which execute program instructions to generate or change displayed information.

The hardware structure of the mobile phone 100 is not further described. It should be understood that the mobile phone 100 shown in FIG. 28 is merely an example. During specific implementation, the mobile phone 100 may have more or fewer components than those shown in the figure, may combine two or more components, or may have a different component configuration. The components shown in FIG. 28 may be implemented by hardware that includes one or more signal processing and/or application-specific integrated circuits, software, or a combination of hardware and software.

To better understand a software structure of the electronic device 100 shown in FIG. 28, the following describes the software structure of the electronic device 100. Before the software structure of the electronic device 100 is described, an architecture that may be used in a software system of the electronic device 100 is first described.

Specifically, in an actual application, the software system of the electronic device 100 may use a layered architecture, an event-driven architecture, a microkernel architecture, a microservice architecture, or a cloud architecture.

In addition, it may be understood that a software system currently used by a mainstream electronic device includes but is not limited to a Windows system, an Android system, and an iOS system. For ease of description, an Android system with a layered architecture is used as an example in the embodiments of this application to describe the software structure of the electronic device 100.

In addition, subsequently, the note processing solutions provided in the embodiments of this application are also applicable to another system during specific implementation.

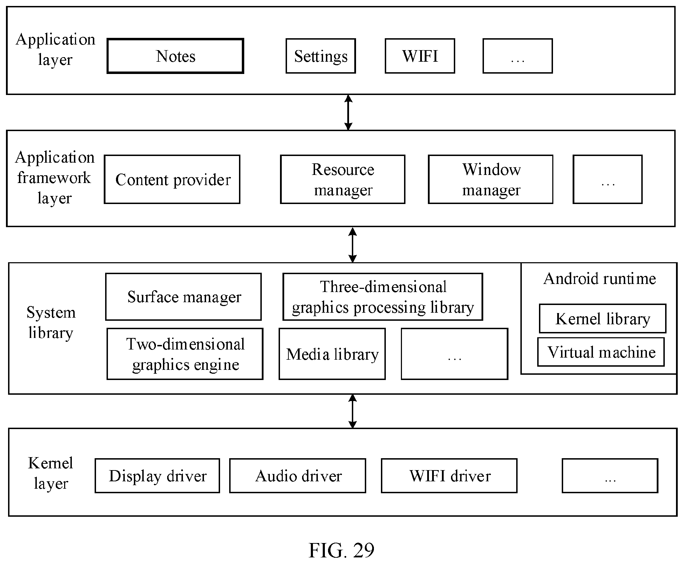

FIG. 29 is a block diagram of a software structure of the electronic device 100 according to an embodiment of this application.

As shown in FIG. 29, in the layered architecture of the electronic device 100, software is divided into several layers, and each layer has a clear role and task. The layers communicate with each other through software interfaces. In some implementations, an Android system is divided into four layers: an application layer, an application framework layer, an Android runtime (Android runtime) and system library, and a kernel layer from top to bottom.

The application layer may include a series of application packages. As shown in FIG. 29, the application package may include applications such as a note, settings, and WIFI, which are not listed one by one herein. This is not limited in this application. Specifically, in this embodiment of this application, the note processing method is implemented after the user starts the note application.

The application framework layer provides an application programming interface (application programming interface, API) and a programming framework for the applications at the application layer. In some implementations, these programming interfaces and programming frameworks may be described as functions. As shown in FIG. 29, the application framework layer may include functions such as a content provider, a resource manager, a window manager, and the like, which are not listed one by one herein. This is not limited in this application.

The content provider is configured to store and obtain data, and enable the data to be accessible to an application. The data may include a video, an image, audio, calls that are made and answered, a browsing history and bookmarks, a phone book, and the like, which are not listed one by one herein. This is not limited in this application.

The resource manager provides various resources such as a localized character string, an icon, a picture, a layout file, and a video file for an application, which are not listed one by one herein. This is not limited in this application.

The notification manager enables the application to display notification information in the status bar, and may be configured to convey a notification-type message. The displayed notification information may automatically disappear after a short pause without a need to perform user interaction.

The Android Runtime includes a kernel library and a virtual machine. The Android Runtime is responsible for scheduling and management of the Android system.

The kernel library includes two parts: One part is a functional function that needs to be invoked by a java language, and the other part is a kernel library of Android.

The application layer and the application framework layer run on the virtual machine. The virtual machine executes java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional (3D) graphics processing library (for example, OpenGL ES), and a two-dimensional (2D) graphics engine (for example, SGL).

The surface manager is configured to manage a display subsystem, and provide 2D and 3D layer fusion for a plurality of applications.

The media library supports playback and recording in a plurality of common audio and video formats, a still image file, and the like. The media library may support a plurality of audio and video coding formats, for example, MPEG4, H.264, MP3, AAC, AMR, JPG, and PNG.

The three-dimensional graphics processing library is configured to implement three-dimensional graphics drawing, image rendering and composition, layer processing, and the like.

It may be understood that, the foregoing 2D graphics engine is a drawing engine for 2D drawing.

In addition, it may be understood that, the kernel layer in the Android system is a layer between hardware and software. The kernel layer includes at least a display driver, an audio driver, a sensor driver, and the like. For example, the audio driver may drive the audio module to implement recording, playback, and the like of voice information.

The software structure of the electronic device 100 is not further described. It may be understood that the layers in the software structure shown in FIG. 29 and the components included in the layers do not constitute a specific limitation on the electronic device 100. In some other embodiments of this application, the electronic device 100 may include more or fewer layers than those shown in the figure, and each layer may include more or fewer components. This is not limited in this application.

In addition, it may be understood that to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a specific function is performed by hardware or hardware driven by computer software depends on a particular application and a design constraint of the technical solutions. A person skilled in the art may use different methods to implement the described functions with reference to embodiments for each particular application, but it should not be considered that the implementation goes beyond the scope of this application.

In addition, it should be noted that, in an actual application scenario, the note processing method that is provided in the foregoing embodiments and that is implemented by an electronic device may alternatively be performed by a chip system included in the electronic device. The chip system may include a processor. The chip system may be coupled to a memory, so that when the chip system runs, a computer program stored in the memory is invoked to implement the foregoing steps performed by the electronic device. The processor in the chip system may be an application processor or may be a processor that is not an application processor.

In addition, an embodiment of this application further provides a computer-readable storage medium. The computer storage medium stores computer instructions. When the computer instructions are run on an electronic device, the electronic device is enabled to perform the foregoing related method steps, to implement the note processing method in the foregoing embodiments.

In addition, an embodiment of this application further provides a computer program product. When the computer program product runs on an electronic device, the electronic device is enabled to perform the foregoing related steps, to implement the note processing method in the foregoing embodiments.

In addition, an embodiment of this application further provides a chip (which may alternatively be a component or a module). The chip may include one or more processing circuits and one or more transceiver pins. The transceiver pin and the processing circuit communicate with each other by using an internal connection path. The processing circuit performs the foregoing related method steps to implement the note processing method in the foregoing embodiments, to control a receive pin to receive a signal and control a transmit pin to send a signal.

In addition, it can be learned from the foregoing description that, all of the electronic device, the computer-readable storage medium, the computer program product, or the chip provided in the embodiments of this application are configured to perform the corresponding method provided above. Therefore, for beneficial effects that can be achieved by the electronic device, the computer-readable storage medium, the computer program product, or the chip, refer to the beneficial effects of the corresponding method provided above. Details are not described herein again.

The foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in the embodiments of this application.

## Claims

1. A note processing method, applied to an electronic device and comprising:
displaying a first interface of a first note in a note application, wherein the first interface comprises a recording card, and the recording card comprises a first area, a second area, and a third area;
at a first moment, the first area comprises a start recording control, a start playback control, and a first playback progress bar, the second area comprises a convert-to-text control and a display speaker control, and the third area is empty; at the first moment, the display speaker control is incapable of interacting with a user;
displaying first text information in the third area at a second moment in response to an operation performed by the user on the convert-to-text control, wherein the first text information corresponds to first voice information recorded in the first playback progress bar, and after the first text information is displayed in the third area, the display speaker control is capable of interacting with the user;
displaying a filter speaker capsule, a first speaker capsule, a second speaker capsule, and the first text information in the third area at a third moment in response to an operation performed by the user on the display speaker control, wherein the first speaker capsule corresponds to first text content in the first text information, the second speaker capsule corresponds to second text content in the first text information, the first speaker capsule comprises a first speaker name and a first speaking time, and the second speaker capsule comprises a second speaker name and a second speaking time; and
displaying the filter speaker capsule, the first speaker capsule, and the first text content in the third area at a fourth moment after detecting that the user selects the first speaker from the first speaker and the second speaker by using the filter speaker capsule, wherein
the fourth moment is later than the third moment, the third moment is later than the second moment, the second moment is later than the first moment, and the second speaker time is later than the first speaker time.

2. The method according to claim 1, wherein the displaying the filter speaker capsule, the first speaker capsule, and the first text content in the third area at a fourth moment after detecting that the user selects the first speaker from the first speaker and the second speaker by using the filter speaker capsule comprises:
displaying a filter speaker window in the first interface at the fourth moment in response to an operation performed by the user on the filter speaker capsule, wherein the filter speaker window comprises the first speaker and the second speaker; and
closing the filter speaker window in response to a selection operation performed by the user on the first speaker in the filter speaker window, and displaying the filter speaker capsule, the first speaker capsule, and the first text content in the third area.

3. The method according to claim 1, wherein before the fourth moment, the filter speaker capsule displayed in the third area is of a first style, and the filter speaker capsule of the first style is configured to indicate that all selectable speakers are selected; and
after the fourth moment, the filter speaker capsule displayed in the third area is of a second style, and the filter speaker capsule of the second style is configured to indicate that some of the selectable speakers are selected.

4. The method according to claim 1, wherein the displaying a filter speaker capsule, a first speaker capsule, a second speaker capsule, and the first text information in the third area comprises:
displaying the filter speaker capsule at a top of the third area;
displaying the first speaker capsule at a position below the display speaker capsule;
displaying the first text content at a position below the first speaker capsule;
displaying the second speaker capsule at a position below the first text content; and
displaying the second text content at a position below the second speaker capsule.

5. The method according to claim 4, wherein the method further comprises:
displaying the filter speaker capsule at the top of the third area in response to an operation of the user for sliding from a bottom of the third area to the top of the third area at a fifth moment, displaying the first text content at the position below the display speaker capsule, displaying the second speaker capsule at the position below the first text content, and displaying the second text content at the position below the second speaker capsule; and
displaying the filter speaker capsule at the top of the third area in response to an operation of the user for sliding from the bottom of the third area to the top of the third area at a sixth moment, displaying the second speaker capsule at the position below the display speaker capsule, and displaying the second text content at the position below the second speaker capsule, wherein
the sixth moment is later than the fifth moment.

6. The method according to claim 1, wherein at the first moment, the convert-to-text control displayed in the second area is in a first state, the display speaker control is in a third state, the first state indicates that a function corresponding to the control is not enabled, the third state indicates that the control is incapable of interacting with the user, the convert-to-text control in the first state indicates that a voice-to-text function is not enabled, and the display speaker control in the third state indicates that the display speaker control is incapable of interacting with the user;
at the second moment, in response to the operation performed by the user on the convert-to-text control, the electronic device updates a state of the convert-to-text control from the first state to a second state, and updates a state of the display speaker control from the third state to the first state, wherein the second state indicates that the function corresponding to the control is enabled, the convert-to-text control in the second state indicates that the voice-to-text function is enabled, and the display speaker control in the first state indicates that a display speaker function is not enabled; and when the voice-to-text function is enabled, the electronic device is capable of performing a convert-to-text operation on the first voice information; and
at the third moment, in response to the operation performed by the user on the display speaker control, the electronic device updates a state of the display speaker control from the first state to the second state, wherein the display speaker control in the second state indicates that a display speaker function is enabled.

7. The method according to claim 6, wherein when the convert-to-text control is in the second state and the display speaker control is in the second state, the method further comprises:
at a seventh moment, in response to an operation performed by the user on the convert-to-text control in the second state, updating the state of the convert-to-text control from the second state to the first state; and still displaying the filter speaker capsule, the first speaker, the first text content, the second speaker, and the second text content in the third area; and
at an eighth moment, in response to an operation performed by the user on the start recording control, replacing the start recording control and the start playback control with a stop recording control, recording second voice information, and replacing the first playback progress bar with a recording status bar corresponding to the second voice information; and still displaying the filter speaker capsule, the first speaker, the first text content, the second speaker, and the second text content in the third area, wherein
the eighth moment is later than the seventh moment.

8. The method according to claim 7, wherein after the still displaying the filter speaker capsule, the first speaker, the first text content, the second speaker, and the second text content in the third area, the method further comprises:
at a ninth moment, in response to an operation on the stop recording control, replacing the stop recording control with the start recording control, the start playback control, and a second playback progress bar, wherein the second area comprises the convert-to-text control in the first state and the display speaker control in the second state, and the third area displays the filter speaker capsule, the first speaker, the first text content, the second speaker, and the second text content;
at a tenth moment, in response to an operation performed by the user on the start playback control, replacing the start playback control with a pause playback control, and playing the second voice information recorded in the second playback progress bar; and still displaying the filter speaker capsule, the first speaker, the first text content, the second speaker, and the second text content in the third area; and
at an eleventh moment, in response to an operation performed by the user on the convert-to-text control in the first state, updating the state of the convert-to-text control from the first state to the second state, and displaying the filter speaker capsule, the first speaker capsule, the first text content, the second speaker, the second text content, a third speaker capsule, and second text information in the third area, wherein the second text information corresponds to the second voice information recorded in the recording status bar, the third speaker capsule corresponds to the second text information, and the third speaker capsule comprises a third speaker name and a third speaking time; and
the eleventh moment is later than the tenth moment, the tenth moment is later than the ninth moment, and the ninth moment is later than the eighth moment.

9. The method according to claim 6, wherein when the convert-to-text control is in the second state and the display speaker control is in the second state, the method further comprises:
at a ninth moment, in response to an operation performed by the user on the start recording control, replacing the start recording control and the start playback control with a stop recording control, recording second voice information, and replacing the first playback progress bar with a recording status bar corresponding to the second voice information; and displaying the filter speaker capsule, the first speaker capsule, the first text content, the second speaker, the second text content, a third speaker capsule, and second text information in the third area, wherein the second text information corresponds to the second voice information recorded in the recording status bar, the third speaker capsule corresponds to the second text information, and the third speaker capsule comprises a third speaker name and a third speaking time.

10. The method according to claim 6, wherein after displaying the filter speaker capsule, the first speaker capsule, and the first text information in the third area, the method further comprises:
updating the state of the display speaker control from the second state to the first state in response to an operation performed by the user on the display speaker control in the second state; and displaying the first text content and not displaying the filter speaker capsule or the first speaker capsule in the third area.

11. The method according to any one of claims 1 to 10, wherein after displaying any speaker capsule in the third area, the method further comprises:
in a process of displaying the stop recording control in the first area, not responding to an operation performed by the user on any speaker capsule displayed in the third area;
in a process of displaying the start recording control and the start playback control in the first area, in response to an operation performed by the user on any speaker capsule in the third area, displaying a renaming window corresponding to the operated speaker capsule in the first interface; and
in a process of displaying the start recording control and the pause playback control in the first area, in response to an operation performed by the user on any speaker capsule in the third area, moving a recording playback progress control in the first playback progress bar to a target position, wherein a time corresponding to the target position is a speaking time displayed in the operated speaker capsule.

12. The method according to claim 11, wherein after the displaying a renaming window corresponding to the operated speaker capsule in the first interface, the method further comprises:
in response to a rename operation performed by the user in the renaming window, closing the renaming window, and updating a speaker name displayed in the speaker capsule to a name named based on the renaming window.

13. The method according to any one of claims 1 to 10, wherein the second area further comprises a mark control, and the mark control is configured to add a label to recorded voice information.

14. The method according to claim 13, wherein the method further comprises:
in a process of displaying the stop recording control in the first area, in response to an operation performed by the user on the mark control, adding a label to a recording status bar corresponding to the recorded voice information, and displaying the added label at a corresponding time position in the recording status bar displayed in the first area.

15. The method according to claim 13, wherein the method further comprises:
in a process of displaying the start recording control and the start playback control in the first area, in response to a drag operation performed by the user on a recording playback progress control in the first playback progress bar, moving the recording playback progress control to a first position corresponding to a first playback time point;
in response to an operation performed by the user on the mark control, adding a first label to the first position;
in response to the drag operation performed by the user on the recording playback progress control, moving the recording playback progress control to a second position corresponding to a second playback time point, wherein a time difference between the first playback time point and the second playback time point is not less than a specified time threshold; and
in response to the operation performed by the user on the mark control, adding a second label to the second position.

16. The method according to claim 13, wherein the method further comprises:
in a process of displaying the start recording control and the pause playback control in the first area, in response to an operation performed by the user on the mark control, adding a label to a playback time currently corresponding to the first playback progress bar.

17. The method according to claim 16, wherein the method further comprises:
in a process of displaying the start recording control and the pause playback control in the first area, in response to a drag operation performed by the user on a recording playback progress control in the first playback progress bar, moving the recording playback progress control to a third position corresponding to a third playback time point;
in response to the operation performed by the user on the mark control, adding a third label to the third position; and
continuing to play the voice information from the third position.

18. The method according to any one of claims 1 to 10, wherein in a process of displaying the start recording control and the start playback control in the first area, or in a process of displaying the start recording control and the pause playback control in the first area, the first area further displays a voice menu control; and
the method further comprises:
in response to an operation performed by the user on the voice menu control, displaying a voice menu window in the first interface, wherein the voice menu window comprises a recording option and a label option;
in response to an operation performed by the user on the label option, displaying, in the voice menu window, all recording bands comprised in the first note, and displaying, under each recording segment, all labels comprised in the recording segment; and
in response to a deletion operation performed by the user on any label displayed in the voice menu window, deleting the label.

19. The method according to any one of claims 1 to 10, wherein the second area further comprises a mark control, and the mark control is configured to add a label to recorded voice information; in a process of displaying the start recording control and the start playback control in the first area, or in a process of displaying the start recording control and the pause playback control in the first area, the first area further displays a voice menu control; and
the method further comprises:
in response to an operation performed by the user on the voice menu control, displaying a voice menu window in the first interface, wherein the voice menu window comprises a recording option and a label option;
in response to an operation performed by the user on the recording option, displaying, in the voice menu window, all recording bands comprised in the first note, and an edit control;
in response to an operation performed by the user on the edit control, displaying a second interface corresponding to the first note, wherein the second interface displays all recording bands comprised in the first note, and displays, under each recording segment, all labels comprised in the recording segment; and
in response to a deletion operation performed by the user on any label displayed in the second interface, deleting the label.

20. The method according to claim 19, wherein the method further comprises:
in response to a deletion operation performed by the user on any recording segment displayed in the second interface, deleting the recording segment and all labels comprised in the recording segment.

21. The method according to any one of claims 1 to 10, wherein the second area further comprises a first control; and
the method further comprises:
in response to an operation on the first control, displaying a management window in the first interface, wherein the management window displays a sharing entry;
when the third area comprises the filter speaker capsule, the first speaker capsule, the second speaker capsule, and the first text information, sharing, with a first application in a text manner, a name of the first note, the first speaker name displayed in the first speaker capsule, the second speaker name displayed in the second speaker capsule, and the sent first text information after an operation performed by the user on the sharing entry is detected; and
when the third area comprises the filter speaker capsule, the first speaker capsule, and the first text content, sharing, with the first application in a text manner, the name of the first note, the first speaker name displayed in the first speaker capsule, and the first text content after the operation performed by the user on the sharing entry is detected.

22. The method according to claim 21, wherein the sharing, with a first application in a text manner, a name of the first note, the first speaker name displayed in the first speaker capsule, the second speaker name displayed in the second speaker capsule, and the sent first text information after an operation performed by the user on the sharing entry is detected comprises:
displaying a sharing manner in the management window after the operation performed by the user on the sharing entry is detected, wherein the sharing manner comprises a first sharing manner, a second sharing manner, and a third sharing manner;
when a selection operation performed by the user on the first sharing manner is detected, displaying the third interface; and displaying, in the third interface, the name of the first note, the first speaker name displayed in the first speaker capsule, the second speaker name displayed in the second speaker capsule, the sent first text information, and the first application; and
in response to an operation performed by the user on the first application, sharing, with the first application in a text manner, the name of the first note, the first speaker name displayed in the first speaker capsule, and the first text content.

23. The method according to claim 22, wherein the method further comprises:
when a selection operation performed by the user on the second sharing manner is detected, displaying the third interface; and displaying, in the third interface, the first voice information corresponding to the first text information, and the first application; and
in response to the operation performed by the user on the first application, sharing the first voice information with the first application in a voice manner.

24. The method according to claim 22, wherein the method further comprises:
when a selection operation performed by the user on the third sharing manner is detected, displaying the third interface; and displaying, in the third interface, the name of the first note, the first speaker name displayed in the first speaker capsule, the second speaker name displayed in the second speaker capsule, the sent first text information, the first voice information corresponding to the first text information, and the first application; and
in response to the operation performed by the user on the first application, sharing, with the first application in a text manner, the name of the first note, the first speaker name displayed in the first speaker capsule, and the first text content; and sharing the first voice information with the first application in a voice manner.

25. An electronic device, wherein the electronic device comprises a memory and a processor, the memory is coupled to the processor, the memory stores program instructions, and when the program instructions are executed by the processor, the electronic device is enabled to perform the note processing method according to any one of claims 1 to 24.

26. A computer-readable storage medium, comprising a computer program, wherein when the computer program is run on an electronic device, the electronic device is enabled to perform the note processing method according to any one of claims 1 to 24.
